# EUROPÄISCHE PATENTSCHRIFT

(11) **EP 4 074 030 B1**
(45) Veröffentlichungstag und Bekanntmachung des Hinweises auf die Patenterteilung: **10.09.2025**
(21) Anmeldenummer: 20829808.3
(22) Anmeldetag: 10.12.2020
(51) Int. Cl.: H04N 17/00

(54) **VORRICHTUNG, VERFAHREN UND VERWENDUNG DER VORRICHTUNG ZUR JUSTAGE, MONTAGE UND/ODER PRÜFUNG EINES ELEKTROOPTISCHEN SYSTEMS**
DEVICE, METHOD, AND USE OF THE DEVICE FOR ADJUSTING, ASSEMBLING AND/OR TESTING AN ELECTRO-OPTICAL SYSTEM
DISPOSITIF, PROCÉDÉ ET UTILISATION DU DISPOSITIF POUR L'AJUSTEMENT, LE MONTAGE ET/OU LE CONTRÔLE D'UN SYSTÈME ÉLECTRO-OPTIQUE

(30) Priorität: 10.12.2019 DE 102019133738
(43) Veröffentlichungstag der Anmeldung: 19.10.2022
(73) Patentinhaber: Aixemtec GmbH, 52134 Herzogenrath (DE); MicroVision, Inc., Redmond WA 98052 (US)
(72) Erfinder: HAAG, Sebastian, 52134 Herzogenrath (DE); HOFFMANN, Florian, 20359 Hamburg (DE); ROSENKRANZ, Jörn, 23858 Reinfeld (DE)
(74) Vertreter: Qip Patent & Recht Dr. Kuehn & Partner mbB
(86) Internationale Anmeldenummer: PCT/EP2020/085529
(87) Internationale Veröffentlichungsnummer: WO 2021/116285

(56) Entgegenhaltungen:
- EP-A2- 2 081 391
- WO-A1-2019/159427
- US-A1- 2017 132 774

## Beschreibung

Die Erfindung betrifft eine Vorrichtung, ein Verfahren und eine Verwendung der Vorrichtung zur Herstellung photoaktiver Systeme. Insbesondere ist das photoaktive System zur Herstellung mit der Vorrichtung und dem Verfahren deaktiviert (deaktiviertes photoaktives System). Die Erfindung betrifft insbesondere eine Vorrichtung, ein Verfahren und eine Verwendung der Vorrichtung zur Herstellung eines deaktivierten photoaktiven Systems einer Kamera.

Photoaktive Systeme werden beispielsweise als Kameramodule für Mobiltelefone, in Fahrassistenzsystemen, als Kameras der Konsumerelektronik oder in der Medizintechnik eingesetzt. Photoaktive Systeme sind ferner auch Sensoren von LiDAR-Systemen. Als photoaktives System wird in dieser Anmeldung insbesondere ein funktionales optisches System, welches einen oder mehrere elektrooptische Wandler umfasst, verstanden. Steigende Anforderungen an eine zu erzielende Bildqualität mit den photoaktiven Systemen einerseits und eine zunehmende Miniaturisierung der photoaktiven Systeme andererseits erhöhen zunehmend die Anforderungen an die Herstellung photoaktiver Systeme hinsichtlich Qualität, Zeit und Kosten.

Im internationalen Recherchenbericht werden folgende Dokumente zitiert: WO 2019/159427 A1, US 2017/132774 A1 und EP 2 081 391 A2.

Das Dokument WO 2019/159427 stellt eine Vorrichtung und ein Verfahrens zur Einstellung eines Kameramoduls bereit, wobei beim Einstellen des Abstands zwischen einer Kameramodul-Linse und einem Bildaufnahmeelement des Kameramoduls das Bildaufnahmeelement nicht angesteuert und ein Bild einer Testtafel nicht mit dem Bildaufnahmeelement des Kameramoduls aufgenommen wird. Somit wird die Notwendigkeit, den Bildsensor anzusteuern und die Testtafel abzubilden, vermieden, wenn der Abstand zwischen der Linse des Kameramoduls und dem Bildsensor angepasst wird.

Es sind Vorrichtungen und Verfahren zur Herstellung eines photoaktiven Systems bekannt, die zur Herstellung des photoaktiven Systems das photoaktive System zwangsläufig aktivieren müssen. Das Aktivieren erfordert das Anschließen des photoaktiven Systems an einen oder mehrere elektronische Kontakte zur Versorgung des photoaktiven Systems mit einer elektrischen Energie und zum Auslesen eines oder mehrerer elektrischer Signale als Daten (aktiviertes photoaktives System). In solchen bekannten Vorrichtungen und Verfahren bildet das herzustellende photoaktive System selbst ein Messmittel, welches selbst die für dessen Herstellung notwendigen Daten liefert. Insbesondere werden die Daten zur Ausrichtung einer Optikanordnung des herzustellenden photoaktiven Systems, beispielsweise eine oder mehrere optische Linsen, gegenüber einer photoaktiven Anordnung des herzustellenden photoaktiven Systems, beispielsweise ein auf einem Träger montierter Kamerachip, verwendet. Zur Ausrichtung ist es bekannt, beispielsweise die Optikanordnung in einer Haltevorrichtung bewegbar anzuordnen und mit einer Stellvorrichtung in Abhängigkeit der erfassten Daten von der photoaktiven Anordnung anzusteuern, um eine gewünschte Abbildungsgüte einer Teststruktur mit dem herzustellenden photoaktiven System zu erhalten.

Solche bekannten Vorrichtungen und Verfahren zur Herstellung eines photoaktiven Systems, die das photoaktive System aktiviert als Messmittel zur dessen Herstellung, d.h. als aktiviertes photoaktives System, nutzen, können aufgrund der notwendigen Hardware für die elektrische Energieversorgung und Datenübertragung vergleichsweise teuer sein. Insbesondere ist das zur Herstellung des photoaktiven Systems notwendige Anschließen der photoaktiven Anordnung an den einen oder die mehreren elektrischen Kontakte der bekannten Vorrichtungen und Verfahren vergleichsweise zeitintensiver. Ferner dauert das Erfassen der Abbildungsgüte der Teststruktur mit der üblicherweise für die Herstellung des photoaktiven Systems zu verwendenden photoaktiven Anordnung und deren üblicherweise geringen Bildfrequenz vergleichsweise lange. Insoweit ist bei Vorrichtungen und Verfahren, die das herzustellende photoaktive System als Messmittel nutzen, mit einer vergleichsweise langen Herstellungszeit für ein photoaktives System zu rechnen. Ferner lässt sich mit einem herzustellenden photoaktiven System, insbesondere einem herzustellenden photoaktiven System für ein mobiles Endgerät, eine vergleichsweise geringere Bildqualität erzielen. In der Folge ist die Genauigkeit der Ausrichtung der Optikanordnung gegenüber der photoaktiven Anordnung und somit die Qualität der mit den bekannten Vorrichtungen und Verfahren herzustellenden optischen Systeme beschränkt. Dies beruht auf der Erkenntnis der Erfinder, dass ein für die Herstellung zu aktivierendes photoaktives System lediglich eine geringe Akquisitionsrate eines oder mehrerer Messsignale aufweist und insoweit auch eine Stellrate von zu generierenden Stellbefehlen zum Bewegen der Haltevorrichtung begrenzt ist.

Es ist daher eine Aufgabe der vorliegenden Erfindung, eine Vorrichtung, ein Verfahren und eine Verwendung der Vorrichtung zur Herstellung eines photoaktiven Systems bereitzustellen, die einen oder mehrere der genannten Nachteile verringert oder beseitigt und/oder gegenüber existierenden Lösungen verbessert. Insbesondere ist eine Aufgabe der vorliegenden Erfindung, eine Vorrichtung, ein Verfahren und eine Verwendung der Vorrichtung zur Herstellung eines photoaktiven Systems bereitzustellen, welche eine kostengünstigere Herstellung eines photoaktiven Systems ermöglicht. Ferner ist insbesondere eine Aufgabe der vorliegenden Erfindung, eine Vorrichtung, ein Verfahren und eine Verwendung der Vorrichtung zur Herstellung des photoaktiven Systems bereitzustellen, welche ein qualitativ hochwertiger hergestelltes photoaktives System ermöglicht. Ferner ist insbesondere eine Aufgabe der vorliegenden Erfindung, eine Vorrichtung, ein Verfahren und eine Verwendung der Vorrichtung zur Herstellung eines photoaktiven Systems bereitzustellen, welche eine schnellere Herstellung des photoaktiven Systems ermöglicht.

Die Aufgabe wird gemäß dem ersten Aspekt der Erfindung nach Anspruch 1 gelöst.

Es ist zu verstehen, dass jegliche hierin beschriebenen Vorrichtungsmerkmale und Verfahrensschritte der Erfindung sowie der bevorzugten Ausführungsformen vorzugsweise zur Herstellung mehrerer photoaktiver Systeme simultan oder sequenziell sowohl unabhängig voneinander und/oder in Beziehung zueinander ausgebildet sind. Insofern ist mit der Herstellung, insbesondere der Justage, Montage und/oder Prüfung, mehrerer photoaktiver Systeme umfasst., Es ist vorgesehen, dass ein herzustellendes photoaktives System eine einzige oder mehrere Optikanordnungen und/oder eine einzige oder mehrere photoaktive Anordnungen aufweist.

Die Vorrichtung zur Herstellung photoaktiver Systeme, insbesondere eines deaktivierten photoaktiven Systems, eines elektrooptischen und/oder optoelektronischen Systems, insbesondere für ein projizierendes und/oder abbildendes elektrooptisches System, umfasst vorzugsweise eine Abbildungsvorrichtung, eine erste Haltevorrichtung und eine zweite Haltevorrichtung. Die Abbildungsvorrichtung umfasst mindestens eine Abbildungsanordnung. Die mindestens eine Abbildungsanordnung weist eine Strahlendurchgangsebene und eine optische Achse auf. Die Abbildungsanordnung ist ausgebildet, elektromagnetische Strahlen zu erzeugen und insbesondere zu formen, die entlang eines Strahlengangs verlaufen und in der Strahlendurchgangsebene die Abbildungsanordnung durchtreten. Ferner ist die Abbildungsanordnung ausgebildet, ein Auswertebild einer photoaktiver Anordnung des herzustellenden photoaktiven Systems und/oder einer Teststruktur mit den an der photoaktiven Anordnung reflektieren elektromagnetischen Strahlen in einer ersten Brennebene der Abbildungsanordnung abzubilden. Dazu werden die aus der Abbildungsanordnung an der Strahlendurchgangsebene austretenden elektromagnetischen Strahlen in einem Arbeitszustand an der photoaktiven Anordnung reflektiert. Die von der photoaktiven Anordnung reflektierten elektromagnetischen Strahlen treten in dem Arbeitszustand durch die Strahlendurchgangsebene wieder in die Abbildungsanordnung ein. Ferner ist die Abbildungsanordnung ausgebildet, das in der ersten Brennebene abgebildete Auswertebild zu erfassen. Die erste Haltevorrichtung hat vorzugsweise eine erste Halteebene in der eine Optikanordnung des herzustellenden photoaktiven Systems zur Herstellung angeordnet werden kann. Die zweite Haltevorrichtung hat bevorzugt eine zweite Halteebene in der die photoaktive Anordnung zur Herstellung angeordnet werden kann. Die erste Haltevorrichtung der ersten Halteebene und/oder die zweite Haltevorrichtung mit der zweiten Halteebene sind gegenüber der Abbildungsvorrichtung bewegbar angeordnet.

Insbesondere sind in dem Arbeitszustand die erste Haltevorrichtung der ersten Halteebene und/oder die zweite Haltevorrichtung mit der zweiten Halteebene gegenüber der Abbildungsvorrichtung bewegbar angeordnet.

Vorzugsweise umfasst die erste Haltevorrichtung eine erste Vorrichtungsachse, die sich orthogonal zu der ersten Halteebene erstreckt. Ferner umfasst die zweite Haltevorrichtung bevorzugt eine zweite Vorrichtungsachse, die sich orthogonal zu der zweiten Halteebene erstreckt. Insbesondere sind die erste und/oder zweite Vorrichtungsachse orthogonal zu einer Strahlendurchgangsebene einer der mindestens einen Abbildungsanordnung ausgerichtet. Es kann auch bevorzugt sein, dass die erste und/oder zweite Vorrichtungsachse winklig zu einer der mindestens einen Abbildungsanordnung ausgerichtet sind.

Das Auswertebild ist insbesondere ein Abbild einer photoaktiven Anordnung und/oder einer Teststruktur bzw. einer Reflektion einer Teststruktur und/oder einer Justagemarke. Eine Teststruktur und/oder eine Justagemarke ist vorzugsweise ein Schachbrettmuster, ein Siemensstern, ein Kreuz, eine H-Struktur oder ähnliches. Insbesondere kann die Teststruktur eine Struktur einer Strahlquelleneinheit, beispielsweise einer LED sein. Die Teststruktur ist insbesondere zur Herstellung eines photoaktiven Systems mit einer spiegelnden photoaktiven Anordnung vorteilhaft. Die spiegelnde photoaktive Anordnung hat insbesondere eine reflektierende Oberfläche. Die Justagemarke dient insbesondere dazu, die Optikanordnung gegenüber der photoaktiven Anordnung zu justieren. Vorzugsweise sind eine oder mehrere Justagemarken in einem Randbereich bzw. Außenbereich der photoaktiven Anordnung angeordnet. Vorzugsweise sind die eine oder mehreren Justagemarken auf einem Träger der photoaktiven Anordnung angeordnet. Ferner sind die eine oder mehreren Justagemarken in dem Arbeitszustand neben der photoaktiven Anordnung angeordnet. Insbesondere sind die einen oder mehrere Justagemarken auf der ersten und/oder zweiten Haltevorrichtung angeordnet. Justagemarken sind insbesondere physikalische angeordnete bzw. eingebrachte Referenzstrukturen.

Insbesondere ist die Teststruktur eine photoaktive Anordnung eines herzustellenden photoaktiven Systems. In dieser bevorzugten Ausführungsform dienen die optisch funktionalen Strukturen der photoaktiven Anordnung als Referenz für die Herstellung eines photoaktiven Systems. Dies hat insbesondere den Vorteil, dass eine Referenzierung der Vorrichtung zur Markern oder anderen Teststrukturen entfallen kann.

Das herzustellende photoaktive System umfasst insbesondere ein elektrooptisches oder ein optoelektronisches System. Ein elektrooptisches System ist ausgebildet, ein elektronisch erzeugtes Datum und/oder eine elektronisch erzeugte Energie in eine Lichtemission, insbesondere in eine elektromagnetische Strahlung zu wandeln. Ein optoelektronisches System ist ausgebildet, eine Lichtemission, insbesondere eine elektromagnetische Strahlung in ein elektronisches Datum oder eine elektrische Energie zu wandeln. Insbesondere wird bei dem herzustellenden photoaktiven System auch zwischen einem abbildenden oder einem projizierenden System unterschieden. Ein abbildendes System ist beispielsweise eine Kamera oder ein Teleskop. Ein projizierendes System ist beispielsweise ein Punktmuster-Projektor für eine Gesichts- und/oder Gestenerkennung in einem mobilen Endgerät.

Das herzustellende photoaktive System ist insbesondere eine Kombination aus einem projizierenden System (Sendeeinheit) und einem abbildenden System (Empfängereinheit). Ein solches photoaktives System ist beispielsweise eine LiDAR-Sensor. Insbesondere kann das herzustellende photoaktive System auch zwei oder mehr projizierende Systeme und/oder zwei oder mehrere abbildende Systeme umfassen.

Ein solch herzustellendes photoaktives System, insbesondere ein herzustellendes deaktiviertes photoaktives System, umfasst insbesondere eine photoaktive Anordnung und eine Optikanordnung. Eine Optikanordnung kann eine oder mehrere Linsen umfassen. Insbesondere kann die eine oder mehreren Linsen eine sphärische und/oder asphärische und/oder freigeformte Linse sein. Beispielsweise sind als sphärische Linsen Sammellinsen, Menisken und Zerstreuungslinsen bekannt. Bevorzugte Sammellinsen sind beispielsweise eine bikonvexe, eine plankonvexe oder eine konkav-konvexe Linse. Bevorzugte Zerstreuungslinsen sind beispielsweise eine konvex-konkave, eine plankonkave oder bikonkave Linse. Die Optikanordnung kann insbesondere eine Kombination aus mehreren verschiedenen Linsen, insbesondere mehreren verschiedenen sphärischen und/oder asphärischen und/oder freigeformten Linsen, umfassen. Insbesondere kann die Optikanordnung derart ausgebildet sein, dass sie elektromagnetische Strahlen in einer Richtung in einer unendlichen Entfernung oder in einer endlichen Entfernung in einer Brennebene fokussiert. Ferner kann die Optikanordnung bevorzugt derart ausgebildet sein, dass sie elektromagnetische Strahlen in einer der Richtung entgegengesetzten Richtung in einer unendlichen Entfernung oder in einer endlichen Entfernung in einer weiteren Brennebene fokussiert. Insbesondere kann die Optikanordnung als Objektiv ausgebildet sein. Die photoaktive Anordnung umfasst insbesondere einen Bildsensor bzw. einen Chip einer Kamera und/oder eine Leiterplatte. Vorzugsweise umfasst die photoaktive Anordnung einen auf einem Träger angeordneten Bildsensor bzw. Chip einer Kamera. Insbesondere kann die photoaktive Anordnung beispielsweise ein CCD-Chip, CMOS-Chip, VCSEL-Array, SPAD-Array, InGaAs-Chip, Mikrobolometer oder ein ähnliches Bauteil zur Erfassung und/oder Erzeugung elektromagnetischer Strahlung sein.

Die Herstellung eines photoaktiven Systems umfasst vorzugsweise die Justage und/oder Montage und/oder Prüfung des photoaktiven Systems. Die Herstellung des photoaktiven Systems umfasst insbesondere die Justage der Optikanordnung gegenüber der photoaktiven Anordnung und/oder die Montage der Optikanordnung an der photoaktiven Anordnung und/oder die Prüfung des justierten und/oder montierten photoaktiven Systems. Insbesondere umfasst die Herstellung eines photoaktiven Systems die Justage und/oder Montage und/oder Prüfung des photoaktiven Systems gegenüber einem oder mehreren weiteren bereits justierten und/oder montierten und/oder geprüften photoaktiven Systemen. Insbesondere umfasst die Herstellung eines photoaktiven Systems die Justage und/oder Montage und/oder Prüfung einer photoaktiven Anordnung gegenüber einer Optikanordnung eines herzustellenden photoaktiven Systems gegenüber einem oder mehreren weiteren bereits justierten und/oder montierten und/oder geprüften photoaktiven Systemen, insbesondere gegenüber deren Optikanordnungen und/oder photoaktiven Anordnungen.

In dem Arbeitszustand umfasst die Justage ein Ausrichten der Optikanordnung gegenüber der photoaktiven Anordnung; ein Bewegen der Optikanordnung und der photoaktiven Anordnung; oder ein Bewegen der Optikanordnung gegenüber einer ortsfest angeordneten photoaktiven Anordnung; oder ein Bewegen der photoaktiven Anordnung gegenüber einer ortsfest angeordneten Optikanordnung. Dies gilt mutatis mutandis für die erste und zweite Haltevorrichtung der Vorrichtung. Insbesondere umfasst die Justage ein translatorisches Ausrichten der Optikanordnung und ein rotatorisches Ausrichten der photoaktiven Anordnung. Es kann auch bevorzugt sein, dass die Justage ein rotatorisches Ausrichten der Optikanordnung und ein translatorisches Ausrichten der photoaktiven Anordnung umfasst. Es kann bevorzugt sein, dass die Justage ein rotatorisches und translatorisches Ausrichten sowohl der Optikanordnung als auch der photoaktiven Anordnung umfasst.

Bei der Justage wird die erste Haltevorrichtung mit der zu justierenden Optikanordnung gegenüber der zweiten Haltevorrichtung mit der zu justierenden photoaktiven Anordnung ausgerichtet und/oder vice versa. Insbesondere wird bei der Justage das Auswertebild des zu justierenden photoaktiven Systems der jeweiligen mindestens einen Abbildungsanordnung geprüft. Insbesondere umfasst die Justage ein Erfassen einer Abbildungsgüte des Auswertebilds der jeweiligen mindestens einen Abbildungsanordnung. Die Abbildungsgüte ist beispielsweise eine Abbildungsschärfe des Auswertebilds. Vorzugsweise ist das Auswertebild das Abbild eines einzigen herzustellenden photoaktiven Systems. Es kann insbesondere bevorzugt sein, dass das Auswerteabbild eine Überlagerung von zwei oder mehreren Abbildern von zwei oder mehreren herzustellenden photoaktiven Systemen ist. Bei der Justage werden insbesondere eine Lage und/oder eine Position der Optikanordnung und der photoaktiven Anordnung zueinander eingestellt. Die Justage erfolgt vorzugsweise in Abhängigkeit des zu erfassenden Auswertebilds der jeweiligen mindestens einen Abbildungsanordnung, insbesondere in Abhängigkeit einer zu erfassenden Abbildungsgüte des jeweiligen Auswertebilds. Vorzugsweise erfolgt die Justage in Abhängigkeit eines Wertes, der sich aus einer mathematischen Auswertung einer Überlagerung zweier Auswertebilder ergibt. Insbesondere erfolgt die Justage mit Hilfe üblicher Methoden der industriellen Bildverarbeitung bzw. in Abhängigkeit von damit extrahierten Merkmalen. Üblicherweise werden hierbei zwei oder mehr Bilder von Teststrukturen ausgewertet und/oder überlagert. Insbesondere erfolgt die Justage in Abhängigkeit eines Wertes, der die Differenz zweier Teststrukturen in einem durch Überlagerung zweier Abbilder entstandenen Auswertebilds beschreibt. Insbesondere basiert die Justage auf Grundlage einer Auswertung der Abbildungsgüte des jeweiligen Auswertebilds in Abhängigkeit der Lage und/oder Position der bewegbar angeordneten ersten und/oder zweiten Haltevorrichtung gegenüber der in dem Arbeitszustand ortsfest angeordneten Abbildungsvorrichtung. Hierzu werden, in dem Arbeitszustand, die Lage und/oder Position der bewegbar angeordneten ersten und/oder zweiten Haltevorrichtung gegenüber der in dem Arbeitszustand ortsfest angeordneten Abbildungsvorrichtung verstellt und die Abbildungsgüte des jeweiligen Auswertebilds in Bezug auf die ortsfest angeordnete Abbildungsvorrichtung in Abhängigkeit der Verstellung der bewegbar angeordneten ersten und/oder zweiten Haltevorrichtung erfasst.

Es ist bevorzugt, zur Bestimmung eines oder mehrerer Stellsignale für die bewegbar angeordnete erste und/oder zweite Haltevorrichtung die erfasste Abbildungsgüte des jeweiligen Auswertebilds in einen Frequenzbereich zu transformieren. Die erfasste Abbildungsgüte, die, insbesondere dann, beispielsweise eine Abbildungsschärfe des Auswertebilds ist, kann beispielsweise mit einer Fouriertransformation in den Frequenzbereich transformiert werden. Die maximale Frequenz des Frequenzbereichs entspricht dabei insbesondere der höchsten Abbildungsschärfe zu der die Lage und/oder Position der bewegbar angeordneten ersten und/oder zweiten Haltevorrichtung bekannt ist. Vorzugsweise entspricht die Abbildung mit den meisten Frequenzanteilen im oberen, untersuchten Frequenzbereich der Abbildung mit der besten Abbildungsschärfe zu der die Lage und/oder Position der bewegbar angeordneten ersten und/oder zweiten Haltevorrichtung bekannt ist. Vorzugsweise können die Stellsignale in Abhängigkeit eines Wertes, der sich aus einer mathematischen Auswertung einer Überlagerung zweier Auswertebilder ergibt, ermittelt werden. Insbesondere können die Stellsignale mit Hilfe üblicher Methoden der industriellen Bildverarbeitung in Abhängigkeit von damit extrahierten Merkmalen ermittelt werden. Ferner können die Stellsignale auch aus Positionsdifferenzen zwischen Teststrukturen, die in einem Bildbereich aus dem Auswertebild extrahiert wurden, ermittelt werden.

Auf dieser Grundlage wird vorzugsweise das eine oder die mehreren Stellsignale zur Justage der Optikanordnung gegenüber der photoaktiven Anordnung und/oder der Justage zu einem weiteren photoaktiven System bzw. vice versa ermittelt. Ferner können die Stellsignale aus Werten, die in einem Bildbereich aus dem Auswertebild extrahiert wurden, ermittelt werden.

Eine der mindestens einen Abbildungsanordnung ist vorzugsweise derart angeordnet, dass deren optische Achse im Wesentlichen, insbesondere nach erfolgter Justage der Optikanordnung zu der photoaktiven Anordnung, parallel, vorzugsweise konzentrisch, zu der ersten und/oder zweiten Vorrichtungsachse ausgerichtet ist. Insbesondere ist eine der mindestens einen Abbildungsanordnung vorzugsweise derart angeordnet, dass deren optische Achse im Wesentlichen, insbesondere nach erfolgter Justage von zwei oder mehr Optikanordnungen zu zwei oder mehr photoaktiven Anordnung, vorzugsweise konzentrisch, zu der ersten und/oder zweiten Vorrichtungsachse ausgerichtet ist. Ferner ist bevorzugt, dass mindestens eine weitere der mindestens einen Abbildungsanordnung derart angeordnet sind, dass deren optische Achse winklig zu der ersten und/oder zweiten Vorrichtungsachse ausgerichtet ist. Es ist insbesondere zu verstehen, dass die jeweilige mindestens eine Abbildungsanordnung zur Herstellung des photoaktiven Systems unterschiedliche Bereiche der photoaktiven Anordnung erfassen. Insbesondere erfasst die mindestens eine Abbildungsanordnung, deren optische Achse parallel, vorzugsweise konzentrisch zu der ersten und/oder zweiten Vorrichtungsachse ausgerichtet ist, ein Zentrum der photoaktiven Anordnung, wohingegen die mindestens eine weitere der mindestens einen Abbildungsanordnung, deren jeweilige optische Achse winklig zu der ersten und/oder zweiten Vorrichtungsachse ausgerichtet ist, jeweils einen Randbereich der photoaktiven Anordnung erfassen. Eine solche bevorzugte Ausführungsform hat insbesondere den Vorteil, die Optikanordnung und die photoaktive Anordnung des herzustellenden photoaktiven Systems translatorische und rotatorisch mit der ersten und/oder zweiten Haltevorrichtung zueinander auszurichten.

Insbesondere ist bei der Justage ein für die Montage erforderlicher Offset zu berücksichtigen. Ein solcher Offset kann beispielsweise zum Ausgleich eines fügebedingten Schrumpfens und/oder zur Einstellung eines auf unendlich eingestellten Systems, welches danach ins Endliche abbildet oder ähnlichem erforderlich sein. Ferner ist insbesondere ein Offset für die Justage erforderlich, um von einer Ebene in der photoaktiven Anordnung eines herzustellenden photoaktiven Systems, in der eine nicht optisch-funktionale Struktur liegt, für die allerdings die meisten hohen Frequenzanteile erfasst wurden, auf eine gewünschte optisch-funktionale Struktur der photoaktiven Anordnung des herzustellenden photoaktiven Systems zu fokussieren. Ferner kann das Offset auch erforderlich sein um eine gewünschte Distanz zwischen zwei Teststrukturen in einem Auswertebild zu erreichen beispielsweise zur Berücksichtigung von Parallaxe-Effekten. Auch zum Ausgleich von Bildfeldwölbungseffekten, zur Berücksichtigung von Abbildungsschärfegradienten im on- und off-axis Bereich des photoaktiven Systems können derartige Offsets geeignet sein.

Es ist zu verstehen, dass der Offset der Vorrichtung insbesondere durch translatorisches und/oder rotatorisches Bewegen oder Verstellen der ersten und/oder zweiten Haltevorrichtung eingestellt wird. Insbesondere wird der Offset im Wesentlichen in der ersten und/oder zweiten Halteebenen entlang zweier unabhängiger Achsen eingestellt und/oder um die zwei unabhängigen Achsen eingestellt. Ferner kann bevorzugt sein, den Offset im Wesentlichen orthogonal zu der ersten und/oder zweiten Halteebenen, insbesondere entlang einer dritten unabhängigen Achse zu bewegen und/oder zu verstellen. Vorzugsweise ist auch vorgesehen, dass der Offset um die dritte unabhängige Achse eingestellt wird.

Bei der Montage wird die erste Haltevorrichtung mit der zu montierenden Optikanordnung gegenüber der zweiten Haltevorrichtung mit der zu montierenden photoaktiven Anordnung in einer festgelegten Lage und/oder Position zueinander gehalten. Insbesondere wird bei der Montage die Optikanordnung mit der photoaktiven Anordnung verbunden, beispielsweise fügend verbunden. Insbesondere kann bei der Montage die Optikanordnung mit der photoaktiven Anordnung formschlüssig und/oder kraftschlüssig und/oder stoffschlüssig verbunden werden. Insbesondere umfasst die Montage ein Kleben, Löten und/oder Schweißen zum Verbinden der Optikanordnung mit der photoaktiven Anordnung. Vorzugsweise umfasst die Montage ein Aushärten der Verbindung, insbesondere ein UV-Aushärten.

Bei der Prüfung wird das justierte und/oder montierte photoaktive System geprüft. Insbesondere wird bei der Prüfung das Auswertebild des zu prüfenden photoaktiven Systems der jeweiligen Abbildungsanordnung geprüft. Insbesondere umfasst die Prüfung des jeweiligen Auswertebilds die Prüfung der Abbildungsschärfe des jeweiligen Auswertebilds. Insbesondere wird bei der Prüfung die Lage und/oder Position der zueinander justierten und/oder montierten Optikanordnung und photoaktiven Anordnung geprüft. Vorzugsweise wird eine Überlagerung zweier Auswertebilder mathematisch und/oder bildverarbeitungstechnisch ausgewertet. Insbesondere kann bei der Prüfung eine Differenz zwischen einer Position einer ersten Teststruktur und einer zweiten Teststruktur in einem Auswertebild überprüft werden. Solch ein Auswertebild entsteht insbesondere durch Überlagerung mehrerer Auswertebilder, wenn mit der Vorrichtung mehrere photoaktive Systeme simultan oder sequenziell hergestellt werden.

Es ist zu beachten, dass bei der Prüfung das hergestellte photoaktive System in der ersten oder der zweiten Haltevorrichtung angeordnet ist. Bevorzugt ist das hergestellte photoaktive System zur Prüfung in der zweiten Haltevorrichtung angeordnet.

Ein Betriebszustand ist ein Zustand der erfindungsgemäßen Vorrichtung im Betrieb. Der Betriebszustand der erfindungsgemäßen Vorrichtung umfasst den Arbeitszustand und vorzugsweise einen Positionierzustand. Ferner kann der Betriebszustand bevorzugt einen Logistikzustand und/oder vorzugsweise einen Wartungszustand umfassen. Der Arbeitszustand der erfindungsgemäßen Vorrichtung umfasst insbesondere die Herstellung des photoaktiven Systems. Insbesondere umfasst der Arbeitszustand der erfindungsgemäßen Vorrichtung das Justieren und/oder das Montieren und/oder das Prüfen des photoaktiven Systems.

In dem Positionierzustand der erfindungsgemäßen Vorrichtung ist die Abbildungsvorrichtung bewegbar angeordnet. Insbesondere ist die Abbildungsvorrichtung in dem Positionierzustand in einer Ebene parallel zu der ersten und/oder zweiten Halteebene bewegbar angeordnet. Insbesondere sind in dem Positionierzustand die erste und/oder zweite Haltevorrichtung ortsfest angeordnet und die Abbildungsvorrichtung ist bewegbar angeordnet. Insbesondere weist die Vorrichtung zum Bewegen der Abbildungsvorrichtung eine Abbildungsantriebsvorrichtung und/oder Abbildungslagervorrichtung und/oder eine Abbildungssteuerungsvorrichtung auf.

In dem Logistikzustand der erfindungsgemäßen Vorrichtung erfolgt vorzugsweise das Bereitstellen und Zuführen der Optikanordnung und der photoaktiven Anordnung der jeweiligen Haltevorrichtung und das Abführen des hergestellten photoaktiven Systems. Das Zuführen und/oder Abführen kann stückweise, batchweise oder kontinuierlich erfolgen. Es kann bevorzugt sein, mehrere Optikanordnungen und/oder mehrere photoaktive Anordnungen, insbesondere zeitgleich, zuzuführen. Insbesondere umfasst der Logistikzustand ferner das Anordnen der Optikanordnung und der photoaktiven Anordnung in der jeweiligen Haltevorrichtung.

Der Wartungszustand der erfindungsgemäßen Vorrichtung kann insbesondere einen Zustand der Wartung und Instandhaltung der einzelnen Elemente der erfindungsgemäßen Vorrichtung umfassen.

Insbesondere können die einzelnen Elemente, Vorrichtungen, Einheiten und/oder Anordnungen der erfindungsgemäßen Vorrichtung in dem Arbeitszustand zueinander anders angeordnet sein und/oder in einer anderen Funktion zueinander stehen als beispielsweise in dem Positionierzustand und/oder Logistikzustand und/oder dem Wartungszustand.

Die erste und/oder zweite Haltevorrichtung sind ausgebildet, die Optikanordnung und/oder die photoaktive Anordnung zu halten. Insbesondere ist die jeweilige Haltevorrichtung ausgebildet, die Optikanordnung bzw. photoaktive Anordnung form- und/oder kraftschlüssig zu halten und/oder aufzunehmen. Die erste Haltevorrichtung kann ausgebildet sein eine photoaktive Anordnung aufzunehmen und die zweite Haltevorrichtung kann ausgebildet sein eine Optikanordnung aufzunehmen. Insbesondere kann die jeweilige Haltevorrichtung ausgebildet sein, ein Magazin mit einer oder mehreren Optikanordnungen und/oder ein Magazin mit einer oder mehreren photoaktiven Anordnungen aufzunehmen. Vorzugsweise sind die erste und/oder zweite Haltevorrichtung als Magazin ausgebildet, Optikanordnungen und/oder photoaktive Anordnungen aufzunehmen und für die Herstellung des photoaktiven Systems bereitzustellen. Es kann auch bevorzugt sein, der jeweiligen Haltevorrichtung die Optikanordnung bzw. photoaktive Anordnung einzeln zuzuführen. Insbesondere ist die jeweilige Haltevorrichtung ausgebildet, die Optikanordnung und/oder photoaktive Anordnung der Haltevorrichtung zur Herstellung des photoaktiven Systems zuzuführen und nach Herstellung des photoaktiven Systems auszugeben. Ein Magazin ist bevorzugt ausgebildet ein oder mehrere photoaktive Anordnungen und/oder ein oder mehrere Optikanordnungen aufzunehmen bzw. für die Herstellung des photoaktiven Systems zwischenzulagern. Die erste und zweite Haltevorrichtung sind erfindungsgemäss ausgebildet, zwei oder mehr Optikanordnungen und zwei oder mehr photoaktive Anordnungen aufzunehmen. Insbesondere lassen sich mit einer solchen ersten und/oder zweiten Haltevorrichtung, die zwei oder mehr Optikanordnungen und/oder zwei oder mehr photoaktive Anordnungen aufnehmen können, zwei oder mehr photoaktive Systeme simultan und/oder sequenziell sowohl unabhängig als auch in Relation zueinander herstellen. Insbesondere wird hierzu ein funktionaler Bezug der photoaktiven Systeme relativ zueinander hergestellt. Insbesondere können auch mehrere optische Anordnungen nacheinander durch Verfahren der Abbildungsvorrichtung und Verfahren der ersten und/oder zweiten Halteeinrichtung auf eine Trägereinheit mit mehreren photoaktiven Anordnungen montierten werden. Vorzugsweise werden die Abbildungsvorrichtung und die erste und/oder zweite Haltevorrichtung derart Verfahren, dass sie in derselben Richtung mit derselben Geschwindigkeit verfahren werden, d.h. beim Verfahren zueinander ortsfest sind. Dies kann insbesondere bevorzugt sein, wenn die herzustellenden photoaktiven Systeme beispielsweise Teil einer Dual-Kamera oder Tripel-Kamera sind.

Insbesondere ist dies bevorzugt, wenn mehrere photoaktive Systeme, vorzugsweise ein projizierendes System und ein abbildendes System oder insbesondere zwei abbildende Systeme, sequenziell hergestellt werden sollen.

Vorzugsweise ist in dem Arbeitszustand die erste Haltevorrichtung und die zweite Haltevorrichtung gegenüber der Abbildungsvorrichtung bewegbar angeordnet, wobei die Abbildungsvorrichtung ortsfest angeordnet ist. Insbesondere ist dies bevorzugt, wenn mehrere photoaktive Systeme, vorzugsweise ein projizierendes System und ein abbildendes System, insbesondere ein LiDAR-System, vorzugsweise zwei oder mehr abbildende Systeme, beispielsweise ein Multi-Kamera-System, sequenziell oder simultan hergestellt werden sollen. Ferner kann bevorzugt sein, dass in dem Arbeitszustand die erste Haltevorrichtung gegenüber der zweiten Haltevorrichtung und der Abbildungsvorrichtung bewegbar angeordnet ist, wobei die zweite Haltevorrichtung und die Abbildungsvorrichtung ortsfest angeordnet sind. Insbesondere kann in dem Arbeitszustand bevorzugt sein, dass die zweite Haltevorrichtung gegenüber der ersten Haltevorrichtung und der Abbildungsvorrichtung bewegbar angeordnet ist, wobei die erste Haltevorrichtung und die Abbildungsvorrichtung ortsfest angeordnet sind. Vorzugsweise ist die erste Haltevorrichtung und/oder die zweite Haltevorrichtung entlang der optischen Achse translatorisch bewegbar angeordnet. Insbesondere können die erste und/oder zweite Haltevorrichtung quer zu der optischen Achse translatorisch bewegbar angeordnet sein. Insbesondere kann die erste und/oder zweite Haltevorrichtung rotatorisch bewegbar angeordnet sein. Vorzugsweise ist die erste und/oder zweite Haltevorrichtung um zwei oder drei orthogonal zueinander ausgerichtete Achsen rotatorisch bewegbar angeordnet. Insbesondere sind die erste und/oder zweite Haltevorrichtung gegenüber einer Strahlendurchgangsebene der mindestens einen Abbildungsanordnung bewegbar angeordnet. Insbesondere sind die erste und/oder zweite Haltevorrichtung gegenüber der Strahlendurchgangsebene der mindestens einen Abbildungsanordnung translatorisch und/oder rotatorisch bewegbar angeordnet.

Die erfindungsgemäße Vorrichtung ist ausgebildet, nach Herstellung eines ersten photoaktiven Systems in dem Arbeitszustand in den Positionierzustand zu schalten und in dem Positionierzustand die zu dem ersten photoaktiven System optisch ausgerichtete Abbildungsvorrichtung derart zu verschieben, dass sie zu einem zweiten (noch) herzustellenden photoaktiven Systems ausgerichtet wird. Zur Herstellung des zweiten herzustellenden photoaktiven Systems schaltet die Vorrichtung wieder in den Arbeitszustand. Insbesondere ist die erfindungsgemäße Vorrichtung dazu ausgebildet, nachdem diese wieder in den Arbeitszustand geschaltet wurde, mindestens ein weiteres photoaktives System, insbesondere mindestens eine weitere Optikanordnung und eine weitere photoaktive Anordnung sowohl zueinander als auch in Bezug zu dem bereits justierten und/oder montierten photoaktiven System zu justieren. Zur Justage des noch zu justierenden und/oder montierenden photoaktiven Systems gegenüber dem bereits justierten und/oder montierten photoaktiven System nutzt man vorzugsweise eine virtuelle Teststruktur, die aus einem Auswertebild der Teststruktur des bereits justierten und/oder montierten photoaktiven Systems (nach der Justage) gespeichert wurde, oder bei der Überlagerung simultan oder sequentiell von derselben Abbildungsvorrichtung aufgenommene Auswertebilder.

Insbesondere ist die erste Halteebene der ersten Haltevorrichtung zu der zweiten Halteebene der zweiten Haltevorrichtung derart angeordnet, dass die in der ersten Haltevorrichtung einlegbare Optikanordnung den Strahlengang der elektromagnetischen Strahlen in einer Brennebene fokussiert, der insbesondere in der photoaktiven Anordnung liegt, die in der zweite Haltevorrichtung einlegbar ist und die elektromagnetischen Strahlen in Richtung der Strahlendurchgangsebene der mindestens einen Abbildungsanordnung reflektiert. Die reflektierten elektromagnetischen Strahlen treten durch die Strahlendurchgangsebene der mindestens einen Abbildungsanordnung in die mindestens eine Abbildungsanordnung ein.

Eine Vorrichtung, eine Anordnung, eine Einheit, ein Element etc. ist insbesondere dann bewegbar angeordnet, wenn eine Lage und/oder eine Position der Vorrichtung, der Anordnung, der Einheit, des Elements etc. gegenüber einer ortsfest angeordneten Anordnung, einer ortsfest angeordneten Einheit, einem ortsfest angeordneten Element etc. räumlich veränderbar ist. Eine Vorrichtung, eine Anordnung, eine Einheit, ein Element etc. ist insbesondere ortsfest angeordnet, wenn die Lage und/oder die Position der Vorrichtung, der Anordnung, der Einheit, des Elements etc. räumlich nicht veränderbar ist. Die Vorrichtung, die Anordnung, die Einheit, das Element etc. sind insbesondere dann ortsfest, wenn sie nicht bewegbar angeordnet sind.

Die Abbildungsvorrichtung umfasst bevorzugt zwei, drei vier, fünf oder sechs Abbildungsanordnungen. Insbesondere kann die Abbildungsvorrichtung auch mehr als sechs Abbildungsanordnungen umfassen. Es kann bevorzugt sein, dass die Abbildungsvorrichtung insbesondere 7, 8, 9, 10, 11, 12 oder mehr Abbildungsanordnungen umfasst. Die jeweilige Abbildungsanordnung kann insbesondere jeweils eine Strahldurchgangsebene und eine optische Achse umfassen. Die optische Achse der mindestens einen Abbildungsanordnung ist vorzugsweise orthogonal zu der Strahlendurchgangsebene angeordnet. Es kann bevorzugt sein, dass ein erster Teil der mindestens einen Abbildungsanordnung auf ein erstes herzustellendes photoaktives System ausgerichtet ist und ein zweiter Teil der der mindestens einen Abbildungsanordnung auf ein zweites herzustellendes photoaktives System ausgerichtet ist. Ferner kann es vorteilhaft sein, die Abbildungsvorrichtung verfahrbar auszugestalten, um mehrere relativ zu einander herzustellende photoaktive Systeme nacheinander und/oder simultan herzustellen.

Eine Vorrichtung zur Herstellung eines deaktivierten photoaktiven Systems ist insbesondere dadurch gekennzeichnet, dass ein zu erfassendes Auswertebild nicht mit dem herzustellenden photoaktiven System erfasst wird. In dem Arbeitszustand ist das herzustellende deaktivierte photoaktive System, insbesondere dessen photoaktive Anordnung nicht an einen oder mehreren elektrischen Kontakten angeschlossen, d.h. insbesondere nicht mit einer elektrischen Energie versorgt wird und zur Datenübertragung ausgebildet ist. Vorzugsweise ist das herzustellende deaktivierte photoaktive System während der Herstellung deaktiviert. Ein solch deaktiviertes photoaktives System wird insbesondere während dessen Herstellung nicht mit einer elektrischen Energie versorgt. Ferner ist ein solch deaktiviertes photoaktives System während dessen Herstellung insbesondere nicht zur Datenübertragung mit elektrischen Kontakten kontaktiert. Insbesondere werden in dem Arbeitszustand während der Herstellung des deaktivierten photoaktiven Systems keine Signale bzw. Daten des herzustellenden photoaktiven Systems bzw. der photoaktiven Anordnung zur Herstellung, beispielsweise betreffend die Abbildungsschärfe, erfasst, die zur Herstellung des photoaktiven Systems, insbesondere zur Ausrichtung der Optikanordnung gegenüber der photoaktiven Anordnung, verwendet werden.

Insoweit umfasst die erfindungsgemäße Vorrichtung vorzugsweise keine Anschlüsse zur Übertragung elektrischer Energie und/oder elektrischer Signale als Daten von dem herzustellenden photoaktiven System. Insbesondere ist die Vorrichtung dadurch gekennzeichnet, dass in dem Arbeitszustand der Vorrichtung keine Daten von dem herzustellenden photoaktiven System, insbesondere von dessen photoaktiven Anordnung, zur Ausrichtung der Optikanordnung gegenüber der photoaktiven Anordnung verwendet werden. Insbesondere ist die erfindungsgemäße Vorrichtung dadurch gekennzeichnet, dass in dem Arbeitszustand der Vorrichtung die erste oder zweite Haltevorrichtung ausgebildet ist, die photoaktive Anordnung aufzunehmen, wobei die photoaktive Anordnung ausgebildet ist, in dem Arbeitszustand der Vorrichtung elektromagnetische Strahlen zu reflektieren, wobei die reflektierten Strahlen durch die Strahlendurchgangsebene der mindestens einen Abbildungsanordnung in die mindestens eine Abbildungsanordnung eintreten und dort erfasst werden.

Insbesondere hat die Vorrichtung zur Herstellung eines deaktivierten photoaktiven Systems den Vorteil, dass die Vorrichtung keine elektrische Kontaktierung des herzustellenden deaktivierten photoaktiven Systems erfordert. Dies reduziert in vorteilhafter Weise die Herstellungskosten und Wartungskosten der Vorrichtung. Ferner ist zur Herstellung des deaktivierten photoaktiven Systems das deaktivierte photoaktive System nicht an elektrische Kontakte anzuschließen. Dies kann die Herstellungszeit eines photoaktiven Systems erheblich reduzieren.

In vorteilhafter Weise entfällt Insbesondere die sonst notwendige Hardware zur Kontaktierung mit dem herzustellenden photoaktiven System, zur Ansteuerung und zum Betrieb des herzustellenden photoaktiven Systems. Dies kann zu einer erheblichen Verkürzung der Prozesszeit und reduzierten Kosten führen.

Insbesondere ermöglicht eine Abbildungsvorrichtung mit mehreren Abbildungsanordnungen eine Herstellung eines photoaktiven Systems mit einer besonders hohen Abbildungsschärfe. Ferner kann in besonders vorteilhafter Weise die die Sensitivität der Abbildungsvorrichtung positiv durch den doppelten Strahlendurchgang durch die zu justierende und/oder zu montierende Optikanordnung beeinflusst werden, da durch die Reflektion der elektromagnetischen Strahlen Abbildungsfehler ggf. verstärkt werden.

Die Herstellungszeit eines photoaktiven Systems mit bisherigen Vorrichtungen ist durch die Bildrate der photoaktiven Anordnung beschränkt.

Die vorteilhafte Anordnung einer Abbildungsvorrichtung erlaubt ein Erfassen eines Auswertebildes und das Auswerten des Auswertebildes aufgrund wesentlich höherer Bildraten der Abbildungsvorrichtung mit einer erheblich höheren Geschwindigkeit. Dies reduziert in besonders vorteilhafter Weise die Herstellungszeit eines herzustellenden photoaktiven Systems.

Gemäß einer ersten bevorzugten Ausführungsform ist die erste Haltevorrichtung zwischen der zweiten Haltevorrichtung und der Abbildungsvorrichtung angeordnet. Insbesondere ist in dieser bevorzugten Ausführungsform die Vorrichtung an einem Aufbau für ein Auflichtverfahren orientiert. Eine solche bevorzugte Anordnung der Ausführungsform ermöglicht eine besonders kostengünstige und schnelle Herstellung eines photoaktiven Systems. Insbesondere basiert diese Ausführungsform auf einer einfachen umzusetzenden Anordnung der Abbildungsvorrichtung und der herzustellenden Optikanordnung und photoaktiven Anordnung.

Gemäß einer weiteren bevorzugten Fortbildung der Vorrichtung sind die mindestens eine Abbildungsanordnung und die erste Haltevorrichtung entlang der optischen Achse mit einem ersten Abstand beabstandet zueinander angeordnet; und die erste Haltevorrichtung und die zweite Haltevorrichtung entlang der optischen Achse mit einem zweiten Abstand beabstandet zueinander angeordnet. Umfasst die Abbildungsvorrichtung mehrere Abbildungsanordnungen, kann der erste Abstand zwischen der ersten Haltevorrichtung und der jeweiligen Abbildungsanordnung variieren. Es kann bevorzugt sein, dass der erste Abstand zwischen der ersten Haltevorrichtung und der jeweiligen Abbildungsanordnung identisch ist. Ein dritter Abstand ist insbesondere eine Brennweite des Abbildungsmoduls. Die Brennweite ist insbesondere der Abstand zwischen einer Hauptebene des Abbildungsmoduls und der ersten Brennebene.

Den ersten Abstand begrenzt hinsichtlich seines Maximalwertes insbesondere der Vignettierungseffekt. Vorzugsweise ist das Verhältnis des dritten Abstands zu dem zweiten Abstand mindestens 1:1 und maximal 100:1. Insbesondere kann das Verhältnis des dritten Abstands zu dem zweiten Abstand mindestens 0,5:1 betragen. Ferner ist das Verhältnis des dritten Abstands zu dem zweiten Abstand vorzugsweise in einer Größenordnung von 1:1 bis 10:1. Insbesondere entspricht der zweite Abstand im Wesentlichen der Brennweite der Optikanordnung des herzustellenden photoaktiven Systems. Insbesondere ist die erste Haltevorrichtung zu der zweiten Haltevorrichtung nach einer durchgeführten Justage und/oder Montage und/oder Prüfung derart beabstandet, dass die dritte Brennebene der Optikanordnung entlang der optischen Achse in Richtung der zweiten Halteebene in der photoaktiven Anordnung, insbesondere in der zweiten Halteebene der zweiten Haltevorrichtung liegt. Vorzugsweise weist die photoaktive Anordnung eine photoaktive Abbildungsebene auf, wobei die photoaktive Anordnung vorzugsweise derart in der zweiten Haltevorrichtung angeordnet ist, dass die zweite Halteebene in der photoaktiven Abbildungsebene liegt.

Gemäß einer ferner bevorzugten Fortbildung sind die erste und/oder zweite Haltevorrichtung ausgebildet, zwei oder mehr Optikanordnungen und/oder zwei oder mehr photoaktive Anordnungen aufzunehmen, wobei vorzugsweise die erste Haltevorrichtung ausgebildet ist, zwei oder mehr Optikanordnungen unabhängig voneinander rotatorisch und/oder translatorisch zu bewegen; und/oder vorzugsweise die zweite Haltevorrichtung ausgebildet ist, zwei oder mehr photoaktive Anordnungen unabhängig voneinander rotatorisch und/oder translatorisch zu bewegen. Ferner kann bevorzugt sein, dass die Vorrichtung ausgebildet ist, die Abbildungsvorrichtung unabhängig von der ersten und/oder zweiten Haltevorrichtung rotatorisch und/oder translatorisch gegenüber der ersten und/oder zweiten Haltevorrichtung zu bewegen.

In dieser bevorzugten Ausführungsform ist die erste Haltevorrichtung dazu ausgebildet, die Optikanordnungen unabhängig voneinander rotatorisch und/oder translatorisch zu bewegen. Insbesondere kann die erste Haltevorrichtung hierzu zwei oder mehr Halteeinheiten aufweisen, die unabhängig voneinander rotatorisch und/oder translatorisch bewegbar angeordnet und/oder gelagert und/oder angetrieben sind. Ferner ist in dieser bevorzugten Ausführungsform die zweite Haltevorrichtung dazu ausgebildet, die photoaktive Anordnung unabhängig voneinander rotatorisch und/oder translatorisch zu bewegen. Insbesondere kann die zweite Haltevorrichtung hierzu zwei oder mehr Halteeinheiten aufweisen, die unabhängig voneinander rotatorisch und/oder translatorisch bewegbar angeordnet und/oder gelagert und/oder angetrieben sind. Das rotatorische Bewegen umfasst ein Drehen und/oder Schwenken der ersten und/oder zweiten Haltevorrichtung um drei unabhängige Achsen (drei rotatorische Freiheitsgrade). Das translatorische Bewegen umfasst ein Verschieben und/oder Verfahren entlang der drei unabhängigen Achsen (drei translatorische Freiheitsgrade).

Diese bevorzugte Ausführungsform hat den Vorteil, dass zwei oder mehr photoaktive Systeme simultan oder nacheinander, d.h. sequenziell, sowohl unabhängig als auch in Relation zueinander justiert und/oder montiert werden können.

Ferner ist zu verstehen, dass die Abbildungsvorrichtung ausgebildet ist, die zwei oder mehr herzustellenden photoaktiven Systeme, insbesondere die zwei oder mehr photoaktiven Anordnungen der herzustellenden photoaktiven Systeme, simultan abzubilden. Insbesondere ist die Abbildungsvorrichtung, die eine einzige Abbildungsanordnung aufweist, dazu ausgebildet, die zwei oder mehr herzustellenden photoaktiven Systeme, insbesondere die zwei oder mehr photoaktiven Anordnungen der herzustellenden photoaktiven Systeme, simultan abzubilden. Vorzugsweise umfasst die Abbildungsvorrichtung, insbesondere eine einzige Abbildungsanordnung, als Abbildungselement des Abbildungsmoduls eine Sammellinse. Hierzu ist vorgesehen, dass eine Strahlenquelleneinheit zunächst ein erstes herzustellendes photoaktives System und anschließend ein zweites bzw. weiteres herzustellendes photoaktives System beleuchtet. Ferner kann in bevorzugter Weise eine globale Beleuchtungseinheit, insbesondere eine Strahlquelleneinheit, verwendet werden und durch eine schaltbare Abschattungseinheit, insbesondere eine drehend gelagerte Abschattungseinheit, die jeweils herzustellenden photoaktiven Systeme einzeln beleuchtet werden. Ferner kann bevorzugt sein, dass über eine Strahlenquelle, die außerhalb der Abbildungsvorrichtung angeordnet ist, deren elektromagnetische Strahlen koaxial zu der Optikachse der Abbildungsvorrichtung zwischen der Strahlendurchgangsebene und der ersten Halteebene eingekoppelt werden, dass diese abwechselnd das linke und das rechte photoaktive System beleuchten. Ferner kann bevorzugt sein, dass das erste und zweite herzustellende photoaktive System über Lichtleitfasern abwechselnd beleuchtet werden, die zur Beleuchtung der herzustellenden photoaktiven Systeme vorzugsweise an der Optikanordnung des ersten und zweiten herzustellenden photoaktiven Systems angeordnet sind.

Dies hat insbesondere den Vorteil, dass mit der Abbildungsvorrichtung, insbesondere mit einer einzigen Abbildungsanordnung, zwei oder mehrere herzustellende photoaktive Systeme, insbesondere zwei oder mehrere photoaktive Anordnungen der herzustellenden photoaktiven Systeme, simultan erfasst werden können. Ferner hat dies den Vorteil, dass die Auswertebilder der zwei oder mehr herzustellenden photoaktiven Systeme simultan in der Abbildungsvorrichtung, insbesondere in der einzigen Abbildungsanordnung physikalisch überlagert werden können und insofern eine nachgelagerte virtuelle Überlagerung entfallen kann. Dies minimiert in vorteilhafter Weise die Montagezeit einerseits und minimiert die Komplexität des Aufbaus.

Nach einer weiteren bevorzugten Ausführungsform ist die Abbildungsvorrichtung verfahrbar ausgebildet, um mehrere relativ zueinander herzustellende photoaktive System nacheinander und/oder simultan herzustellen. Es ist eine oder sind mehrere der Abbildungsanordnungen der Abbildungsvorrichtung verfahrbar ausgebildet. Die Abbildungsvorrichtung, insbesondere die mindestens eine Abbildungsanordnung, ist im Wesentlichen parallel zu der ersten und/oder zweiten Halteebenen der ersten und/oder zweiten Haltevorrichtung verfahrbar. Ergänzend oder alternativ ist die Abbildungsvorrichtung, insbesondere die mindestens eine Abbildungsanordnung, gegenüber der ersten und/oder zweiten Halteebenen der ersten und/oder zweiten Haltevorrichtung schwenkbar angeordnet und/oder gelagert und/oder angetrieben.

Ferner ist gemäß einer bevorzugten Fortbildung vorgesehen, dass ein erster Teil der mindestens einen Abbildungsanordnung auf ein erstes herzustellendes photoaktives System ausgerichtet ist und ein zweiter Teil der mindestens einen Abbildungsanordnung auf ein zweites herzustellendes photoaktives System ausgerichtet ist. Der erste Teil der mindestens einen Abbildungsanordnung ist insbesondere ein erster Bereich, vorzugsweise ein erster Teilbereich, einer freien Apertur. Der zweite Teil der mindestens einen Abbildungsanordnung ist insbesondere ein zweiter Bereich, vorzugsweise ein zweiter Teilbereich, der freien Apertur. Insbesondere ist die freie Apertur die freie Apertur eines Abbildungsmoduls und/oder Abbildungselements, bevorzugt einer Sammellinse, der mindestens einen Abbildungsanordnung.

Nach einer weiteren bevorzugten Ausführungsform weist die Abbildungsvorrichtung zwei Abbildungsanordnungen auf, wobei die zwei Abbildungsanordnungen derart angeordnet sind, dass deren optische Achsen parallel zueinander verlaufen, wobei eine der zwei Abbildungsanordnungen auf ein herzustellendes photoaktives System ausgerichtet ist und eine andere der zwei Abbildungsanordnungen auf ein weiteres herzustellendes photoaktives System ausgerichtet ist.

Mit dieser bevorzugten Ausführungsform lassen sich in bevorzugter Weise die beiden herzustellenden photoaktiven Systeme relativ zu sich selbst justieren. Insbesondere kann die Justage simultan erfolgen und muss insofern nicht sequenziell erfolgen. Dies hat den Vorteil, dass sich für die Herstellung mehrerer photoaktiver Systeme Herstellungszeit einsparen lässt. Für die Justage der mehreren photoaktiven Systeme werden Auswertebilder in der Abbildungsvorrichtung überlagert und abgeglichen.

Nach einer weiteren bevorzugten Fortbildung der Vorrichtung ist die erste Halteebene der ersten Haltevorrichtung gegenüber der Strahlendurchgangsebene mindestens einer der mindestens einen Abbildungsanordnung im Wesentlichen parallel und/oder gegenüber der Strahlendurchgangsebene mindestens einer anderen der mindestens einen Abbildungsanordnung nicht parallel beabstandet angeordnet. Insbesondere ist mindestens ein, insbesondere eine einzige mindestens eine Abbildungsanordnung derart angeordnet, dass deren optische Achse parallel, insbesondere konzentrisch zu der ersten und/oder zweiten Vorrichtungsachse ausgerichtet. Ferner ist es bevorzugt, dass mindestens eine der mindestens einen Abbildungsanordnung derart angeordnet ist, dass deren optische Achse gegenüber der ersten und/oder zweiten Vorrichtungsachse winklig angeordnet sind. Insbesondere ist die mindestens eine Abbildungsanordnung derart angeordnet, dass deren optische Achse sich im Arbeitszustand zentrisch durch die in der ersten und/oder zweiten Haltevorrichtung angeordnete Optikanordnung erstreckt. Insbesondere ist die mindestens eine Abbildungsanordnung derart angeordnet, dass deren optische Achse im Arbeitszustand die erste und/oder zweite Vorrichtungsachse in der angeordneten Optikanordnung schneidet.

Vorzugsweise ist eine einzige Abbildungsanordnung mit der Strahlendurchgangsebene im Wesentlichen parallel zu der ersten und/oder zweiten Haltebene der ersten und/oder zweiten Haltevorrichtung ausgerichtet angeordnet. Insbesondere ist deren optische Achse im Wesentlichen konzentrisch zu der ersten und/oder zweiten Vorrichtungsachse ausgerichtet. Eine solche Anordnung ist insbesondere zur translatorischen Justage der Optikanordnung zu der photoaktiven Anordnung entlang der optischen Achse der einzigen Abbildungsanordnung geeignet. Ferner kann es bevorzugt sein, dass die Abbildungsvorrichtung eine oder mehrere Abbildungsanordnungen aufweist, deren Strahlendurchgangseben jeweils im Wesentlichen winklig zu der ersten und/oder zweiten Halteebene ausgerichtet angeordnet sind. Eine solche bevorzugte Anordnung ist insbesondere zur rotatorischen Justage der Optikanordnung zu der photoaktiven Anordnung geeignet. Vorzugsweise sind die gegenüber der ersten und/oder zweiten Haltevorrichtung winklig angeordneten Abbildungsanordnungen insbesondere bezogen auf die erste und/oder zweite Halteebene in einem Winkel von mindestens 0° und maximal von 90° angeordnet. Insbesondere weisen die winklig zu der ersten und/oder zweiten Halteebene ausgerichtet angeordneten Abbildungsanordnungen einen im Wesentlichen selben Abstand zu der ersten und/oder zweiten Haltevorrichtung auf. Ferner ist es bevorzugt, dass die winklig zu der ersten und/oder zweiten Halteebene ausgerichtet angeordneten Abbildungsanordnungen auf einer Kreisbahn angeordnet sind. Die Kreisbahn kann eine konstante oder eine variierende Krümmung aufweisen. Insbesondere ist die Kreisbahn eine Ellipse. Vorzugsweise sind die auf der Kreisbahn angeordneten Abbildungsanordnungen im Wesentlichen mit einem im Wesentlichen selben Abstand zueinander beabstandet. Insbesondere können die auf der Kreisbahn angeordneten Abbildungsanordnungen bezogen auf einen Mittelpunkt der Kreisbahn in einem Winkel von 30°, 45°, 60°, 90 oder 120° zueinander angeordnet sein. Es können auch andere Winkel bevorzugt sein. Insbesondere hängt der Winkel von dem herzustellenden photoaktiven System ab. Vorzugsweise hängt der Winkel von einem Öffnungswinkel, d.h. der numerischen Apertur der Optikanordnung des herzustellenden photoaktiven Systems und einer Geometrie der photoaktiven Anordnung des photoaktiven Systems ab sowie den Positionen der Justagemarken.

Gemäß einer weiter bevorzugten Ausführungsform der Vorrichtung umfasst die mindestens eine Abbildungsvorrichtung ein Abbildungsmodul, in der die Strahlendurchgangsebene angeordnet ist und das die optische Achse aufweist, wobei das Abbildungsmodul ausgebildet ist, in Richtung der zweiten Halteebene entlang der optischen Achse im Unendlichen oder im Endlichen mit einer zweiten Brennweite in einer zweiten Brennebene abzubilden und in einer entgegengesetzten Richtung im Unendlichen oder im Endlichen mit der ersten Brennweite in der ersten Brennebene abzubilden; und/oder eine Strahlquelleneinheit, die elektromagnetischen Strahlen zur Erzeugung und zur Erfassung des Auswertebilds bereitstellt; und/oder eine Strahlteilereinheit, die zumindest einen Teil der elektromagnetischen Strahlen der Strahlquelleneinheit in Richtung des herzustellenden photoaktiven Systems umlenkt; und/oder eine Bilderfassungseinheit, die ausgebildet ist, das Auswertebild des herzustellenden photoaktiven Systems zu erfassen, wobei die Bilderfassungseinheit zur Erfassung des Auswertebilds des herzustellenden photoaktiven Systems in der ersten Brennebene des Abbildungsmoduls angeordnet ist; und/oder eine Diffusoreinheit zur Streuung der elektromagnetischen Strahlen der Strahlquelleneinheit; und/oder eine Filtereinheit zur Filterung elektromagnetischer Strahlen mit einer zu filternden Wellenlänge; und/oder eine Teststrukturvorrichtung zur Erzeugung einer Teststruktur auf der photoaktiven Anordnung des herzustellenden photoaktiven Systems, die von der photoaktiven Anordnung reflektiert und als Auswertebild in der Abbildungsvorrichtung erfasst und ausgewertet wird. Dies hat insbesondere den Vorteil, dass sich photoaktive Systeme mit einer photoaktiven Anordnung herstellen lassen, die einen geringen Kontrast und/oder eine spiegelnde Oberfläche aufweisen. Insbesondere kann eine solche bevorzugte Ausführungsform für die Signalverarbeitung bevorzugt sein.

Das Abbildungsmodul kann ein oder mehrere Abbildungselemente umfassen. Ein Abbildungselement kann eine Linse sein. Insbesondere kann die Linse eine sphärische und/oder asphärische und/oder freigeformte Linse sein. Beispielsweise sind als sphärische Linsen Sammellinsen, Menisken und Zerstreuungslinsen bekannt. Bevorzugte Sammellinsen sind beispielsweise eine bikonvexe, eine plankonvexe oder eine konkav-konvexe Linse. Bevorzugte Zerstreuungslinsen sind beispielsweise eine konvex-konkave, eine plankonkave oder bikonkave Linse. Vorzugsweise umfasst das Abbildungsmodul eine Sammellinse. Insbesondere ist das Abbildungsmodul ausgebildet, die elektromagnetischen Strahlen der Strahlquelleneinheit in ein paralleles elektromagnetisches Strahlenbündel zu wandeln und reflektierte elektromagnetische Strahlen der photoaktiven Anordnung als Objektiv zur Erfassung des Auswertebilds in der ersten Brennebene zu bündeln. Vorzugsweise umfasst das Abbildungsmodul ein Festbrennweiten-Objektiv.

Eine Strahlteilereinheit kann bevorzugt eine Glasscheibe sein. Die Glasscheibe kann beispielsweise in einem Winkel von 45° zu der optischen Achse eingebracht werden. Ein Strahlteiler ist ausgebildet, einen Teil der elektromagnetischen Strahlen an der Glasscheibe zu reflektieren, wobei ein übriger Teil die Glasscheibe durchdringt. Durch Aufbringung einer geeigneten teilreflektierenden Beschichtung auf die Glasscheibe kann der elektromagnetische Strahl vorzugsweise auf zwei elektromagnetische Strahlen gleicher Intensität aufgeteilt werden. Eine solche Strahlteilereinheit ist auch als halbdurchlässiger Spiegel bekannt. Ferner umfasst die Strahlteilereinheit vorzugsweise ein Wedge-Prisma, ein Pellicle, ein Doppelprisma und/oder ein Pentaprisma.

Die Strahlquelleneinheit ist vorzugsweise eine im Wesentlichen punktförmige Lichtquelle. Vorzugsweise ist die Strahlquelleneinheit eine LED, eine Lichtleitfaser oder eine Glühwendel. Besonders bevorzugt erzeugt die Strahlquelleneinheit monochromatische elektromagnetische Strahlen. Insbesondere ist die Strahlquelleneinheit eine Lichtquelle sichtbaren Lichts. Die Strahlquelleneinheit ist insbesondere ausgebildet, elektromagnetische Strahlen über den Strahlteiler der Abbildungsvorrichtung in den Strahlengang einzukoppeln. Insbesondere treten derart eingekoppelte elektromagnetische Strahlen über die Strahldurchgangsebene aus der Abbildungsvorrichtung aus und von der photoaktiven Anordnung reflektiert über die Strahldurchgangsebene in die Abbildungsvorrichtung wieder ein.

Die Diffusoreinheit ist ausgebildet, elektromagnetische Strahlen zu streuen. Insbesondere ist die Diffusoreinheit ausgebildet, das herzustellende photoaktive System gleichmäßig zu beleuchten. Vorzugsweise ist die Diffusoreinheit in der Brennebene B1 angeordnet. Insbesondere kann die Vorrichtung ergänzend und/oder alternativ zu der Diffusoreinheit eine schlitzstrukturierte Scheibe aufweisen.

Die Filtereinheit ist ausgebildet, elektromagnetischer Strahlen einer bestimmten Wellenlänge zu filtern. Insbesondere ist die Filtereinheit vorzugsweise ausgebildet, elektromagnetische Strahlen lediglich in einem schmalbandinge Wellenlängenbereich nicht zu filtern. Ein schmalbandiger Wellenlängenbereich liegt bevorzugt zwischen mindestens 10nm, 20nm, 50nm, 100nm oder 200nm und maximal 10nm, 20nm, 50nm, 100nm oder 200nm. Insbesondere ist die Filtereinheit ausgebildet, langwellige elektromagnetische Strahlen zu filtern. Insbesondere ist die Filtereinheit ausgebildet, elektromagnetische Strahlen mit einer Wellenlänge im ultraviolett-Bereich und kleiner nicht zu filtern. Eine solche Filtereinheit, die lediglich elektromagnetischen Strahlen in einem schmalbandingen Wellenlängenbereich nicht filtert und/oder eine Filtereinheit, die elektromagnetische Strahlen mit einer Wellenlänge im ultraviolett-Bereich und kleiner nicht filtert, ermöglicht Abbilden eines Auswertebilds mit einer wesentlich höheren Abbildungsschärfe. Insbesondere lassen sich mit solch einer Filtereinheit Strukturen der photoaktiven Anordnung oder einer Teststruktur mit einer wesentlich höheren Abbildungsschärfe abbilden, erfassen und/oder auswerten. Die Filtereinheit ist insbesondere zwischen der Strahlquelleneinheit und der Strahlteilereinheit angeordnet. Ergänzend oder alternativ kann die Filtereinheit insbesondere zwischen der Strahlteilereinheit und der Bilderfassungseinheit angeordnet sein.

Die von der Teststrukturvorrichtung erzeugten Teststrukturen sind insbesondere Testbilder. Die Teststrukturvorrichtung koppelt die Teststrukturen in den Strahlengang der elektromagnetischen Strahlen ein. Die Teststrukturvorrichtung ist insbesondere ausgebildet, die Teststruktur zu erzeugen, die die Optikanordnung des herzustellenden photoaktiven Systems auf der photoaktiven Anordnung des herzustellenden photoaktiven Systems abbildet. Vorzugsweise ist die Teststrukturvorrichtung zwischen der Strahlquelleneinheit und der Strahlteilereinheit angeordnet. Vorzugsweise ist die Teststrukturvorrichtung in der Brennebene B1 angeordnet. Insbesondere kann die Teststrukturvorrichtung in der Brennebene des Abbildungsmoduls angeordnet sein.

Vorzugsweise ist zwischen der Teststrukturvorrichtung und der Strahlquelleneinheit die Diffusoreinheit angeordnet. Insbesondere sind die Diffusoreinheit und die Teststrukturvorrichtung in der ersten Brennebene des Abbildungsmoduls zur Seite der Strahlquelleneinheit hinter dem Strahlteiler angeordnet. Insbesondere kann die Teststrukturvorrichtung auf einer Oberfläche der Diffusoreinheit ausgebildet sein, die sich vorzugsweise in der ersten Brennebene des Abbildungsmoduls zur Seite der Strahlquelleneinheit hinter dem Strahlteiler befindet. Vorzugsweise ist die Teststrukturvorrichtung entlang der elektromagnetischen Strahlen neben der Diffusoreinheit angeordnet.

Vorzugsweise umfasst die Lichtquelleneinheit und/oder die Bilderfassungseinheit und/oder Strahlteilereinheit die Teststrukturvorrichtung. Ferner kann es bevorzugt sein, dass die Teststrukturvorrichtung eine von der Abbildungsvorrichtung separate Vorrichtung ist. Dies kann insbesondere für herzustellende photoaktive Systeme relevant sein, die projizierende photoaktive Systeme sind.

Gemäß einer weiter bevorzugten Ausführungsform der Vorrichtung umfasst die Abbildungsvorrichtung einen Kollimator, vorzugsweise einen fokussierbaren Kollimator, und insbesondere einen Autokollimator. Eine solche bevorzugte Ausführungsform basiert insbesondere auf einem üblichen Aufbau für eine Abbildungsvorrichtung. Insoweit ist dies bevorzugte Ausführungsform besonders kostengünstig und einfach zu bedienen.

In einer weiteren bevorzugten Fortbildung umfasst die Bilderfassungseinheit eine Kamera zur Erfassung des von dem herzustellenden elektrooptischen System erzeugten Auswertebilds der jeweiligen mindestens einen Abbildungsanordnung; und/oder insbesondere ein Leistungselektronikmodul zur Verarbeitung und Übertragung des von der Bilderfassungseinheit erfassten jeweiligen Auswertebilds; und/oder insbesondere einen Bildsensor zur Erfassung des von dem herzustellenden elektrooptischen System erzeugten jeweiligen Auswertebilds.

Die Kamera umfasst insbesondere einen Bildsensor, der in einer Abbildungsebene angeordnet ist. Der Bildsensor ist insbesondere ein Chip. Die Kamera ist insbesondere derart angeordnet, dass die Abbildungsebene orthogonal zu der optischen Achse ausgerichtet angeordnet ist. Ferner kann die Kamera derart angeordnet sein, dass die Abbildungsebene im Wesentlichen nicht orthogonal zu der ersten und/oder zweiten Vorrichtungsachse angeordnet ist.

Insbesondere ist die Bilderfassungseinheit gegenüber dem Abbildungsmodul ortsfest angeordnet. Vorzugsweise ist die Kamera derart gegenüber dem Abbildungsmodul angeordnet, dass die Abbildungsebene mit der ersten Brennweite beabstandet zu dem Abbildungsmodul angeordnet ist. Insbesondere ist die Kamera derart gegenüber dem Abbildungsmodul angeordnet, dass die erste Brennebene des Abbildungsmoduls in der Abbildungsebene der Kamera liegt. Vorzugsweise ist der Bildsensor derart gegenüber dem Abbildungsmodul angeordnet, dass die Abbildungsebene mit der ersten Brennweite beabstandet zu dem Abbildungsmodul angeordnet ist. Insbesondere ist der Bildsensor derart gegenüber dem Abbildungsmodul angeordnet, dass die erste Brennebene des Abbildungsmoduls in der Abbildungsebene des Bildsensors liegt.

Ferner bevorzugt sind die Bilderfassungseinheit und das Abbildungsmodul gegenüber der zweiten Haltevorrichtung ortsfest angeordnet. In dieser bevorzugten Ausführung kann das herzustellende photoaktive System durch ein Verstellen der ersten Haltevorrichtung hergestellt, insbesondere justiert und/oder montiert und/oder geprüft werden.

Diese bevorzugte Ausführung hat insbesondere den Vorteil, das photoaktive System herzustellen, insbesondere zu justieren, ohne die photoaktive Anordnung des photoaktiven Systems an eine elektrische Energieversorgung und/oder an eine Steuerung zur Signalübertragung anzuschließen.

Das Leistungselektronikmodul kann insbesondere ausgebildet sein, das zu erfassende Auswertebild der photoaktiven Anordnung des herzustellenden photoaktiven Systems zu erfassen. Vorzugsweise ist das Leistungselektronikmodul ausgebildet, das erfasste Auswertebild auszuwerten. Insbesondere ist das Leistungselektronikmodul ausgebildet, eine Abbildungsschärfe des erfassten Auswertebilds zu bestimmen. Ferner ist das Leistungselektronikmodul insbesondere ausgebildet, ein Signal zur Ausrichtung der ersten Haltevorrichtung gegenüber der zweiten Haltevorrichtung zu generieren. Das Signal zur Ausrichtung wird insbesondere in Abhängigkeit des jeweils erfassten Auswertebilds generiert. Das Signal zur Ausrichtung ist insbesondere ein Stellsignal. Die Auswertung des erfassten Auswertebilds erfasst insbesondere die Auswertung der Abbildungsschärfe. Die Auswertung ist vorzugsweise eine Modulationstransferfunktion. Das Leistungselektronikmodul umfasst zur Auswertung des zu erfassenden Auswertebilds vorzugsweise ein Application Specific Integrated Circuit (ASIC) und/oder ein Field Programmable Gate Array (FPGA) und/oder einen Mikrocontroller (PIC). Insbesondere ist das Leistungselektronikmodul ausgebildet, ein Stellsignal in Abhängigkeit der Auswertung für eine Stellvorrichtung zur Verstellung einer Lage und/oder Position der ersten und/oder zweiten Haltevorrichtung gegenüber der Strahlendurchgangsebene der mindestens einen Abbildungsanordnung bereitzustellen.

Insbesondere ist das Leistungselektronikmodul ausgebildet, eine Differenz zwischen einer Position einer ersten Teststruktur und einer zweiten Teststruktur zu bestimmen. Die Position der ersten Teststruktur ergibt sich aus einem simultan erfassten und/oder gespeicherten Auswertebild eines photoaktiven Systems nach der Justage. Die zweite Teststruktur ergibt sich aus dem erfassten zweiten Auswertebild des noch herzustellenden weiteren photoaktiven Systems. Insbesondere umfasst die Auswertung des Auswertebildes auch die Auswertung der Differenz zwischen der Position der ersten und zweiten Teststruktur. Insbesondere umfasst die Auswertung auch das Bilden einer Vektordifferenz zwischen realen und/oder virtuellen Teststrukturen der erfassten Auswertebilder.

Es ist zu verstehen, dass das Leistungselektronikmodul im Kontext der Anmeldung insbesondere die schnelle Signalverarbeitung und Generierung von Stell- und Regelsignalen zur schnelleren Ausführung einer Justage betrifft. Vergleichbare Leistungselektronikmodule sind beispielsweise Autofokuseinheiten von Spiegelreflexkameras. Das Leistungselektronikmodul ermöglicht insbesondere ein schnelles Ausführen von Mess-, Regelungs- und Steuervorgängen.

Das Leistungselektronikmodul ist vorzugsweise signaltechnisch mit der Kamera und/oder einer Stellvorrichtung zur Verstellung einer Lage und/oder Position der ersten und/oder zweiten Haltevorrichtung gegenüber der Strahlendurchgangsebene der mindestens einen Abbildungsanordnung verbunden. Insbesondere kann das Leistungselektronikmodul in der Kamera integriert sein.

Insbesondere kann die Bilderfassungseinheit ein Autofokusfunktionsmodul umfassen, welches ausgebildet ist, zur Auswertung des erfassten Auswertebilds und zur Bereitstellung eines Stellsignals in Abhängigkeit der Auswertung für die Stellvorrichtung zur Verstellung der Lage und/oder Position der ersten und/oder zweiten Haltevorrichtung gegenüber der Strahlendurchgangsebene der mindestens einen Abbildungsanordnung.

Gemäß einer weiteren bevorzugten Ausführungsform umfasst die erfindungsgemäße Vorrichtung die Stellvorrichtung zur Verstellung der Lage und/oder der Position der ersten Halteebene der ersten Haltevorrichtung und/oder der zweiten Halteebene der zweiten Haltevorrichtung gegenüber der Strahlendurchgangsebene der mindestens einen Abbildungsanordnung; wobei die Stellvorrichtung vorzugsweise eine Antriebsvorrichtung aufweist. Insbesondere umfasst die Antriebsvorrichtung mindestens einen piezoelektrischen Antrieb und/oder einen elektromagnetischen Antrieb und/oder eine Parallelkinematik.

Die Stellvorrichtung ist ausgebildet, die Lage und die Position der ersten und zweiten Haltevorrichtung zueinander einzustellen. Insbesondere ist die Stellvorrichtung ausgebildet, die Lage und die Position einer bewegbar angeordneten ersten Haltevorrichtung gegenüber einer ortsfest angeordneten zweiten Haltevorrichtung einzustellen. Ferner ist die Stellvorrichtung bevorzugt ausgebildet, die Lage und die Position einer ortsfest angeordneten ersten Haltevorrichtung gegenüber einer bewegbar angeordneten zweiten Haltevorrichtung einzustellen. Ferner kann bevorzugt sein, dass die Stellvorrichtung ausgebildet ist, die Lage und die Position einer bewegbar angeordneten ersten Haltevorrichtung gegenüber einer bewegbar angeordneten zweiten Haltevorrichtung einzustellen. Insbesondere kann es bevorzugt sein, dass die erste Haltevorrichtung translatorischen bewegbar angeordnet ist und die zweite Haltevorrichtung rotatorisch bewegbar angeordnet ist oder vice versa. Insbesondere ist die Stellvorrichtung mit der jeweils bewegbar angeordneten Haltevorrichtung verbunden.

Im Arbeitszustand der Vorrichtung ist die Stellvorrichtung insbesondere ausgebildet, die Lage und die Position der in der ersten Haltevorrichtung gehaltenen Optikanordnung und der in der zweiten Haltevorrichtung gehaltenen photoaktiven Anordnung zueinander einzustellen. Vorzugsweise ist die zweite Haltevorrichtung im Arbeitszustand gegenüber der Abbildungsvorrichtung ortsfest angeordnet und die erste Haltevorrichtung gegenüber der Abbildungsvorrichtung und der zweiten Haltevorrichtung bewegbar angeordnet. In dieser bevorzugten Anordnung ist die Stellvorrichtung ausgebildet die Lage und die Position der ersten Haltevorrichtung gegenüber der zweiten Haltevorrichtung durch das Bewegen der ersten Haltevorrichtung einzustellen.

Die Stellvorrichtung weist vorzugsweise eine oder mehrere Achsen auf. Die eine oder mehreren Achsen können gestapelt angeordnet sein. Insbesondere sind die eine oder mehrere Achsen Linearachsen und/oder goniometrische Achsen. Die eine oder mehrere Achsen sind vorzugsweise jeweils orthogonal zueinander ausgerichtet. Insbesondere kann die Stellvorrichtung eine Parallelkinematik aufweisen oder sein, die ein verschieben, insbesondere ein freies verschieben eines Pivot-Punktes ermöglicht. Insbesondere kann die Stellvorrichtung eine Parallelkinematik sein oder umfassen. Insbesondere ist die Parallelkinematik ein Hexapod.

Bevorzugt ist die Stellvorrichtung ferner ausgebildet, die erste und/oder zweite Haltevorrichtung ortsfest in einer Position und einer Lage zu halten, insbesondere in der Position und Lage, in der die Optikanordnung gegenüber der photoaktiven Anordnung ausgerichtet ist, dass die photoaktive Anordnung mit einem Auswertebild mit einer geforderten Abbildungsqualität abgebildet wird. Insbesondere ist die Stellvorrichtung ausgebildet, mehrere Optikanordnungen und/oder photoaktive Anordnungen zur Erfassung eines oder mehrerer Auswertebilder zu halten.

In dieser bevorzugten Ausführungsform lässt sich das photoaktive System in besonders geeigneter Weise schnell, genau und kostengünstig herstellen.

In einer weiteren bevorzugten Fortbildung umfasst die Vorrichtung eine Lagervorrichtung, die ausgebildet ist, in dem Arbeitszustand die erste Haltevorrichtung und/oder die zweite Haltevorrichtung gegenüber der Abbildungsvorrichtung translatorisch und/oder rotatorisch zu lagern; und/oder die Antriebsvorrichtung, die ausgebildet ist, in dem Arbeitszustand die erste Haltevorrichtung und/oder die zweite Haltevorrichtung translatorisch und/oder rotatorisch anzutreiben.

Vorzugsweise ist die Lagervorrichtung ausgebildet, die erste Haltevorrichtung und/oder die zweite Haltevorrichtung gegenüber der Abbildungsvorrichtung translatorisch und/oder rotatorisch bewegbar zu lagern. Insbesondere sind die Lagervorrichtung und/oder die Antriebsvorrichtung ausgebildet, die Haltevorrichtung entlang einer, zwei oder drei Linearachsen translatorisch zu lagern und/oder zu bewegen und/oder rotatorisch um die eine, zwei oder drei Linearachsen zu lagern und/oder zu bewegen. Vorzugsweise sind die zwei oder die drei Linearachsen orthogonal zueinander ausgerichtet angeordnet. Insbesondere sind die Lagervorrichtung und/oder die Antriebsvorrichtung derart ausgebildet, dass die Lagervorrichtung und/oder die Antriebsvorrichtung bis zu sechs Freiheitsgrade aufweisen. Die Lagervorrichtung und/oder die Antriebsvorrichtung können auch mehr als sechs Freiheitsgrade aufweisen.

Insbesondere sind die Lagervorrichtung und/oder die Antriebsvorrichtung dazu ausgebildet, zwei oder mehr in der ersten und/oder der zweiten Haltevorrichtung angeordnete Optikanordnungen und/oder photoaktive Anordnungen unabhängig voneinander translatorisch und/oder rotatorisch zu lagern und/oder anzutreiben.

Gemäß einer weitere bevorzugten Ausführungsform umfasst die erfindungsgemäße Vorrichtung ferner eine Fügevorrichtung, die ausgebildet ist, die photoaktive Anordnung und die Optikanordnung miteinander zu verbinden, insbesondere miteinander fügend zu verbinden. Die Fügevorrichtung ist insbesondere ausgebildet eine schweißende, lötende und/oder klebende Verbindung zwischen der Optikanordnung und der photoaktiven Anordnung herzustellen. Insbesondere ist die Fügevorrichtung für ein UV-Kleben ausgebildet. Vorzugsweise umfasst die Fügevorrichtung eine UV-Klebeeinheit.

In einer weiteren bevorzugten Fortbildung umfasst die Vorrichtung eine Auswertevorrichtung zur Auswertung des erfassten Auswertebilds der mindestens einen Abbildungsanordnung, wobei die Auswertevorrichtung vorzugsweise mit der Abbildungsvorrichtung, insbesondere der Bilderfassungseinheit, und/oder der Stellvorrichtung und/oder der Fügevorrichtung signaltechnisch gekoppelt ist; und/oder insbesondere ein Leistungselektronikmodul zur Verarbeitung und Übertragung des von der jeweiligen Bilderfassungseinheit erfassten Auswertebilds aufweist; und/oder insbesondere eine Steuereinheit zur Steuerung der Stellvorrichtung in Abhängigkeit eines Ergebnisses der Auswertung des erfassten jeweiligen Auswertebilds und/oder zur Steuerung der Fügevorrichtung aufweist; wobei die Steuereinheit insbesondere ein Autofokusfunktionsmodul zur automatisierten Fokussierung der Vorrichtung in dem Arbeitszustand umfasst.

Die Auswerteeinheit ist vorzugsweise ausgebildet, folgende Schritte durchzuführen: Erfassen des jeweiligen Auswertebilds; und/oder Auswerten des jeweiligen Auswertebilds; und/oder Ermitteln eines oder mehrerer Stellsignale zur Steuerung der ersten und/oder zweiten Haltevorrichtung in Abhängigkeit eines Ergebnisses der Auswertung des jeweiligen Auswertebilds; und/oder Bereitstellen des einen oder der mehreren Stellsignale zur Ansteuerung. Insbesondere umfasst das Auswerten des jeweiligen Auswertebilds das Auswerten der Abbildungsschärfe des jeweiligen Auswertebilds. Das Auswerten der Abbildungsschärfe umfasst insbesondere das Transformieren des Auswertebilds in einen Frequenzbereich und die Analyse des Frequenzbereichs des Auswertebilds. Insbesondere erfolgt die Transformation der Abbildungsschärfe mit der Fouriertransformation.

Insbesondere ist die Auswerteinheit ausgebildet, die von der Abbildungsvorrichtung erfassten Auswertebild des herzustellenden photoaktiven Systems auszuwerten und insbesondere Justagemarken außerhalb der photoaktiven Anordnung bzw. im Randbereich der photoaktiven Anordnung zu detektieren und Stellbefehle abzuleiten. Insbesondere ist die Auswerteeinheit ausgebildet, den Schritt Erzeugen einer Beleuchtung durchzuführen.

Insbesondere ist das Leistungselektronikmodul zur Auswertung des jeweiligen Auswertebilds ausgebildet. Insbesondere umfasst das Leistungselektronikmodul die Merkmale, Funktionen und sonstigen Eigenschaften des zuvor beschriebenen Leistungselektronikmoduls, welches die Bilderfassungseinheit vorzugsweise umfasst. Es kann bevorzugt sein, dass sowohl die Bilderfassungseinheit als auch die Auswerteeinheit ein Leistungselektronikmodul aufweisen.

Insbesondere ist die Steuereinheit ausgebildet, das eine oder die mehreren Stellsignale zur Steuerung der Stellvorrichtung der ersten und/oder zweiten Haltevorrichtung zu bestimmen und/oder der Stellvorrichtung, insbesondere der Antriebsvorrichtung signaltechnisch bereitzustellen.

Die Datenauswerteeinheit ist oder umfasst eine digitale Datenverarbeitungseinheit, beispielsweise einen Personal Computer, eine Arbeitsstation, eine Echtzeitmaschinensteuerung und/oder eine elektronische Schaltung.

Gemäß einem zweiten Aspekt der Erfindung wird die Aufgabe gelöst nach Anspruch 13.

Das Verfahren zur Herstellung photoaktiver Systeme, insbesondere zur Herstellung eines deaktivierten photoaktiven Systems, eines elektrooptischen und/oder optoelektronischen Systems, insbesondere für ein projizierendes und/oder abbildendes elektrooptisches System, umfasst die folgenden Schritte: Bereitstellen einer Vorrichtung gemäß dem ersten Aspekt der Erfindung und/oder dessen bevorzugte Ausführungsformen; und/oder Bereitstellen und Anordnen von zwei oder mehr photoaktiven Anordnungen in der zweiten Haltevorrichtung; und Bereitstellen und Anordnen von zwei oder mehr Optikanordnungen in der ersten Haltevorrichtung.

In einer ersten bevorzugten Ausführungsform umfasst das Verfahren zur Herstellung des photoaktiven Systems insbesondere die folgenden Schritte: Justieren der Optikanordnung gegenüber der photoaktiven Anordnung; und/oder Montieren der gegenüber der photoaktiven Anordnung justierten Optikanordnung; und/oder Prüfen der gegenüber der photoaktiven Anordnung montierten Optikanordnung.

Der Schritt des Justierens umfasst insbesondere folgende Schritte: Bereitstellen eines elektromagnetischen Strahls zum Abbilden eines Auswertebilds des herzustellenden photoaktiven Systems in der jeweils mindestens einen Abbildungsanordnung; und/oder Abbilden des Auswertebilds des herzustellenden photoaktiven Systems in der jeweils mindestens einen Abbildungsanordnung; und/oder Erfassen des Auswertebilds in der jeweils mindestens einen Abbildungsanordnung; und/oder Auswerten des jeweils erfassten Auswertebilds; und/oder Verstellen der ersten Haltevorrichtung mit der darin angeordneten Optikanordnung und/oder der zweiten Haltevorrichtung mit der darin angeordneten photoaktiven Anordnung in Abhängigkeit der Auswertung des jeweils erfassten Auswertebilds. Es ist zu verstehen, dass die Schritte des Justierens insbesondere iterativ durchlaufen werden.

Das Verfahren umfasst insbesondere den Schritt: Bestimmen einer Abbildungsgüte, insbesondere einer Abbildungsschärfe, des erfassten Auswertebilds der mindestens einen Abbildungsanordnung.

Das Auswerten des Auswertebilds umfasst insbesondere das Auswerten einer Abbildungsschärfe des von der jeweiligen Abbildungsanordnung erfassten Auswertebilds. Das Auswerten der Abbildungsschärfe erfolgt insbesondere durch Analyse der Modulationstransferfunktion der Abbildungsschärfe des mit der jeweiligen Abbildungsanordnung erfassten Auswertebilds. Weiterhin umfasst das Auswerten vorzugsweise das Identifizieren und/oder das Erfassen der Randbereiche der photoaktiven Anordnung. Das Identifizieren umfasst insbesondere ein Erkennen einer oder mehrerer Kanten oder der Justagemarken in unmittelbarer Umgebung der photoaktiven Anordnung in Abhängigkeit der Auswertung des Auswertebildes.

Insbesondere umfasst das Auswerten mit einer Vorrichtung, die eine Abbildungsvorrichtung mit zwei oder mehreren Abbildungsanordnungen aufweist, wobei eine erste Abbildungsanordnung zu einer ersten und/oder zweiten Haltevorrichtung derart ausgerichtet ist, dass die Strahldurchgangsebene im Wesentlichen parallel zu der ersten und/oder zweiten Halteebene angeordnet ist, und die anderen Abbildungsanordnung zu einer ersten und/oder zweiten Haltevorrichtung derart ausgerichtet sind, dass deren jeweilige Strahldurchgangsebene zu der ersten und/oder zweiten Halteebene winklig angeordnet ist, ein Auswerten der Abbildungsschärfe durch Analyse der Modulationstransferfunktion der Abbildungsschärfe des mit der ersten Abbildungsanordnung erfassten Auswertebilds zum Bestimmen eines oder mehrerer Stellsignale für ein translatorisches Verstellen der ersten und/oder zweiten Haltevorrichtung entlang einer oder mehrerer Achsen; und/oder ein Auswerten der Abbildungsschärfe durch Analyse der Modulationstransferfunktion der Abbildungsschärfe der mit den anderen Abbildungsanordnungen erfassten Auswertebildern zum Bestimmen eines oder mehrerer Stellsignale für ein rotatorisches Verstellen der ersten und/oder zweiten Haltevorrichtung um die eine oder mehreren Achsen.

Das Verstellen der ersten Haltevorrichtung mit der darin angeordneten Optikanordnung und/oder der zweiten Haltevorrichtung mit der darin angeordneten photoaktiven Anordnung erfolgt insbesondere in Abhängigkeit der Auswertung einer bestimmten Abbildungsschärfe des jeweils erfassten Auswertebilds. Insbesondere kann das Verstellen der ersten und/oder zweiten Haltevorrichtung von der Auswertung mehrerer Auswertebilder abhängen, die von mehreren Abbildungsanordnungen erfasst wurden. Insbesondere erfolgt das Verstellen der ersten und/oder der zweiten Haltevorrichtung translatorisch entlang einer oder mehreren Achsen und/oder rotatorisch um die eine oder mehreren Achsen.

Vorzugsweise erfolgt der Schritt des Verstellens der ersten und/oder zweiten Haltevorrichtung mehrschrittig. Insbesondere kann das Verstellen ein Verstellen der ersten oder zweiten Haltevorrichtung entlang einer oder mehrerer translatorischer Achsen erfolgen. Ferner kann das Verstellen der ersten und/oder zweiten Haltevorrichtung um eine oder mehrere Achsen rotatorisch erfolgen.

Das Verstellen kann insbesondere in Abhängigkeit von der Abbildungsgüte eines einzigen Auswertebilds oder in Abhängigkeit der jeweiligen Abbildungsgüte mehrerer Auswertebilder erfolgen. Insbesondere erfolgt der Schritt des rotatorischen Verstellens der ersten und/oder zweiten Haltevorrichtung in Abhängigkeit der Abbildungsschärfe der erfassten Auswertebilder aus Randbereichen der photoaktiven Anordnung. Vorzugsweise erfolgt der Schritt des translatorischen Verstellens in zwei Raumrichtungen orthogonal zur ersten und/oder zweiten Vorrichtungsachse der ersten und/oder zweiten Haltevorrichtung insbesondere in Abhängigkeit der erfassten Auswertebilder, vorzugsweise der Position von einer oder mehreren Referenzmarken, die nicht auf der photoaktiven Anordnung und/oder Optikanordnung angeordnet sind oder einer oder mehreren Kanten der photoaktiven Anordnung. Insbesondere erfolgt der Schritt des rotatorischen Verstellens der ersten und/oder zweiten Haltevorrichtung insbesondere in Abhängigkeit der Auswertung der Abbildungsschärfe in den Randbereichen des herzustellenden optischen Systems der erfassten Auswertebilder, insbesondere Abbildungsanordnungen, deren Strahlendurchgangsebene nicht parallel zu der ersten und/oder zweiten Halteebene ausgerichtet ist, erfassen Auswertebilder der Randbereiche der photoaktiven Anordnung. Aus der Differenz der Abbildungsgüte der Auswertebilder aus den Randbereichen der photoaktiven Anordnung ergibt sich das Stellsignal für das rotatorische Verstellen der ersten und/oder zweiten Haltevorrichtung. Insbesondere mit Justagemarken, die vorzugsweise unmittelbar neben der photoaktiven Anordnung angeordnet sind, lassen sich die Optikanordnung und photoaktive Anordnung des herzustellenden photoaktiven Systems in translatorischer Richtung zueinander justieren. Ergänzend oder alternativ kann es bevorzugt sein, hierzu die Kanten der photoaktiven Anordnung zu verwenden. Hierzu wird deren Position und/oder Lage vorzugsweise durch Auswerten des jeweils erfassten Auswertebilds mit der Auswerteeinheit ausgewertet und eine Korrekturbewegung errechnet und durchgeführt. Die Korrekturbewegung kann durch eine translatorische und/oder rotatorische Bewegung erfolgen. Die Korrekturbewegung kann eine Überlagerung mehrerer translatorischer und/oder mehrerer rotatorische Bewegungen umfassen.

Der Schritt des Montierens umfasst vorzugsweise den Schritt des Verbindens, insbesondere des Fügens, der Optikanordnung mit der photoaktiven Anordnung. Der Schritt des Verbindens umfasst insbesondere das stoffschlüssige und/oder kraftschlüssige und/oder formschlüssige Verbinden. Vorzugsweise umfasst der Schritt des Verbindens ein Kleben und Härten, insbesondere UV-Härten.

Der Schritt des Prüfens umfasst bevorzugt folgende Schritte: Bereitstellen eines elektromagnetischen Strahls zum Abbilden eines Auswertebilds des herzustellenden photoaktiven Systems in der jeweils mindestens einen Abbildungsanordnung; und/oder Abbilden des Auswertebilds des justierten und/oder montierten photoaktiven Systems in der jeweils mindestens einen Abbildungsanordnung; und/oder Erfassen des Auswertebilds in der jeweils mindestens einen Abbildungsanordnung; und/oder Auswerten des jeweils erfassten Auswertebilds.

Ferner ist bevorzugt, dass das Verfahren zur Herstellung des photoaktiven Systems ein Verfahren der Abbildungsvorrichtung umfasst, um mehrere relativ zueinander herzustellende photoaktive Systeme nacheinander und/oder simultan herzustellen. Das Verfahren der Abbildungsvorrichtung ist insbesondere ein Bewegen der Abbildungsvorrichtung im Wesentlichen parallel zu der ersten und/oder zweiten Halteebenen der ersten und/oder zweiten Haltevorrichtung. Ferner kann bevorzugt sein, dass das Verfahren der Abbildungsvorrichtung insbesondere ein Bewegen der Abbildungsvorrichtung im Wesentlichen orthogonal zu der ersten und/oder zweiten Halteebenen der ersten und/oder zweiten Haltevorrichtung ist. Insbesondere ist das Verfahren der Abbildungsvorrichtung ein translatorisches und/oder rotatorisches Bewegen der Abbildungsvorrichtung gegenüber der ersten und/oder zweiten Halteebenen der ersten und/oder zweiten Haltevorrichtung.

In einer weiteren bevorzugten Ausführungsform umfasst das Erfassen des Auswertebilds in der mindestens einen Abbildungsanordnung folgende Schritte: Anordnen der Optikanordnung gegenüber der Abbildungsvorrichtung und/oder der photoaktiven Anordnung im Unendlichen; und/oder Anordnen der Optikanordnung gegenüber der Abbildungsvorrichtung und/oder der photoaktiven Anordnung in einer Sollposition und/oder einer Solllage. Insbesondere lässt sich die Optikanordnung gegenüber der Abbildungsvorrichtung und/oder der photoaktiven Anordnung in der Sollposition und/oder der Solllage durch Einstellen eines oder mehrerer Offsetwerte anordnen.

In einer ferner bevorzugten Fortbildung umfasst das Auswerten des jeweils erfassten Auswertebilds folgende Schritte: Bestimmung eines Frequenzgangs des erfassten Auswertebilds; und/oder Abgleichen des erfassten Auswertebildes mit einem erfassten Auswertebild eines bereits nach dem zuvor beschriebenen Verfahren justierten und/oder montierten photoaktiven Systems; wobei insbesondere die Auswertebilder simultan oder sequenziell in der jeweils mindestens einen Abbildungsanordnung erfasst werden; wobei insbesondere das Abgleichen der simultan erfassten Auswertebilder auf einer physikalischen Überlagerung in der jeweils mindestens einen Abbildungsanordnung beruht; und/oder insbesondere das Abgleichen der simultan oder sequenziell erfassten Auswertebilder auf einer virtuellen Überlagerung in der jeweils mindestens einen Abbildungsanordnung beruht; und/oder Abgleichen des erfassten Auswertebildes und/oder des bestimmten Frequenzgangs des erfassten Auswertebildes mit einem gewünschten Sollzustand; und/oder Erzeugen eines Stellsignals zum Verstellen der ersten und/oder zweiten Haltevorrichtung in Abhängigkeit des Abgleichs des erfassten Auswertebildes mit einem erfassten Auswertebild eines bereits nach dem zuvor beschriebenen Verfahren justierten und/oder montierten photoaktiven Systems und/oder des erfassten Frequenzgangs und/oder eines bestimmten Offsets; und/oder des Abgleichs des erfassten Auswertebildes mit dem gewünschten Sollzustand, sofern das erfasste Auswertebild dem gewünschten Sollzustand nicht entspricht; und/oder des Abgleichs des bestimmten Frequenzgangs des erfassten Auswertebildes mit dem gewünschten Sollzustand, sofern der Frequenzgang des erfassten Auswertebildes dem gewünschten Sollzustand nicht entspricht.

Insbesondere ist zu verstehen, dass das Verfahren zur Herstellung iterativ durchlaufen wird bis das erfasste Auswertebild und/oder der bestimmte Frequenzgang des erfassten Auswertebildes dem gewünschten Sollzustand entspricht. Vorzugsweise ist das Justageverfahren des photoaktiven Systems abgeschlossen, wenn das erfasste Auswertebilde und/oder der bestimmte Frequenzgang des erfassten Auswertebildes dem gewünschten Sollzustand entspricht. Entspricht das erfasste Auswertebilde und/oder der bestimmte Frequenzgang des erfassten Auswertebildes nicht dem gewünschten Sollzustand, ist insbesondere bevorzugt, dass die Schritte zur Justage des photoaktiven Systems erneut bzw. wiederholt durchlaufen werden. Insofern ist das Verfahren zur Justage eines photoaktiven Systems insbesondere als iteratives Verfahren zur Justage eines photoaktiven Systems zu verstehen.

Ein gewünschter Sollzustand ist insbesondere eine gewünschte Anordnung einer Optikanordnung gegenüber einer photoaktiven Anordnung des herzustellenden, insbesondere des zu justierenden, photoaktiven Systems. Vorzugsweise ist der gewünschte Sollzustand ein gewünschter Frequenzgang und/oder eine gewünschte Abbildungsschärfe die mit dem herzustellenden photoaktiven System, insbesondere dem zu justierenden photoaktiven System, erreicht werden soll. Vorzugsweise ist der gewünschte Sollzustand ein gewünschter Sollzustandsbereich mit einer oberen und einer davon verschiedenen unteren Sollzustandsgrenze. Insbesondere entspricht das erfasste Auswertebild und/oder der Frequenzgang des erfassten Auswertebildes dem gewünschten Sollzustand, wenn das erfasste Auswertebild und/oder der Frequenzgang des erfassten Auswertebildes innerhalb des gewünschten Sollzustandsbereichs liegt, insbesondere zwischen der oberen und unteren Sollzustandsgrenze liegt.

Diese bevorzugte Ausführungsform umfasst insbesondere den Schritt des Simulierens zum Bestimmen des einen oder der mehreren Offsetwerte. Der eine oder die mehreren Offsetwerte werden insbesondere vor Beginn der Herstellung des photoaktiven Systems bestimmt, beispielsweise durch einen Optikdesigner. **In** besonders vorteilhafter Weise ist in dieser bevorzugten Ausführungsform ein Prüfen gemäß der zuvor beschriebenen bevorzugten Ausführungsform entbehrlich. Die Sollposition und/oder die Solllage sind insbesondere die Position und/oder die Lage der ersten Haltevorrichtung gegenüber der zweiten Haltevorrichtung und/oder gegenüber der mindestens einen Abbildungsanordnung bei der die Abbildungsschärfe des Auswertebilds in der jeweiligen mindestens einen Abbildungsanordnung maximal ist.

Gemäß einer weiteren bevorzugten Ausführungsform ist das Verfahren dadurch gekennzeichnet, dass die photoaktive Anordnung des herzustellenden photoaktiven Systems während des Justierens und/oder Montierens und/oder Prüfens deaktiviert ist.

Gemäß einem dritten Aspekt der Erfindung wird die Aufgabe gelöst nach Anspruch 17.

Ein Aspekt betrifft die Verwendung einer Vorrichtung gemäß einer der zuvor beschriebenen bevorzugten Ausführungsformen zur Herstellung photoaktiver Systeme, insbesondere zur Herstellung eines deaktivierten photoaktiven Systems, eines elektrooptischen und/oder optoelektronischen Systems, für ein projizierendes und/oder abbildendes elektrooptisches System. Insbesondere ist die Verwendung einer Vorrichtung in einer der zuvor beschriebenen bevorzugten Ausführungsformen zur Justage und/oder Montage und/oder Prüfung eines photoaktiven Systems umfasst. Ferner ist die Verwendung einer Vorrichtung in einer der zuvor beschriebenen bevorzugten Ausführungsformen zur Justage und/oder Montage und/oder Prüfung eines deaktivierten photoaktiven Systems geeignet.

Zu den Vorteilen, Ausführungsvarianten und Ausführungsdetails dieser weiteren Aspekte der Erfindung und ihrer Fortbildungen wird auch auf die vorangegangene Beschreibung zu den entsprechenden Merkmalen der Vorrichtung zur Herstellung eines photoaktiven Systems bzw. der jeweiligen anderen Aspekte verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

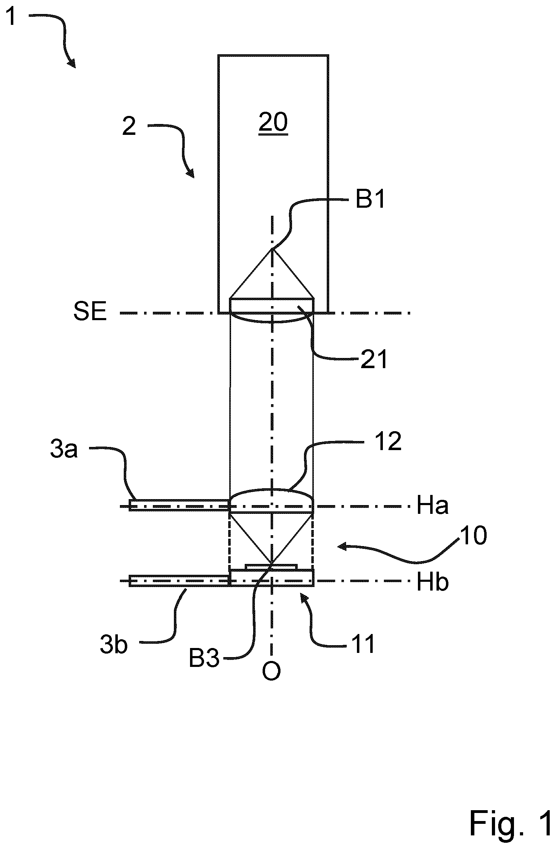

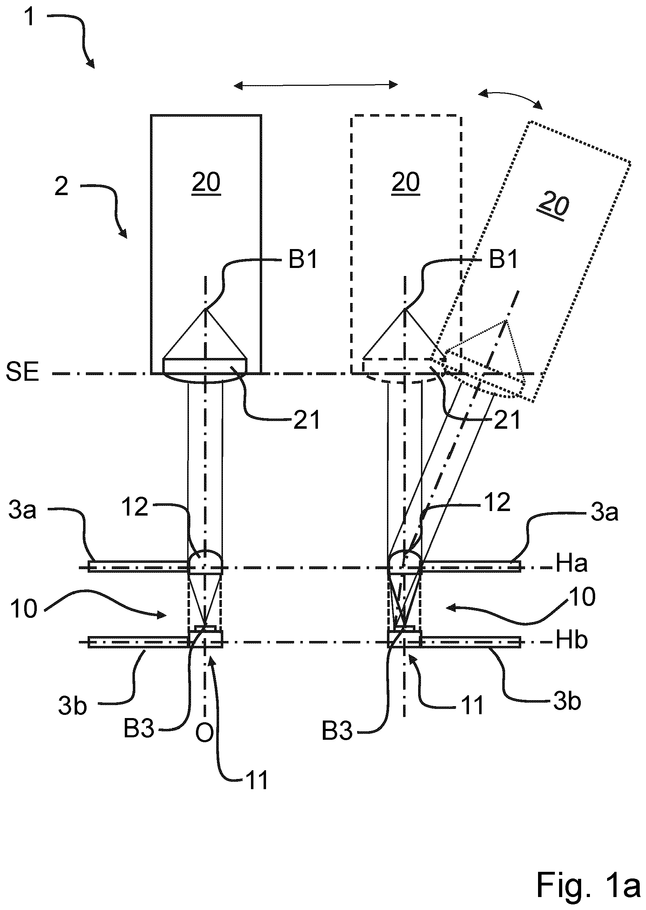

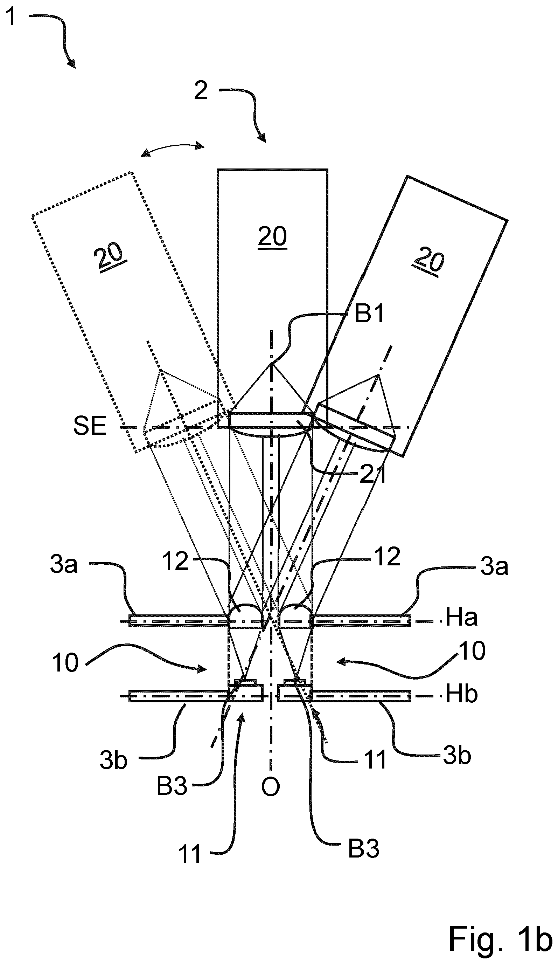

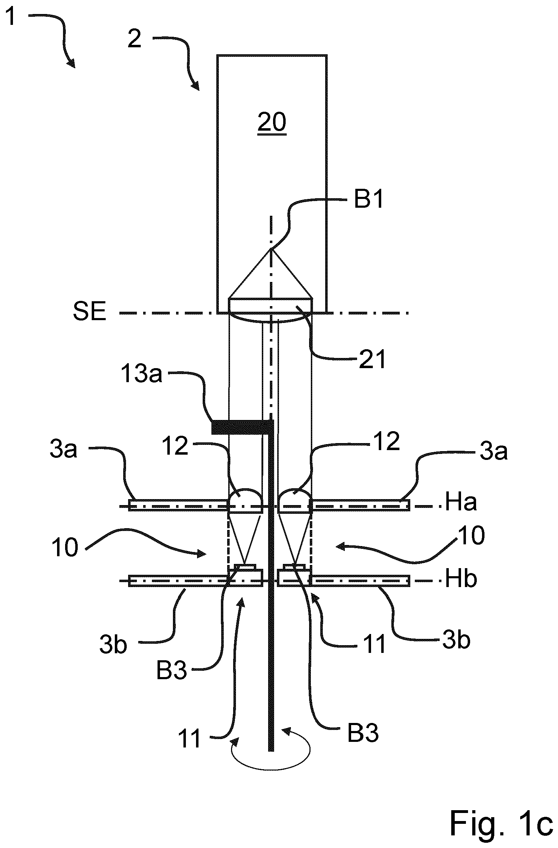

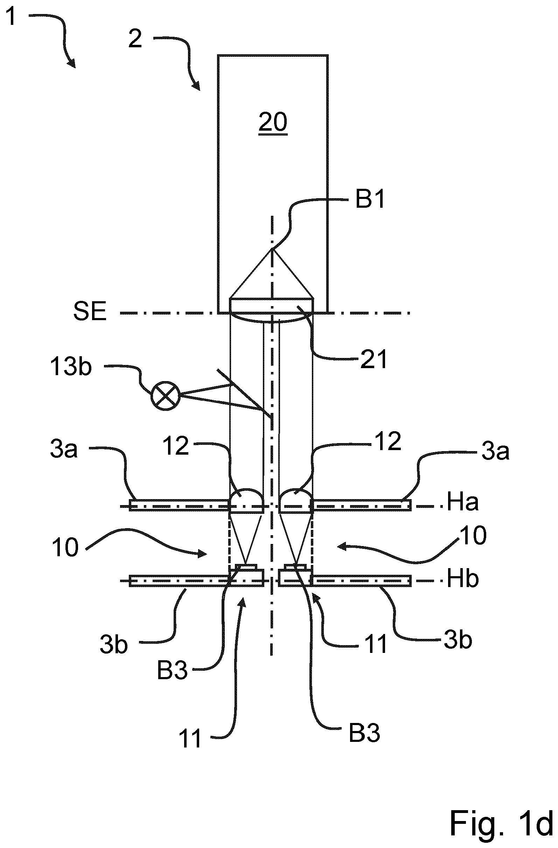

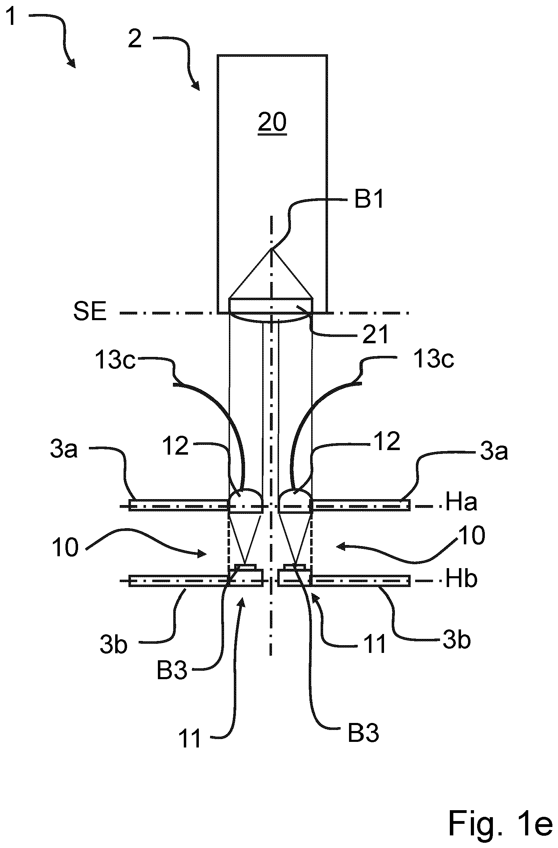

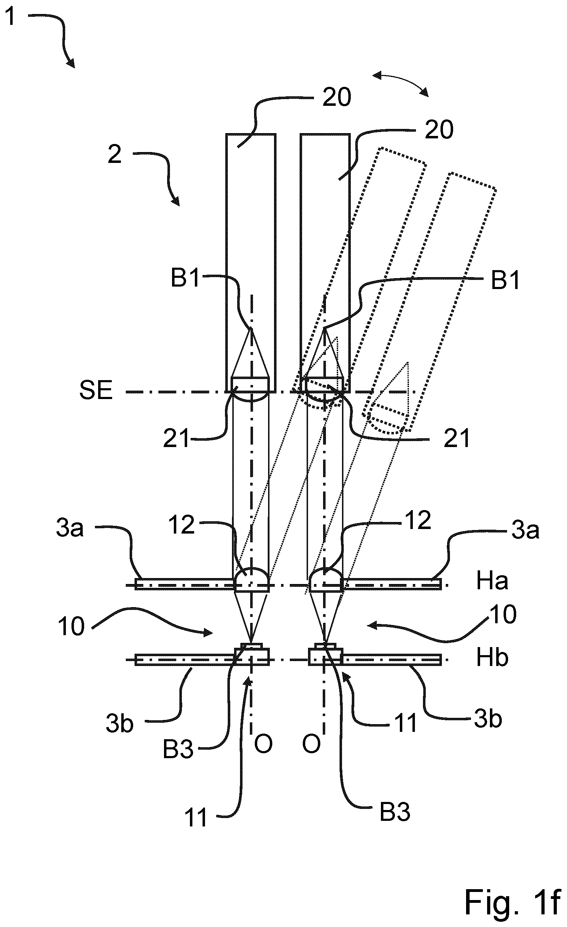

Bei den Ausführungsbeispielen gemäß Figuren 1, 1c-e, 2 bis 6 handelt es sich nicht um einen Teil der Erfindung, sondern diese dienen dazu, das Verständnis der Erfindung gemäß den Gegenständen der Ansprüche 1, 13 und 17 zu erleichtern.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine schematische Darstellung einer Seitenansicht einer Vorrichtung zur Herstellung eines photoaktiven Systems;
- Fig. 1a: eine schematische Darstellung einer Seitenansicht einer Vorrichtung in einer bevorzugten Ausführungsform zur Herstellung eines photoaktiven Systems;
- Fig. 1b: eine schematische Darstellung einer Seitenansicht einer Vorrichtung in einer weiteren bevorzugten Ausführungsform zur Herstellung eines photoaktiven Systems;
- Fig. 1c-e: eine schematische Darstellung verschiedener Vorrichtungen zur abwechselnden Beleuchtung von zweier herzustellender photoaktiver Systeme;
- Fig. 1f: eine schematische Darstellung einer Seitenansicht einer Vorrichtung in einer weiteren bevorzugten Ausführungsform zur Herstellung eines photoaktiven Systems;
- Fig. 2: eine schematische Darstellung einer Seitenansicht einer Vorrichtung zur Herstellung eines photoaktiven Systems;
- Fig. 3: eine schematische Darstellung einer Seitenansicht einer Vorrichtung zur Herstellung eines photoaktiven Systems;
- Fig. 4: eine schematische Darstellung einer Seitenansicht einer Vorrichtung zur Herstellung eines photoaktiven Systems;
- Fig. 5: eine schematische Darstellung einer Draufsicht der Vorrichtung zur Herstellung des photoaktiven Systems gemäß Figur 4;
- Fig. 6: eine schematische Darstellung einer Draufsicht einer photoaktiven Anordnung eines herzustellenden photoaktiven Systems;
- Fig. 7: ein schematisches Ablaufdiagramm eines ersten bevorzugten Verfahrens zur Herstellung eines photoaktiven Systems;
- Fig. 8: ein schematisches Ablaufdiagramm eines weiteren bevorzugten Verfahrens zur Herstellung eines photoaktiven Systems;

Figur 1 zeigt eine schematische Darstellung einer Vorrichtung 1 zur Herstellung eines photoaktiven Systems 10 in einer Seitenansicht.

Die schematisch dargestellte Vorrichtung 1 umfasst eine Abbildungsvorrichtung 2 und eine erste und zweite Haltevorrichtung 3a, 3b. Die Abbildungsvorrichtung 2 umfasst in dieser bevorzugten Ausführungsform eine einzige Abbildungsanordnung 20. Diese Abbildungsanordnung 20 weist eine Strahlendurchgangsebene SE auf, zu der im Wesentlichen orthogonal eine optische Achse O ausgerichtet angeordnet ist. Die erste und zweite Haltevorrichtung 3a, 3b weisen jeweils eine erste und zweite Halteebene Ha, Hb auf, die im Wesentlichen parallel zu der Strahlendurchgangsebene SE ausgerichtet sind. Insbesondere ist die erste Haltevorrichtung 3a mit der ersten Halteebene Ha mit einem ersten Abstand A1 zu der Strahlendurchgangsebene SE beabstandet angeordnet. Die zweite Haltevorrichtung 3b mit der zweiten Halteebene Hb ist mit einem zweiten Abstand A2 zu der ersten Halteebene Ha beabstandet angeordnet.

Figur 1 zeigt die Vorrichtung 1 im Arbeitszustand. In dem Arbeitszustand sind in der jeweiligen Haltevorrichtung 3a, 3b bereits eine photoaktive Anordnung 11 des herzustellenden photoaktiven Systems 10 und eine Optikanordnung 12 des photoaktiven Systems 10 angeordnet. Die Optikanordnung 12 ist dabei gegenüber der Abbildungsvorrichtung 2 im Unendlichen angeordnet und bildet die photoaktive Anordnung 11 in das Unendliche ab. Die photoaktive Anordnung 11 und die Optikanordnung 12 wurden der jeweiligen Haltevorrichtung 3a, 3b in einem vorgelagerten Prozessschritt, im Logistikzustand der Vorrichtung 1, zugeführt. Insbesondere sind die Optikanordnung 12 und die photoaktive Anordnung im Arbeitszustand, zur Herstellung eines deaktivierten photoaktiven Systems, nicht mit einem oder mehreren elektronischen Kontakten zur Energieversorgung und/oder Datenübertragung kontaktiert. In der in Figur 1 schematisch dargestellten bevorzugten Ausführungsform sind in der ersten Haltevorrichtung 3a die Optikanordnung 12 und in der zweiten Haltevorrichtung 3b die photoaktive Anordnung 11 angeordnet. Sowohl die erste als auch zweite Haltevorrichtung 3a, 3b sind ausgebildet, die Optikanordnung 12 und/oder die photoaktive Anordnung 11 haltend aufzunehmen. Insbesondere werden die Optikanordnung 12 und/oder die photoaktive Anordnung 11 im Arbeitszustand kraft- und/oder formschlüssig in der jeweiligen Haltevorrichtung 3a, 3b angeordnet bzw. von dieser aufgenommen. Beispielsweise umfasst die jeweilige Haltevorrichtung einen Klemmbackengreifer und/oder einen Vakuumgreifer zum Halten der Optikanordnung 12 bzw. der photoaktiven Anordnung 11 in der jeweiligen Haltevorrichtung 3a, 3b.

Die Abbildungsanordnung 20 der in Figur 1 schematisch dargestellten Vorrichtung 1 weist ein Abbildungsmodul 21 auf, welches im Wesentlichen in der Strahlendurchgangsebene SE angeordnet und konzentrisch zu der optischen Achse O ausgerichtet ist. In dieser bevorzugten Ausführungsform ist das Abbildungsmodul 21 eine Sammellinse. In der in Figur 1 dargestellten bevorzugten Ausführungsform ist das Abbildungsmodul 21 ausgebildet, elektromagnetische Strahlen entlang der optischen Achse O in einer Richtung der ersten bzw. zweiten Halteebene Ha, Hb im Unendlichen abzubilden. In einer der Richtung entgegengesetzten Richtung, von der ersten bzw. zweiten Halteebene Ha, Hb weg, ist das Abbildungsmodul 21 ausgebildet, elektromagnetische Strahlen entlang der optischen Achse O im Endlichen in einer ersten Brennebene B1 des Abbildungsmodul 21 abzubilden.

Die Optikanordnung 12 des herzustellenden photoaktiven Systems 10 ist eine Sammellinse und die photoaktive Anordnung 11 des herzustellenden photoaktiven Systems 10 ist ein auf einem Träger angeordneter Bildsensor. Die erste und zweite Haltevorrichtung 3a, 3b sind insbesondere derart ausgebildet, dass die in dem Arbeitszustand in der jeweiligen Haltevorrichtungen 3a, 3b angeordnete Sammellinse 11 und der Bildsensor 12 im Wesentlichen in der jeweiligen Halteebene Ha, Hb gehalten angeordnet sind. Die Sammellinse ist insbesondere ausgebildet, die von der Abbildungsanordnung 20 austretenden elektromagnetischen Strahlen in Richtung der zweiten Halteebene Hb in einer dritten Brennebene B3 zu fokussieren. Insbesondere ist der Bildsensor der photoaktiven Anordnung 11 in der zweiten Halteebene Hb ausgerichtet angeordnet. Vorzugsweise wird im Arbeitszustand zur Herstellung des photoaktiven Systems die erste Haltevorrichtung 3a mit der darin angeordneten Sammellinse 12 und die zweite Haltevorrichtung 3b mit der darin angeordneten photoaktiven Anordnung 12 derart zueinander ausgerichtet, dass der zweite Abstand A2 im Wesentlichen der Brennweite der Sammellinse 12 des herzustellenden photoaktiven Systems 10 entspricht, d.h. die dritte Brennebene B3 der Sammellinse 12 in dem Bildsensor der photoaktiven Anordnung 11 in der zweiten Halteebene Hb liegt.

Die in Figur 1 schematisch dargestellte Abbildungsanordnung 20 ist ausgebildet, elektromagnetische Strahlen zu erzeugen. Die elektromagnetischen Strahlen verlassen die Abbildungsordnung 20 durch das in der Strahlendurchgangsebene SE angeordnete Abbildungsmodul 21. Das Abbildungsmodul 21 der Abbildungsanordnung 20 ist ausgebildet, die elektromagnetischen Strahlen im Unendlichen abzubilden. Die Abbildungsanordnung 20 ist ferner ausgebildet, die von dem Bildsensor der photoaktiven Anordnung 11 reflektierten und von der Sammellinse 12 in Richtung der Strahlendurchgangsebene SE im Unendlichen fokussierten elektromagnetischen Strahlen zur Abbildung eines Auswertebilds mit dem Abbildungsmodul 21 in einer ersten Brennebene B1 zu fokussieren und das Auswertebild zu erfassen. In Abhängigkeit einer Abbildungsgüte des erfassten Auswertebilds wird im Arbeitszustand die erste Haltevorrichtung 3a mit der dort angeordneten Sammellinse 12 zu der zweiten Haltevorrichtung 3b mit dem dort angeordneten Bildsensor der photoaktiven Anordnung 11 hinsichtlich einer Lage und einer Position justiert.

Zur Justage ist die erste Haltevorrichtung 3a der in der in Figur 1 schematisch dargestellten Vorrichtung 1 gegenüber der Abbildungsvorrichtung 2 und der zweiten Haltevorrichtung 3b bewegbar angeordnet und die Abbildungsvorrichtung 2 und die zweite Haltevorrichtung 3b sind ortsfest angeordnet. Die erste Haltevorrichtung 3a ist insbesondere translatorisch entlang der optischen Achse O und rotatorisch um die optische Achse O bewegbar. Ferner ist die erste Haltevorrichtung 3a entlang zwei weiteren Achsen (nicht gezeigt) translatorisch und um diese rotatorisch bewegbar. Die optische Achse O und die zwei weiteren Achsen sind jeweils orthogonal zueinander ausgerichtet. Die Lage und/oder Position der Sammellinse zu dem Bildsensor kann durch translatorisches Bewegen der ersten Haltevorrichtung 3a entlang einer der drei Achsen und/oder durch rotatorisches Bewegen um eine der drei Achsen eingestellt werden. Wenn in einer Lage und/oder Position der photoaktiven Anordnung 11 zu der Optikanordnung 12 eine genwünschte Abbildungsgüte erzielt wird, ist die Vorrichtung 1 ausgebildet, die erste Haltevorrichtung 3a gegenüber der zweiten Haltevorrichtung 3b für die Montage, d.h. das Verbinden der Optikanordnung 12 mit der photoaktiven Anordnung 11, in der Lage und/oder Position ortsfest zu halten.

Figuren 1a bis 1f zeigen Ausführungsformen der Vorrichtung. Die in der Figuren 1a bis 1f dargestellten Ausführungsformen der Vorrichtung basieren auf der in Figur 1 dargestellten Ausführungsform der Vorrichtung. Die in den Figuren 1a bis 1f weisen im Unterschied zu der in Figur 1 dargestellten Ausführungsform zwei erste Haltevorrichtungen 3a und zwei zweite Haltevorrichtungen 3b auf. Die in den Figuren 1a bis 1f dargestellten Vorrichtungen sind zur Herstellung von zwei photoaktiven Systemen ausgebildet.

Die in Figur 1a dargestellte Vorrichtung 1 weist eine verfahrbare Abbildungsvorrichtung 2 auf. Die Abbildungsvorrichtung 2 ist im Wesentlichen parallel zu der ersten und/oder zweiten Halteebene Ha, Hb der ersten und/oder zweiten Haltevorrichtung 3a, 3b verfahrbar. Zunächst wird das in Figur 1a links dargestellte photoaktive System 10 hergestellt. Wurde das linke photoaktive System hergestellt, wird die Abbildungsvorrichtung 2 von einer linken Position (durchgängige Linie) nach rechts in eine rechte Position (gestrichelte Linie) gefahren zur Herstellung des zweiten photoaktiven Systems 10 relativ zu dem bereits hergestellten, in Figur 1a links dargestellten, ersten photoaktiven System. Hierzu wird ein von dem bereits hergestellten photoaktiven System 10 gespeichertes Abbild virtuell mit einem Abbild des noch herzustellenden photoaktiven Systems 10 überlagert und in Abhängigkeit davon wird das noch herzustellende photoaktive System über die erste und/oder zweite Haltevorrichtung 3a, 3b justiert.

Ferner kann die in Figur 1a dargestellte Abbildungsvorrichtung 2, insbesondere die mindestens eine Abbildungsanordnung 20 der Abbildungsvorrichtung 2, gegenüber dem herzustellenden photoaktiven System 10 orbital geschwenkt werden. In Figur 1a ist in der rechten Position (gepunktete Linie) eine geschwenkte Abbildungsanordnung 20 schematisch dargestellt.

Die in Figur 1b dargestellte Vorrichtung 1 ist ausgebildet mit der Abbildungsvorrichtung zwei herzustellende photoaktive Systeme simultan zu erfassen. Es kann vorgesehen sein, dass die Abbildungsanordnung 20 der Abbildungsvorrichtung 2 verfahrbar, insbesondere schwenkbar ist. In Figur 1b ist eine orbital geschwenkte Position schematisch für eine der beiden Abbildungsanordnungen 20 der Abbildungsvorrichtung 2 dargestellt (gepunktete Linie) dargestellt. Selbstverständlich kann auch bevorzugt sein, dass auch die zweite Abbildungsanordnungen 20 der Abbildungsvorrichtung 2 geschwenkt wird. In dieser bevorzugten Ausführungsform wird zunächst ein erstes photoaktives System (in Figur 1b links) hergestellt und anschließend - ohne dass hierzu die Abbildungsvorrichtung 2, wie in der in Figur 1a dargestellten Ausführungsform, verfahren werden müsste - ein zweites herzustellendes photoaktives System (in Figur 1b rechts) abgebildet. Hierzu wird ein erster Teil der mindestens einen Abbildungsanordnung 20 auf das erste herzustellende photoaktive System ausgerichtet und ein zweiter Teil der mindestens einen Abbildungsanordnung 20 auf ein zweites herzustellendes photoaktives System ausgerichtet. Der erste und zweite Teil der mindestens einen Abbildungsanordnung 20 entspricht insbesondere einem ersten und zweiten Teilbereich einer freien Apertur des Abbildungsmoduls 21 der jeweiligen Abbildungsanordnung 20, insbesondere einem ersten und zweiten Teilbereich einer freien Apertur einer als Sammellinse ausgebildeten Abbildungsanordnung 20.

Zur Herstellung der photoaktiven Systeme gemäß der in Figur 1b dargestellten Vorrichtung 1 ist vorgesehen, abwechselnd das linke und das rechte photoaktive System zu beleuchten und das Abbild des linken bereits justierten und/oder montierten photoaktiven Systems und das Abbild des rechten noch herzustellenden photoaktiven Systems in der Abbildungsvorrichtung, insbesondere physikalisch, zu überlagern und in Abhängigkeit davon das noch zu justierende und/oder zu montierende photoaktive System über die erste und/oder zweite Haltevorrichtung 3a, 3b zu justieren. Vorzugsweise umfasst eine Abbildungsanordnung 20 einer solchen Abbildungsvorrichtung 2 als Abbildungselement 21 eine Sammellinse.

Die Figuren 1c-1e zeigen am Beispiel einer Abbildungsvorrichtung 2 mit einer einzigen Abbildungsanordnung 20 verschiedene Ausführungen, um erstes (in der Figur links) und ein zweites (in der Figur rechts) photoaktives System abwechselnd zu beleuchten. Dieses Beleuchtungskonzept ist auch bei Vorrichtungen 1 anwendbar, deren Abbildungsvorrichtung 1 zwei oder mehr Abbildungsanordnungen 20 aufweist, wie dies beispielsweise in Figur 1b schematisch dargestellt ist.

Figur 1c zeigt eine Vorrichtung 1 mit einer rotierend gelagerten Abschattungseinheit 13a. Die rotierend gelagerte Abschattungseinheit 13a verdeckt abwechselnd das linke und das rechte photoaktive System vor den von der der Strahlquelleneinheit 22 (in Figur 1c nicht dargestellt) erzeugten elektromagnetischen Strahlen. Figur 1d zeigt eine bevorzugte schematische Ausführung der Vorrichtung 1, bei der eine Strahlenquelle 13b außerhalb der Abbildungsvorrichtung 1 angeordnet ist und deren elektromagnetische Strahlen z koaxial wischen der Strahlendurchgangsebene SE und der ersten Halteebene Ha derart eingekoppelt werden, so dass diese abwechselnd das linke und das rechte photoaktive System beleuchten. Figur 1d zeigt Vorrichtung 1, bei der das linke und das rechte photoaktive System abwechselnd mit Lichtleitfasern 13c beleuchtet werden, wobei das Licht der Lichtleitfasern vorzugsweise an der Optikanordnung 12 der herzustellenden photoaktiven Systeme 10 eingekoppelt wird.

Die Figur 1f dargestellte Vorrichtung 1 ist ausgebildet zwei herzustellende photoaktive Systeme 10 simultan zu erfassen. Hierzu weist die Abbildungsvorrichtung 2 in dieser bevorzugten Ausführungsform dargestellten Vorrichtung 1 weist zwei Abbildungsanordnungen 20 auf. In dieser bevorzugten Ausführung sind die beiden Abbildungsanordnungen 20 zueinander im Wesentlichen parallel angeordnet. Insbesondere sind die beiden Abbildungsanordnungen 20 der Abbildungsvorrichtung 2 derart angeordnet, dass die optischen Achsen O der beiden Abbildungsanordnungen 20 im Wesentlichen parallel zueinander ausgerichtet sind. Die in Figur 1c dargestellte Vorrichtung umfasst zwei Abbildungsanordnungen 20, deren optische Achsen O im Wesentlichen orthogonal zu der ersten und/oder zweiten Halteebene ausgerichtet sind. Es ist zu verstehen, dass es auch bevorzugt sein kann, die zwei Abbildungsanordnungen mit den optischen Achsen O geneigt gegenüber der ersten und/oder zweiten Halteebene Ha, Hb anzuordnen. Auch in dieser geneigten Ausrichtung der beiden Abbildungsanordnungen 20 sind deren optische Achsen O parallel zueinander ausgerichtet. In Figur 1f ist eine geschwenkte Position der Abbildungsvorrichtung 2 schematisch dargestellt (gepunktete Linie).

Mit der in Figur 1f dargestellten Vorrichtung 1 lassen sich insbesondere zwei photoaktive Systeme simultan herstellen. Mit einer Vorrichtung 1, die mehr als zwei Abbildungsanordnungen 20 und mehr als zwei erste und zweite Haltevorrichtungen 3a, 3b können allerdings auch mehr als zwei photoaktive Systeme hergestellt werden.

Für die Herstellung von zwei oder mehr photoaktiven Systemen ist vorgesehen, Abbilder der herzustellenden photoaktiven Systeme zu erfassen. Für die Herstellung des noch zu justierenden und/oder montierenden photoaktiven Systems wird ein Abbild des noch herzustellenden photoaktiven Systems mit einem Abbild des bereits hergestellten photoaktiven Systems virtuell überlagert. Die Ausrichtung des noch zu justierenden und/oder montierenden photoaktiven Systems 10, insbesondere der ersten und/oder zweiten Haltevorrichtung relativ zu dem bereits hergestellten photoaktiven System geschieht simultan. Dies hat den Vorteil, dass eine Speicherung der Abbilder entfällt und Herstellungszeit eingespart wird.

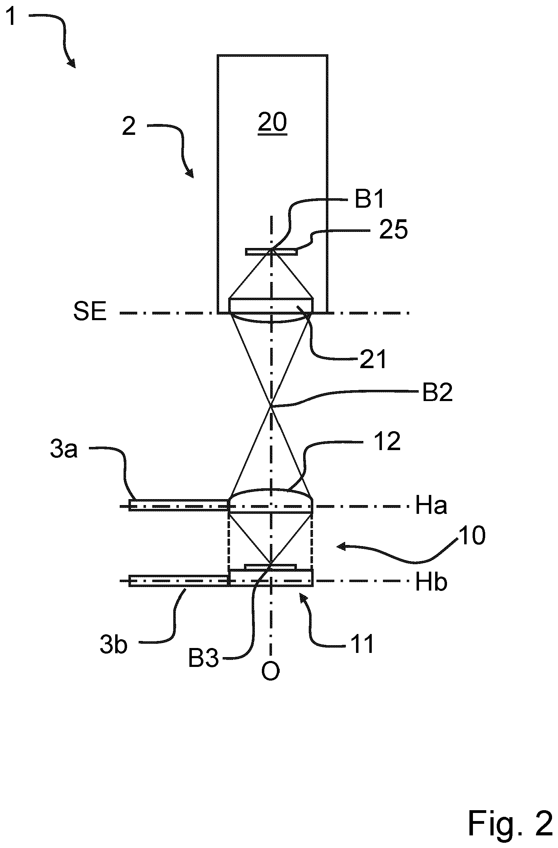

Figur 2 zeigt eine Vorrichtung 1 zur Herstellung eines photoaktiven Systems. Diese bevorzugte Ausführungsform der Vorrichtung 1 basiert auf der in Figur 1 schematisch dargestellten bevorzugten Ausführungsform der Vorrichtung 1, deren Abbildungsanordnung 20 mit dem Abbildungsmodul in Richtung der ersten bzw. zweiten Halteebene Ha, Hb im Unendlichen fokussiert. Die in Figur 2 schematisch dargestellte Vorrichtung 1 umfasst im Unterschied zu der in Figur 1 schematisch dargestellten Vorrichtung 1 eine Abbildungsanordnung 20 mit einem Abbildungsmodul 21, welches in Richtung der ersten bzw. zweiten Halteebene Ha, Hb im Endlichen in einer zweiten Brennebene B2 im Endlichen fokussiert. Die in Figur 2 schematisch dargestellte Vorrichtung 1 ist insbesondere zur Herstellung eines photoaktiven Systems geeignet, welches eine Optikanordnung 12 aufweist, die, im Arbeitszustand in der ersten Haltevorrichtung angeordnet, die von der photoaktiven Anordnung 11 reflektierten elektromagnetischen Strahlen in Richtung der Strahlendurchgangsebene SE in einer Brennebene fokussiert. In dieser Vorrichtung 1 ist die erste Haltevorrichtung 3a mit der im Arbeitszustand darin angeordneten Optikanordnung 12 gegenüber der Abbildungsanordnung derart angeordnet, dass die Brennebene der Optikanordnung in Richtung der Strahlendurchgangsebene SE der zweiten Brennebene B2 entspricht. Ferner weist die in Figur 2 schematisch dargestellte Vorrichtung eine Teststrukturvorrichtung 25. Eine solche Vorrichtung ist insbesondere zur Herstellung photoaktiver Systeme 10 geeignet, die eine kontrastarme bzw. spiegelnde photoaktive Anordnung 11 umfassen. Üblicherweise wird bei der dargestellten Vorrichtung der elektromagnetische Strahl vorzugsweise für die Beleuchtung und die Arbeit mit der Teststrukturvorrichtung geteilt (nicht dargestellt).

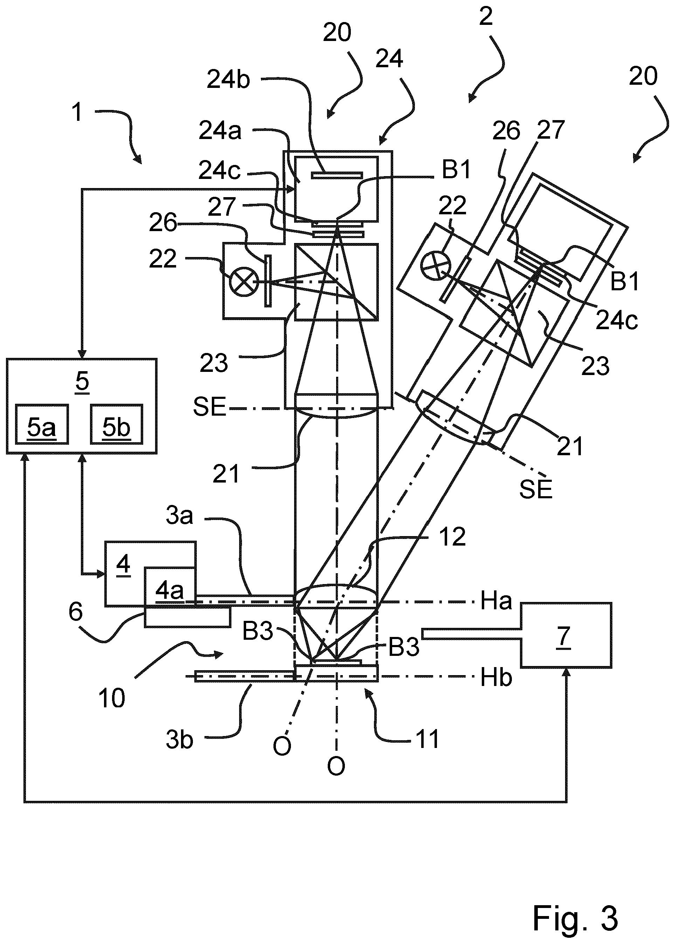

Die in Figur 3 schematisch dargestellte Vorrichtung 1 umfasst eine Abbildungsvorrichtung 2, eine erste und zweite Haltevorrichtung 3a, 3b, eine Stellvorrichtung 4, eine Auswertevorrichtung 5, eine Lagervorrichtung 6 und eine Fügevorrichtung 7.

Die in Figur 3 schematisch dargestellte Vorrichtung zur Herstellung eines photoaktiven Systems 10 umfasst eine Abbildungsvorrichtung 2 mit zwei gleichen Abbildungsanordnungen 20. Eine erste Abbildungsanordnung 20 ist gemäß der Abbildungsanordnung 20 der in Figur 1 schematisch Vorrichtung 1 angeordnet. Insbesondere sind die erste und zweite Haltevorrichtung 3a, 3b mit der ersten und zweiten Halteebene Ha, Hb gemäß der in Figur 1 schematisch dargestellten Vorrichtung angeordnet. Eine zweite Abbildungsanordnung 20 der Abbildungsvorrichtung 2 ist gegenüber der ersten Abbildungsanordnung 20, insbesondere gegenüber der ersten und/oder zweiten Halteebene Ha, Hb der jeweiligen Haltevorrichtung 3a, 3b winklig angeordnet. Die beiden Abbildungsanordnungen 20 umfassen ein Abbildungsmodul 21, eine Strahlquelleneinheit 22, eine Strahlteilereinheit 23, und eine Bilderfassungseinheit 24. Die Bilderfassungseinheit 24 umfasst eine Kamera 24a, eine Leistungselektronik 24b und einen Bildsensor 24c.

Die Strahlquelleneinheit 22 ist in dieser bevorzugten Ausführungsform eine punktförmige Strahlquelle elektromagnetischer Strahlen sichtbaren Lichts. Die Strahlquelleneinheit 22 kann in einer bevorzugten Ausführungsform auch nichtsichtbares Licht emittieren. Die von der Strahlquelleneinheit 22 erzeugten elektromagnetischen Strahlen treffen im Arbeitszustand auf die Strahlteilereinheit 23. Zwischen den Strahlteiler 23 und der Strahlquelleneinheit 22 ist eine Diffusoreinheit 26 zur Streuung der elektromagnetischen Strahlen angeordnet. Die Strahlteilereinheit 23 ist zwischen dem Abbildungsmodul 21 und der Bilderfassungseinheit 24 angeordnet. Die Strahlteilereinheit 23 lenkt einen Teil der elektromagnetischen Strahlen in Richtung des Abbildungsmoduls 21 um. Die von der Strahlquelleneinheit 22 erzeugten und von der Strahlteilereinheit 23 umgelenkten elektromagnetischen Strahlen treten durch das in der Strahlendurchgangsebene SE angeordneten Abbildungsmodul 21 aus der Abbildungsanordnung 20 aus. Das Abbildungsmodul 21 ist in der vorliegenden bevorzugten Ausführungsform der Vorrichtung 1 ausgebildet, die aus der Abbildungsanordnung austretenden elektromagnetischen Strahlen im Unendlichen zu fokussieren. Die im Unendlichen fokussierten elektromagnetischen Strahlen fokussiert die Optikanordnung 12 des herzustellenden photoaktiven Systems auf der photoaktiven Anordnung wie zu der in Figur 1 schematisch der Vorrichtung 1 zuvor beschrieben.

Das Abbildungsmodul 21 der Abbildungsanordnung 20 ist ferner ausgebildet, die im Arbeitszustand von der photoaktiven Anordnung 12 reflektierten elektromagnetischen Strahlen in einer ersten Brennebene B1 zu fokussieren. In der in Figur 2 schematisch dargestellten bevorzugten Ausführungsform der Vorrichtung 1 ist die Bilderfassungseinheit 24 der Abbildungsanordnung derart angeordnet, dass ein Bildsensor 24c der Bilderfassungseinheit 24 gegenüber dem Abbildungsmodul 21 derart angeordnet ist, dass der Bildsensor 24c der Bilderfassungseinheit 24 in der ersten Brennebene B1 des Abbildungsmoduls 21 liegt. Der Bildsensor 24c der Bilderfassungseinheit 24 erfasst das Auswertebild der von der photoaktiven Anordnung 11 reflektierten elektromagnetischen Strahlen. Zwischen die Strahlteilereinheit 23 und der Bilderfassungseinheit ist eine Filtereinheit 27 zum Filtern elektromagnetischer Strahlen mit bestimmter Wellenlänge. Insbesondere ist es bevorzugt, dass die Filtereinheit 27 kurzwelliges elektromagnetische Strahlen, insbesondere lediglich in einem schmalbandigen Wellenlängenbereich, in Richtung der Bilderfassungseinheit passieren lässt. Dies erhöht die Abbildungsschärfe oder einen Kontrast des jeweiligen Auswertebilds in vorteilhafter Weise. Das Leistungselektronikmodul 24b kann insbesondere ausgebildet sein, eine Abbildungsgüte des erfassten Auswertebilds zu ermitteln und in Abhängigkeit der ermittelten Abbildungsgüte ein oder mehrere Stellsignale zur Steuerung der Stellvorrichtung 4 bereitzustellen. Es kann bevorzugt sein, dass das Leistungselektronikmodul 24b unmittelbar signaltechnisch mit der Stellvorrichtung gekoppelt ist (nicht dargestellt). Insbesondere kann das Leistungselektronikmodul 24b das Stellsignal mit einer üblichen Autofokusfunktion einer Bilderfassungseinheit 24 ermitteln und der Stellvorrichtung 4 bereitstellen.

In der in Figur 3 schematisch dargestellte Vorrichtung 1 weist die Auswertevorrichtung 5 insbesondere eine integrierte elektronische Schaltung 5a und eine Steuereinheit 5b auf. Das Leistungselektronikmodul 24b ist ausgebildet, eine Abbildungsgüte des erfassten Auswertebilds zu ermitteln und in Abhängigkeit der ermittelten Abbildungsgüte ein oder mehrere Stellsignale zur Steuerung der Stellvorrichtung 4 bereitzustellen. Die Steuereinheit ist ausgebildet, das eine oder die mehreren Stellsignale an die signaltechnisch gekoppelte Stellvorrichtung 4 zu übertragen. Die Stellvorrichtung 4 umfasst eine Antriebsvorrichtung 4a, die vorzugsweise einen oder mehrere piezoelektrische oder elektromagnetische Aktoren umfasst. Andere Aktoren wären in dieser bevorzugten Ausführungsform ergänzend oder alternativ bevorzugt möglich. Die Antriebsvorrichtung 4a treibt in Abhängigkeit des einen oder mehreren Stellsignale die erste Haltevorrichtung 3a an. In Abhängigkeit der Stellsignale wird die Lage und/oder Position der ersten Haltevorrichtung 3a gegenüber der zweiten Haltevorrichtung 3b verändert, bis das Auswertebild der photoaktiven Anordnung 11 des herzustellenden photoaktiven Systems 10 gegenüber der Optikanordnung 12 des herzustellenden photoaktiven Systems 10 justiert ist, dass eine gewünschte Abbildungsgüte ermittelt wird.

Zur Justage der ersten Haltevorrichtung 3a gegenüber der zweiten Haltevorrichtung 3b umfasst die in Figur 3 schematisch dargestellte bevorzugte Ausführungsform der Vorrichtung 1 eine Lagervorrichtung, die ausgebildet ist, die erste Haltevorrichtung 3a derart zu lagern, dass die erste Haltevorrichtung 3a in dem Arbeitszustand die Optikanordnung entlang von drei orthogonal zueinander ausgerichteten Achsen translatorisch und um diese drei Achsen rotatorisch bewegen kann. Zur Justage kann bevorzugt sein, dass die erste Haltevorrichtung 3a translatorisch einstellbar ist und die zweite Haltevorrichtung rotatorisch einstellbar ist oder vice versa. Es kann auch bevorzugt sein, dass beide Haltevorrichtungen 3a, 3b bis zu 6 Freiheitsgrade aufweisen.

Die Fügevorrichtung ist ausgebildet, das justierte photoaktive System 10 zu montieren. Die Fügevorrichtung ist insbesondere ausgebildet, in dem Arbeitszustand die Optikanordnung 12 des justierten photoaktiven Systems 10 mit der photoaktiven Anordnung 11 des justierten photoaktiven Systems 10 fügend miteinander zu verbinden.

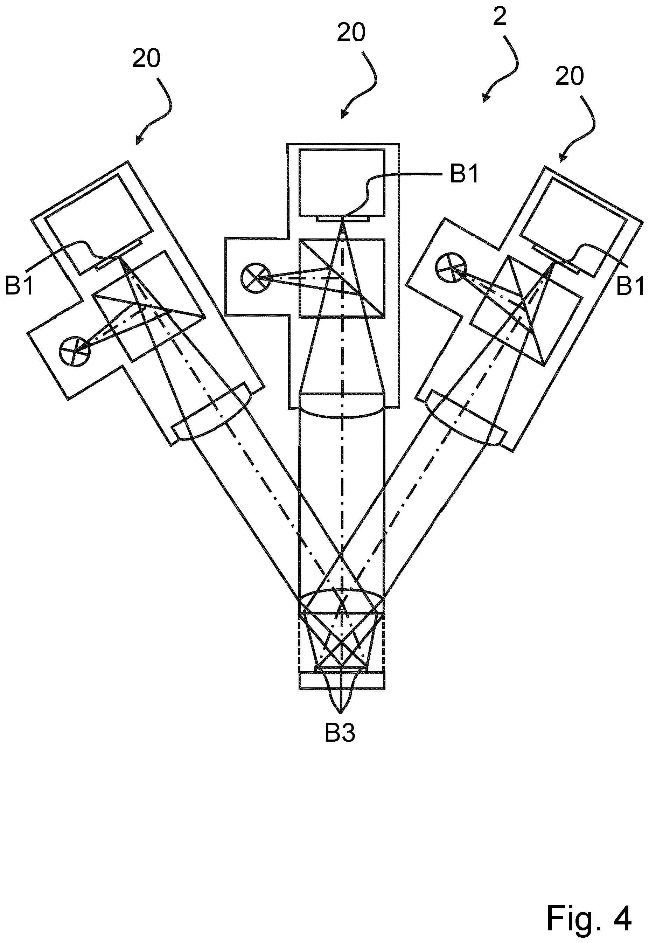

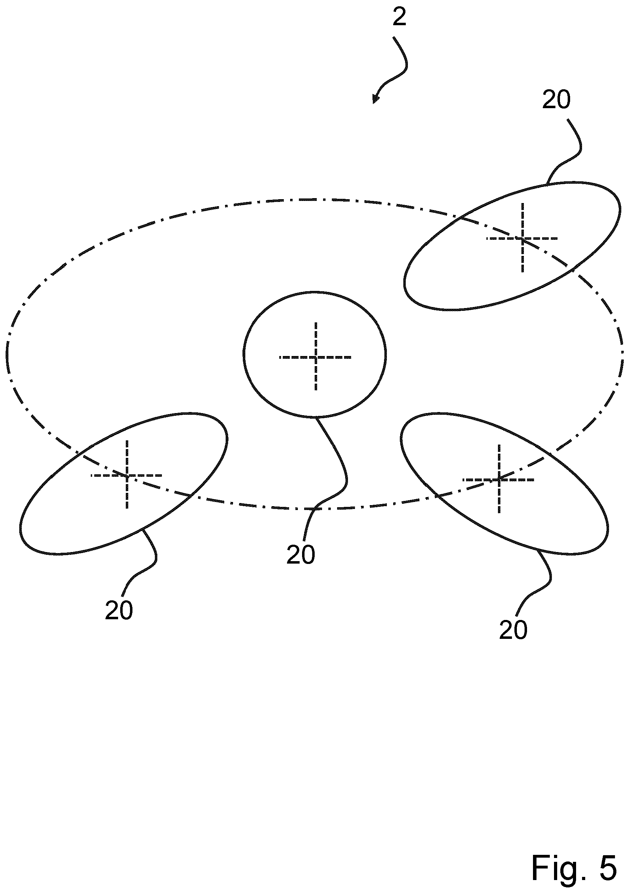

Die in Figur 4 in einer Seitenansicht und in Figur 5 in einer Draufsicht schematisch dargestellten Vorrichtung 1 umfasst eine Abbildungsvorrichtung 2 mit vier gleichen Abbildungsanordnungen 20. Eine erste Abbildungsanordnung 20 ist gemäß der Abbildungsanordnung 20 der in Figur 1 schematisch dargestellten Vorrichtung 1 angeordnet Insbesondere sind die erste und zweite Haltevorrichtung 3a, 3b mit der ersten und zweiten Halteebene Ha, Hb gemäß der in Figur 1 schematisch dargestellten Vorrichtung angeordnet. Die drei übrigen Abbildungsanordnungen 20 sind gegenüber der ersten Abbildungsanordnung 20 winklig bevorzugt auf einer kreisförmigen Bahn (Strich-Punkt-Linie in Fig. 5) angeordnet.

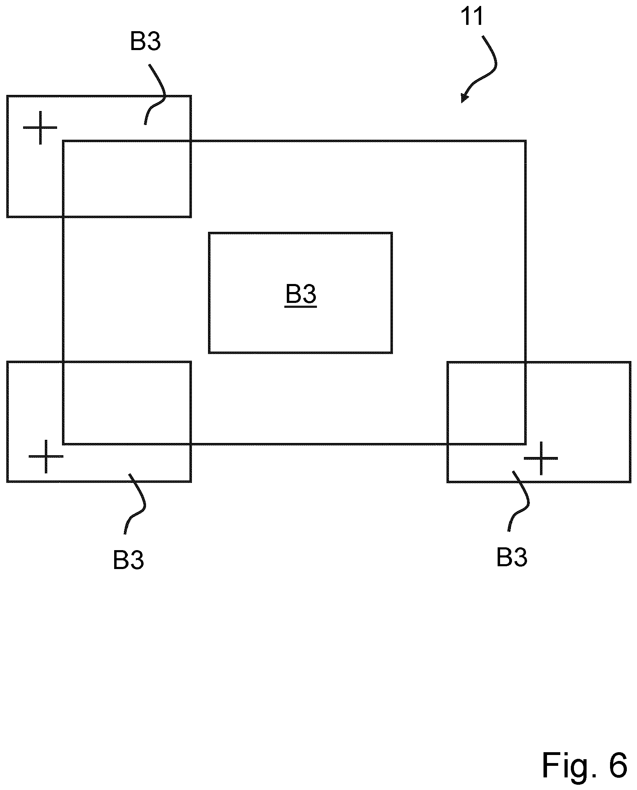

In Figur 6 ist eine schematische Darstellung einer Draufsicht einer photoaktiven Anordnung 11 eines herzustellenden photoaktiven Systems 10 gezeigt. Die in Figur 6 dargestellte photoaktive Anordnung wird mit einer Vorrichtung 1 gemäß den Figuren 4 und 5 hergestellt. In der Draufsicht der photoaktiven Anordnung 11 ist schematisch die dritte Brennebene B3 dargestellt, die jeweils einer Abbildungsanordnung 20 der in Figuren 4 und 5 schematisch dargestellten Vorrichtung zuzuordnen ist. Die jeweilige dritte Brennebene B3 stellt den jeweiligen Erfassungsbereich der vier Abbildungsanordnungen 20 dar, der zur Erzeugung des jeweiligen Auswertebilds und dessen Auswertung erfasst wird. Die jeweils in den Erfassungsbereichen angeordneten Kreuze sind Justagemarken, die unmittelbar neben der photoaktiven Anordnung physikalisch eingebracht wurde.

Eine gemäß den Figuren 4-6 schematisch dargestellte Vorrichtung 1 erlaubt die Justage der photoaktiven Anordnung 11 gegenüber der Optikanordnung 12. Dazu kann zunächst eine Grobjustage orthogonal zu der im Zentrum von der photoaktiven Anordnung 11 der in Figur 6 dargestellten Brennebene B3 erfolgen. Im Grobfokus wird der Abstand zwischen der Optikanordnung 12 und der photoaktiven Anordnung 11 grob justiert. Auf Grundlage der drei Justagemarken wird die photoaktive Anordnung 11 gegenüber der Optikanordnung 12 entlang der beiden Achsen translatorisch zueinander ausgerichtet. Anschließend kann die photoaktive Anordnung 11 um zwei orthogonal zueinander ausgerichtete, in der Brennebene B3 liegende Achsen ausgerichtet werden. Dazu wir die bevorzugt die Abbildungsschärfe in den Randbereichen der photoaktiven Anordnung 11 erfasst und die photoaktive Anordnung justiert, d.h. um die beiden besagten Achsen rotiert, bis die Abbildungsschärfe in den Randbereichen zumindest ähnlich, bevorzugt im Wesentlichen identisch ist. Insbesondere wird bei der Justage eine Symmetrie der Modulationsübertragungsfunktion des jeweiligen Randbereichs angestrebt. Es kann auch bevorzugt sein, die beiden zuvor genannten Schritte in umgekehrter Reihenfolge auszuführen. Anschließend kann eine Feinjustage bevorzugt sein. In der Feinjustage wird die Modulübertragungsfunktion, im vorliegenden Ausführungsbeispiel, in den vier Erfassungsbereichen bestimmt und je nach Präferenz bestimmten Modulübertragungsfunktionswert feinjustiert. Es könnte bevorzugt sein, in der Feinjustage die photoaktive Anordnung 11 gegenüber der Optikanordnung 12 derart zu justieren, dass die Abbildungsschärfe der Abbildungsanordnung 20 des zentralen Erfassungsbereichs maximal wird. Es könnte aber auch bevorzugt sein, dass die photoaktive Anordnung 11 gegenüber der Optikanordnung 12 derart feinjustiert wird, dass die Abbildungsschärfe einer oder mehrerer Abbildungsanordnungen 20 maximal wird, die einen der Randbereiche der photoaktiven Anordnung 11 erfassen.

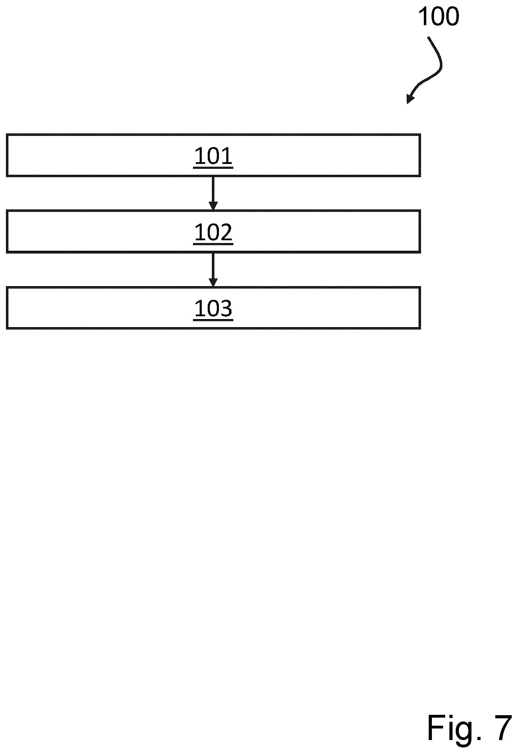

Figur 7 zeigt ein schematisches Ablaufdiagramm einer ersten bevorzugten Ausführungsform eines Verfahrens 100 zur Herstellung eines photoaktiven Systems 10. Diese bevorzugte Ausführungsform des Verfahrens 100 ist insbesondere zur Herstellung eines deaktivierten photoaktiven Systems 10 geeignet. Die bevorzugte Ausführungsform umfasst den Schritt eines Bereitstellens 101 einer Vorrichtung 1 zur Herstellung eines photoaktiven Systems 10, beispielsweise eine der in den Figuren 1a, 1b und 1f schematisch dargestellten und zuvor beschriebenen bevorzugten Ausführungsformen der Vorrichtung 1. Die bevorzugte Ausführungsform des Verfahrens 100 umfasst als weiteren Schritt ein Bereitstellen und Anordnen 102 einer photoaktiven Anordnung 12 in der zweiten Haltevorrichtung 3b. Als weiteren Schritt umfasst die bevorzugte Ausführungsform des Verfahrens 100 ein Bereitstellen und Anordnen 103 einer Optikanordnung 12 in einer ersten Haltevorrichtung 3a. Diese bevorzugte Ausführungsform führt der Vorrichtung 1 die photoaktive Anordnung 11 und die Optikanordnung 12 des herzustellenden photoaktiven Systems 10 zu. Dazu sind die photoaktive Anordnung 11 und die Optikanordnung 12 der jeweiligen Haltevorrichtung 3a, 3b zuzuführen. Das in Figur 7 schematisch dargestellte Ablaufdiagramm beschreibt den Logistikzustand der Vorrichtung 1.

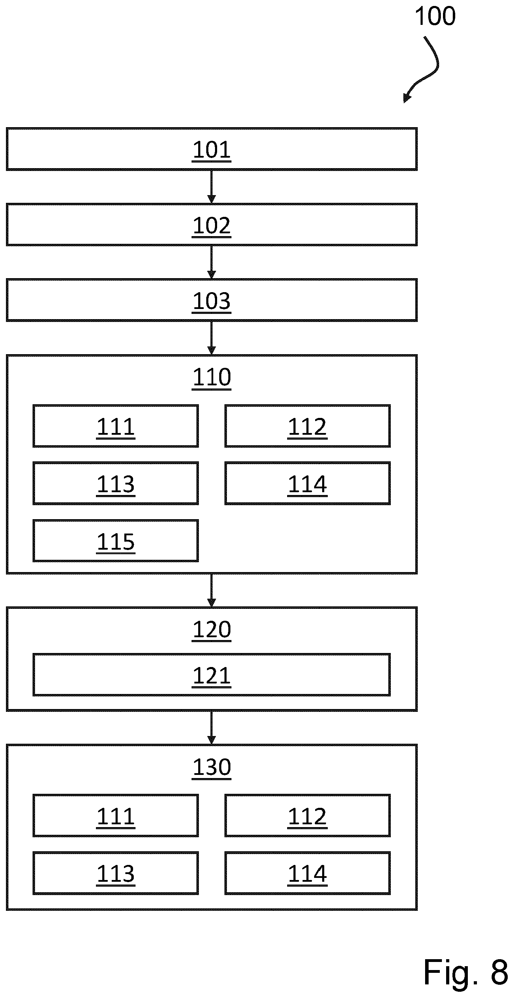

Das in der Figur 8 schematisch dargestellte Ablaufdiagramm zeigt eine weitere bevorzugte Ausführungsform des Verfahrens 100. Diese bevorzugte Ausführungsform des Verfahrens 100 basiert auf der in Figur 7 gezeigten bevorzugten Ausführungsform des Verfahrens 100. Ergänzend zu den Schritten: Bereitstellens 101 einer Vorrichtung 1 zur Herstellung eines photoaktiven Systems 10; Bereitstellen und Anordnen 102 einer photoaktiven Anordnung 12 in der zweiten Haltevorrichtung 3b; und Bereitstellen und Anordnen 103 einer Optikanordnung 12 in einer ersten Haltevorrichtung 3a umfasst das Verfahren in der in Figur schematisch dargestellten bevorzugten Ausführungsform die Schritte eines Justierens 110 der Optikanordnung gegenüber der photoaktiven Anordnung; und/oder eines Montierens 120 der gegenüber der photoaktiven Anordnung justierten Optikanordnung; und/oder eines Prüfens 130 der gegenüber der photoaktiven Anordnung montierten Optikanordnung.

Das Justieren 110 kann einen oder mehrere untergeordnete Verfahrensschritte umfassen. Ein erster bevorzugter untergeordneter Verfahrensschritt des Justierens 110 ist ein Bereitstellen 111 eines elektromagnetischen Strahls zum Abbilden eines Auswertebilds der photoaktiven Anordnung 11 des herzustellenden photoaktiven Systems 10 bzw. der Teststruktur. Ein weiterer optionaler untergeordneter Verfahrensschritt des Justierens 110 umfasst ein Abbilden 112 des Auswertebilds der photoaktiven Anordnung 11 des herzustellenden photoaktiven Systems 10 in der Strahlendurchgangsebene (SE) der mindestens einen Abbildungsanordnung 20. Ferner kann das Justieren 110 ein Erfassen 113 des Auswertebilds in der Strahlendurchgangsebene SE der mindestens einen Abbildungsanordnung 20 umfassen. Insbesondere umfasst das Verfahren des Justierens 110 ein Auswerten 114 des erfassten Auswertebilds. Schließlich ist ein Verstellen 115 der ersten Haltevorrichtung 3a mit der darin angeordneten Optikanordnung 12 und/oder der zweiten Haltevorrichtung 3b mit der darin angeordneten photoaktiven Anordnung 11 in Abhängigkeit der Auswertung des erfassten Auswertebilds ein fünfter bevorzugter untergeordneter Verfahrensschritt des Justierens 110. Vorzugsweise werden die Schritte des Justierens 110 iterativ durchlaufen.

Der Schritt des Montierens 120 umfasst insbesondere den Schritt des Verbindens der Optikanordnung 12 mit der photoaktiven Anordnung 11 des herzustellenden photoaktiven Systems 10. Insbesondere kann es bei dem Schritt des Montierens 120 oder des Justierens erforderlich sein, ein Schrumpfen der Verbindung oder ähnliches im Zuge der Montage durch einen Offset zu berücksichtigen, der das Schrumpfen kompensiert. Das Schrumpfen der Verbindung resultiert beispielsweise aus einem Wärmeeintrag beispielsweise beim Löten oder Schweißen oder Kleben. Ein solches Schrumpfen entsteht beispielsweise beim Kleben bei der Phasenumwandlung von einem flüssigen in einen festen Aggregatzustand eines für das Kleben verwendeten Klebstoffs.

Der Schritt des Prüfens130 umfasst einen oder mehrere optionale untergeordnete Verfahrensschritte. Der Schritt des Prüfens 130 umfasst insbesondere ein Bereitstellen 111 eines elektromagnetischen Strahls zum Abbilden eines Auswertebilds der photoaktiven Anordnung 11 des herzustellenden photoaktiven Systems 10. Ferner umfasst das Prüfen 130 ein Abbilden 112 des Auswertebilds der photoaktiven Anordnung 11 des justierten und/oder montierten photoaktiven Systems 10 bzw. der Teststruktur in der Strahlendurchgangsebene SE der mindestens einen Abbildungsanordnung 20. Ferner kann das Prüfen 130 ein Erfassen 113 des Auswertebilds der mindestens einen Abbildungsanordnung 20 umfassen. Insbesondere ist es bevorzugt, dass das Prüfen ein Auswerten 114 des erfassten Auswertebilds als untergeordneten Verfahrensschritt aufweist.

Der Schritt des Auswertens 114 des jeweils erfassten Auswertebilds umfasst insbesondere folgende Schritte: Bestimmen eines Frequenzgangs des erfassten Auswertebilds; und/oder Abgleichen des erfassten Auswertebildes mit einem erfassten Auswertebild eines bereits nach dem zuvor beschriebenen Verfahren justierten und/oder montierten photoaktiven Systems; wobei insbesondere die Auswertebilder simultan oder sequenziell in der jeweils mindestens einen Abbildungsanordnung 20 erfasst werden; wobei insbesondere das Abgleichen der simultan erfassten Auswertebilder auf einer physikalischen Überlagerung in der jeweils mindestens einen Abbildungsanordnung 20 beruht; und/oder insbesondere das Abgleichen der simultan oder sequenziell erfassten Auswertebilder auf einer virtuellen Überlagerung in der jeweils mindestens einen Abbildungsanordnung 20 beruht; und/oder Abgleichen des erfassten Auswertebildes und/oder des bestimmten Frequenzgangs des erfassten Auswertebildes mit einem gewünschten Sollzustand.

Der Schritt des Auswertens 114 des jeweils erfassten Auswertebilds umfasst insbesondere ein Erzeugen eines Stellsignals zum Verstellen der ersten und/oder zweiten Haltevorrichtung. Das Erzeugen des Stellsignals erfolgt insbesondere in Abhängigkeit eines Abgleichs des erfassten Auswertebildes mit einem erfassten Auswertebild eines bereits nach dem zuvor beschriebenen Verfahren justierten und/oder montierten photoaktiven Systems und/oder des bestimmten Frequenzgangs und/oder eines bestimmten Offsets; und/oder eines Abgleichs des erfassten Auswertebildes mit einem gewünschten Sollzustand, sofern das erfasste Auswertebild dem gewünschten Sollzustand nicht entspricht; und/oder eines Abgleichs des bestimmten Frequenzgangs des erfassten Auswertebildes mit einem gewünschten Sollzustand, sofern der Frequenzgang des erfassten Auswertebildes dem gewünschten Sollzustand nicht entspricht.

Ferner kann bevorzugt sein, dass das Verfahren vorzugsweise ferner den Schritt des Verfahrens der Abbildungsvorrichtung 2 umfasst (nicht dargestellt), um mehrere relativ zueinander herzustellende photoaktive System 10 nacheinander und/oder simultan herzustellen.

### BEZUGSZEICHENLISTE

- 1: Vorrichtung zur Herstellung eines photoaktiven Systems
- 2: Abbildungsvorrichtung
- 3a/3b: erste und zweite Haltevorrichtung
- 4: Stellvorrichtung
- 4a: Antriebsvorrichtung
- 5: Auswertevorrichtung
- 5a: integrierte elektronische Schaltung
- 5b: Steuereinheit
- 6: Lagervorrichtung
- 7: Fügevorrichtung
- 10: photoaktives System
- 11: photoaktive Anordnung
- 12: Optikanordnung
- 13a: Abschattungseinheit
- 13b: Strahlenquelle
- 13c: Lichtleitfaser
- 20: mindestens eine Abbildungsanordnung
- 21: Abbildungsmodul
- 22: Strahlquelleneinheit
- 23: Strahlteilereinheit
- 24: Bilderfassungseinheit
- 24a: Kamera
- 24b: Leistungselektronikmodul
- 24c: Bildsensor
- 25: Teststrukturvorrichtung
- 26: Diffusoreinheit
- 27: Filtereinheit
- 100: Verfahren zur Herstellung eines photoaktiven Systems
- 101: Bereitstellen einer Vorrichtung zur Herstellung eines photoaktiven Systems
- 102: Bereitstellen und Anordnen einer photoaktiven Anordnung in der zweiten Haltevorrichtung
- 103: Bereitstellen und Anordnen einer Optikanordnung in der ersten Haltevorrichtung
- 110: Justieren der Optikanordnung gegenüber der photoaktiven Anordnung
- 111: Bereitstellen eines Strahls zum Abbilden eines Auswertebilds des herzustellenden photoaktiven Systems
- 112: Abbilden des Auswertebilds des herzustellenden photoaktiven Systems in der Strahlendurchgangsebene der mindestens einen Abbildungsanordnung
- 113: Erfassen des Auswertebilds in der Strahlendurchgangsebene der mindestens einen Abbildungsanordnung
- 114: Auswerten des erfassten Auswertebilds, und/oder
- 115: Verstellen der ersten Haltevorrichtung und/oder der zweiten Haltevorrichtung in Abhängigkeit der Auswertung des erfassten Auswertebilds
- 120: Montieren der gegenüber der photoaktiven Anordnung justierten Optikanordnung
- 121: Verbinden, insbesondere Fügen, der Optikanordnung mit der photoaktiven Anordnung
- 130: Prüfen der gegenüber der photoaktiven Anordnung montierten Optikanordnung
- A1/A2: erster und zweiter Abstand
- SE: Strahlendurchgangsebene
- Ha/Hb: erste und zweite Halteebene
- O: optische Achse

## Patentansprüche

1. Vorrichtung (1) zur Herstellung photoaktiver Systeme (10) eines elektrooptischen und/oder optoelektronischen Systems, insbesondere für ein projizierendes und/oder abbildendes elektrooptisches System, wobei ein herzustellendes photoaktives System eine einzige oder mehrere Optikanordnungen und/oder eine einzige oder mehrere photoaktive Anordnungen aufweist, die Vorrichtung aufweisend:
- eine Abbildungsvorrichtung (2) mit mindestens einer Abbildungsanordnung (20), wobei die mindestens eine Abbildungsanordnung (20) eine Strahlendurchgangsebene (SE) und eine optische Achse (O) aufweist, und die mindestens eine Abbildungsanordnung (20) ausgebildet ist,
∘ zur Erzeugung elektromagnetischer Strahlen, die entlang eines Strahlengangs verlaufen und in der Strahlendurchgangsebene (SE) die Abbildungsanordnung (20) durchtreten, und
∘ zur Abbildung eines Auswertebilds der an der photoaktiven Anordnung (11) reflektieren elektromagnetischen Strahlen in einer ersten Brennebene (B1) der Abbildungsanordnung (20) und
∘ zur Erfassung des in der ersten Brennebene (B1) abgebildeten Auswertebilds; und **dadurch gekennzeichnet, dass** die Vorrichtung ferner aufweist:
- eine erste Haltevorrichtung (3a) mit einer ersten Halteebene (Ha) zum Halten von zwei oder mehr Optikanordnungen (12) der herzustellenden zwei oder mehr photoaktiven Systeme (10) in der ersten Halteebene (Ha); und
- eine zweite Haltevorrichtung (3b) mit einer zweiten Halteebene (3b) zum Halten von zwei oder mehr photoaktiven Anordnungen (11) in der zweiten Halteebene (Hb); wobei
- die erste Haltevorrichtung (3a) mit der ersten Halteebene (Ha) und/oder die zweite Haltevorrichtung (3a) mit der zweiten Halteebene (Ha) gegenüber der Abbildungsvorrichtung (2) bewegbar angeordnet ist; wobei
- die Abbildungsvorrichtung gegenüber der ersten und/oder zweiten Halteebene der ersten und/oder zweiten Haltevorrichtung translatorisch und/oder rotatorisch bewegbar ist.

2. Vorrichtung nach dem vorhergehenden Anspruch 1, **dadurch gekennzeichnet, dass** die erste Haltevorrichtung (3a) zwischen der zweiten Haltevorrichtung (3b) und der Abbildungsvorrichtung (2) angeordnet ist.

3. Vorrichtung nach einem der vorhergehenden Ansprüche 1-2, wobei die erste und/oder zweite Haltevorrichtung ausgebildet sind, zwei oder mehr Optikanordnungen und/oder zwei oder mehr photoaktive Anordnungen aufzunehmen, wobei
- vorzugsweise die erste Haltevorrichtung (3a) ausgebildet ist, zwei oder mehr Optikanordnungen (12) unabhängig voneinander rotatorisch und/oder translatorisch zu bewegen; und/oder
- vorzugsweise die zweite Haltevorrichtung (3b) ausgebildet ist, zwei oder mehr photoaktive Anordnungen (11) unabhängig voneinander rotatorisch und/oder translatorisch zu bewegen.

4. Vorrichtung nach einem der vorhergehenden Ansprüche 1-3, **dadurch gekennzeichnet, dass**
- ein erster Teil der mindestens einen Abbildungsanordnung auf ein erstes herzustellendes photoaktives System ausgerichtet ist und ein zweiter Teil der mindestens einen Abbildungsanordnung auf ein zweites herzustellendes photoaktives System ausgerichtet ist; und/oder
- die Abbildungsvorrichtung (2) aufweisend zwei Abbildungsanordnungen (20), wobei die zwei Abbildungsanordnungen (20) derart angeordnet sind, dass deren optische Achsen (O) parallel zueinander verlaufen, wobei eine der zwei Abbildungsanordnungen (20) auf ein herzustellendes photoaktives System ausgerichtet ist und eine andere der zwei Abbildungsanordnungen (20) auf ein weiteres herzustellendes photoaktives System ausgerichtet ist.

5. Vorrichtung nach einem der vorhergehenden Ansprüche 1-4, **dadurch gekennzeichnet, dass** die erste Halteebene (Ha) der ersten Haltevorrichtung (3a) gegenüber der Strahlendurchgangsebene (SE) mindestens einer der mindestens einen Abbildungsanordnung (20) im Wesentlichen parallel und/oder gegenüber der Strahlendurchgangsebene (SE) mindestens einer anderen der mindestens einen Abbildungsanordnung (20) nicht parallel beabstandet angeordnet ist.

6. Vorrichtung nach einem der vorhergehenden Ansprüche 1-5, **dadurch gekennzeichnet, dass** die mindestens eine Abbildungsvorrichtung (2) umfasst:
- ein Abbildungsmodul (21), in der die Strahlendurchgangsebene (SE) angeordnet ist und das die optische Achse (O) aufweist, wobei das Abbildungsmodul (21) ausgebildet ist
∘ in Richtung der zweiten Halteebene (Hb) entlang der optischen Achse im Unendlichen oder im Endlichen mit einer zweiten Brennweite in einer zweiten Brennebene (B2) abzubilden und
∘ in einer entgegengesetzten Richtung im Unendlichen oder im Endlichen mit der ersten Brennweite in der ersten Brennebene abzubilden; und/oder
- eine Strahlquelleneinheit (22), die elektromagnetischen Strahlen zur Erzeugung und zur Erfassung des Auswertebilds bereitstellt; und/oder
- eine Strahlteilereinheit (23), die zumindest einen Teil der elektromagnetischen Strahlen der Strahlquelleneinheit (22) in Richtung des herzustellenden photoaktiven Systems (10) umlenkt; und/oder
- eine Bilderfassungseinheit (24), die ausgebildet ist, das Auswertebild des herzustellenden photoaktiven Systems (10) zu erfassen, wobei die Bilderfassungseinheit (24) zur Erfassung des Auswertebilds des herzustellenden photoaktiven Systems (10) in der ersten Brennebene des Abbildungsmoduls (21) angeordnet ist; und/oder
- eine Diffusoreinheit (26) zur Streuung der elektromagnetischen Strahlen der Strahlquelleneinheit (22); und/oder
- eine Filtereinheit (27) zur Filterung elektromagnetischer Strahlen mit einer zu filternden Wellenlänge; und/oder
- eine Teststrukturvorrichtung (25) zur Erzeugung einer Teststruktur auf der photoaktiven Anordnung (11) des herzustellenden photoaktiven Systems (10).

7. Vorrichtung nach einem der vorhergehenden Ansprüche 1-6, **dadurch gekennzeichnet, dass** die Abbildungsvorrichtung (2) einen Kollimator, vorzugsweise einen fokussierbaren Kollimator, und insbesondere einen Autokollimator umfasst.

8. Vorrichtung nach dem vorhergehenden Anspruch 6 oder den vorhergehenden Ansprüchen 6 und7, **dadurch gekennzeichnet, dass** die Bilderfassungseinheit (24) umfasst:
- eine Kamera (24a) zur Erfassung des von dem herzustellenden elektrooptischen System (10) erzeugten Auswertebilds der jeweiligen mindestens einen Abbildungsanordnung; und/oder
- insbesondere ein Leistungselektronikmodul (24b) zur Verarbeitung und Übertragung des von der Bilderfassungseinheit (24) erfassten jeweiligen Auswertebilds; und/oder
- insbesondere einen Bildsensor (24c) zur Erfassung des von dem herzustellenden elektrooptischen System (10) erzeugten jeweiligen Auswertebilds.

9. Vorrichtung nach einem der vorhergehenden Ansprüche 1-8, **gekennzeichnet durch** eine Stellvorrichtung (4) zur Verstellung einer Lage und/oder einer Position der ersten Halteebene (Ha) der ersten Haltevorrichtung (3a) und/oder der zweiten Halteebene (Hb) der zweiten Haltevorrichtung (3b) gegenüber der Strahlendurchgangsebene (SE) der mindestens einen Abbildungsanordnung (20); wobei die Stellvorrichtung (4) vorzugsweise eine Antriebsvorrichtung (4a) aufweist.

10. Vorrichtung nach einem der vorhergehenden Ansprüche 1-9, **gekennzeichnet durch** eine Lagervorrichtung (6), die ausgebildet ist, in dem Arbeitszustand die erste Haltevorrichtung (3a) und/oder die zweite Haltevorrichtung (3b) gegenüber der Abbildungsvorrichtung (2) translatorisch und/oder rotatorisch zu lagern; und/oder die Antriebsvorrichtung (4a), die ausgebildet ist, in dem Arbeitszustand die erste Haltevorrichtung (3a) und/oder die zweite Haltevorrichtung (3b) translatorisch und/oder rotatorisch anzutreiben.

11. Vorrichtung nach einem der vorhergehenden Ansprüche 1-10, **gekennzeichnet durch** eine Fügevorrichtung (7), die ausgebildet ist, die photoaktive Anordnung (11) und die Optikanordnung (12) miteinander zu verbinden, insbesondere miteinander fügend zu verbinden.

12. Vorrichtung nach einem der vorhergehenden Ansprüche 1-11, **gekennzeichnet durch** eine Auswertevorrichtung (5) zur Auswertung des erfassten Auswertebilds der mindestens einen Abbildungsanordnung, wobei die Auswertevorrichtung (5)
- vorzugsweise mit der Abbildungsvorrichtung (2) signaltechnisch gekoppelt ist.

13. Verfahren (100) zur Herstellung photoaktiver Systeme (10) eines elektrooptischen und/oder optoelektronischen Systems, insbesondere für ein projizierendes und/oder abbildendes elektrooptisches System, wobei das herzustellende photoaktive System eine einzige oder mehrere Optikanordnungen und/oder eine einzige oder mehrere photoaktive Anordnungen aufweist, **gekennzeichnet durch** die Schritte:
- Bereitstellen (101) einer Vorrichtung (1) nach einem der vorhergehenden Ansprüche 1-10; und
- Bereitstellen und Anordnen (102) von zwei oder mehr photoaktiven Anordnungen (11) in der zweiten Haltevorrichtung (3b); und
- Bereitstellen und Anordnen (103) von zwei oder mehr Optikanordnungen (112) in der ersten Haltevorrichtung (3b), und
paralleles Verfahren und/oder Schwenken der Abbildungsvorrichtung gegenüber der ersten und/oder zweiten Halteebene der ersten und/oder zweiten Haltevorrichtung.

14. **Verfahren** (100) nach dem vorhergehenden Anspruch 13, **gekennzeichnet durch** die Schritte:
- Justieren (110) der Optikanordnung (12) gegenüber der photoaktiven Anordnung (11), wobei der Schritt des Justierens (110) insbesondere umfasst:
∘ Bereitstellen (111) eines elektromagnetischen Strahls zum Abbilden eines Auswertebilds in der jeweils mindestens einen Abbildungsanordnung, und/oder
∘ Abbilden (112) des Auswertebilds in der jeweils mindestens einen Abbildungsanordnung (20), und/oder
∘ Erfassen (113) des Auswertebilds in der jeweils mindestens einen Abbildungsanordnung (20), und/oder
∘ Auswerten (114) des jeweils erfassten Auswertebilds, und/oder
∘ Verstellen (115) der ersten Haltevorrichtung (3a) mit der darin angeordneten Optikanordnung (12) und/oder der zweiten Haltevorrichtung (3b) mit der darin angeordneten photoaktiven Anordnung (11) in Abhängigkeit der Auswertung des jeweils erfassten Auswertebilds; und/oder
- Montieren (120) der gegenüber der photoaktiven Anordnung (11) justierten Optikanordnung (12), wobei der Schritt des Montierens (120) insbesondere umfasst:
o Verbinden (121), insbesondere Fügen, der Optikanordnung (12) mit der photoaktiven Anordnung (11); und/oder
- Prüfen (130) der gegenüber der photoaktiven Anordnung (11) montierten Optikanordnung (12), wobei der Schritt des Prüfens (130) insbesondere umfasst:
∘ Bereitstellen (111) eines elektromagnetischen Strahls zum Abbilden eines Auswertebilds in der jeweils mindestens einen Abbildungsanordnung, und/oder
∘ Abbilden (112) des Auswertebilds des justierten und/oder montierten photoaktiven Systems (10) in der jeweils mindestens einen Abbildungsanordnung (20), und/oder
∘ Erfassen (113) des Auswertebilds in der jeweils mindestens einen Abbildungsanordnung (20), und/oder
∘ Auswerten (114) des jeweils erfassten Auswertebilds; und/oder
- Verfahren der Abbildungsvorrichtung (2), um mehrere relativ zueinander herzustellende photoaktive System nacheinander und/oder simultan herzustellen.

15. Verfahren (100) nach einem der vorhergehenden Ansprüche 13-14, **dadurch gekennzeichnet, dass**
- das Erfassen (113) des Auswertebilds in der mindestens einen Abbildungsanordnung (20) folgende Schritte umfasst:
∘ Anordnen (113a) der Optikanordnung (12) gegenüber der Abbildungsvorrichtung (2) und/oder der photoaktiven Anordnung (11) im Unendlichen; und/oder
∘ Anordnen (113b) der Optikanordnung (12) gegenüber der Abbildungsvorrichtung (2) und/oder der photoaktiven Anordnung (11) in einer Sollposition und/oder einer Solllage; und/oder
- das Auswerten (114) des jeweils erfassten Auswertebilds folgende Schritte umfasst:
∘ Bestimmen eines Frequenzgangs des erfassten Auswertebilds; und/oder
∘ Abgleichen des erfassten Auswertebildes mit einem erfassten Auswertebild eines bereits nach dem Verfahren nach Anspruch 14 justierten und/oder montierten photoaktiven Systems; wobei
▪ insbesondere die Auswertebilder simultan oder sequenziell in der jeweils mindestens einen Abbildungsanordnung (20) erfasst werden; wobei
▪ insbesondere das Abgleichen der simultan erfassten Auswertebilder auf einer physikalischen Überlagerung in der jeweils mindestens einen Abbildungsanordnung (20) beruht; und/oder
▪ insbesondere das Abgleichen der simultan oder sequenziell erfassten Auswertebilder auf einer virtuellen Überlagerung in der jeweils mindestens einen Abbildungsanordnung (20) beruht; und/oder
∘ Abgleichen des erfassten Auswertebildes und/oder des bestimmten Frequenzgangs des erfassten Auswertebildes mit einem gewünschten Sollzustand; und/oder
o Erzeugen eines Stellsignals zum Verstellen der ersten und/oder zweiten Haltevorrichtung in Abhängigkeit
▪ des Abgleichs des erfassten Auswertebildes mit einem erfassten Auswertebild eines bereits nach dem Verfahren nach Anspruch 14 justierten und/oder montierten photoaktiven Systems und/oder des bestimmten Frequenzgangs und/oder eines bestimmten Offsets; und/oder
▪ des Abgleichs des erfassten Auswertebildes mit einem gewünschten Sollzustand, sofern das erfasste Auswertebild dem gewünschten Sollzustand nicht entspricht; und/oder
▪ des Abgleichs des bestimmten Frequenzgangs des erfassten Auswertebildes mit einem gewünschten Sollzustand, sofern der Frequenzgang des erfassten Auswertebildes dem gewünschten Sollzustand nicht entspricht.

16. Verfahren (100) nach einem der vorhergehenden Ansprüche 13-15, **dadurch gekennzeichnet, dass** die photoaktive Anordnung (11) des herzustellenden photoaktiven Systems (10) während des Justierens (110) und/oder Montierens (120) und/oder Prüfens (130) deaktiviert ist, wobei das herzustellende photoaktives System während dessen Herstellung nicht mit einer elektrischen Energie versorgt wird.

17. Verwendung einer Vorrichtung (1) nach einem der vorhergehenden Ansprüche 1-12 zur Herstellung photoaktiver Systeme (10) eines elektrooptischen und/oder optoelektronischen Systems, insbesondere für ein projizierendes und/oder abbildendes elektrooptisches System, wobei die herzustellenden photoaktiven Systeme eine einzige oder mehrere Optikanordnungen und/oder eine einzige oder mehrere photoaktive Anordnungen aufweist.

## Claims

1. Device (1) for producing photoactive systems (10) of an electro-optical and/or optoelectronic system, in particular for a projecting and/or imaging electro-optical system, wherein a photoactive system to be produced comprises one single or more optical arrangements and one single or more photoactive arrangements, said device comprising:
- an imaging device (2) having at least one imaging arrangement (20), wherein the at least one imaging arrangement (20) has a beam passage plane (SE) and an optical axis (0), and the at least one imaging arrangement (20) is designed
∘ to generate electromagnetic beams which extend along a beam path and pass through the imaging arrangement (20) on the beam passage plane (SE), and
∘ to image, on a first focal plane (B1) of the imaging arrangement (20), an evaluation image of the electromagnetic beams reflected at a photoactive arrangement (11) and
∘ to capture the evaluation image imaged on the first focal plane (B1); and **characterized in that** the device further comprises:
- a first holding device (3a) having a first holding plane (Ha) for holding, on the first holding plane (Ha), two or more optical arrangements (12) of the two or more photoactive systems (10) to be produced; and
- a second holding device (3b) having a second holding plane (Hb) for holding, on the second holding plane (Hb), two or more photoactive arrangements (11); wherein
- the first holding device (3a) having the first holding plane (Ha) and/or the second holding device (3a) having the second holding plane (Ha) is movably positioned relative to the imaging device (2); and
- the imaging device movable in a translational manner relative and/or in a rotatory manner relative to the first and/or second holding planes of the first and/or second holding device.

2. Device according to the preceding claim 1, **characterised in that** the first holding device (3a) is arranged between the second holding device (3b) and the imaging device (2).

3. Device according to one of the preceding claims 1 - 2, wherein the first and/or second holding device are designed to accommodate two or more optical arrangements and/or two or more photoactive arrangements, wherein
- the first holding device (3a) is preferably designed to move two or more optical arrangements (12) rotationally and/or translationally independently of each other; and/or
- the second holding device (3b) is preferably designed to move two or more photoactive arrangements (11) rotationally and/or translationally independently of each other.

4. Device according to one of the preceding claims 1 - 3, **characterised in that**
- a first part of the at least one imaging arrangement is aligned with a first photoactive system to be produced and a second part of the at least one imaging arrangement is aligned with a second photoactive system to be produced; and/or
- the imaging device (2) having two imaging arrangements (20), wherein said two imaging arrangements (20) are arranged in such a way that their optical axes (O) extend parallel with one another, wherein one of said two imaging arrangements (20) is aligned with a photoactive system to be produced and another of the two imaging arrangements (20) is aligned with another photoactive system to be produced.

5. Device according to one of the preceding claims 1 - 4, **characterised in that** the first holding plane (Ha) of the first holding device (3a) is arranged substantially parallel with respect to the beam passage plane (SE) of at least one of the at least one imaging arrangement (20) and/or is arranged non-parallel with respect to the beam passage plane (SE) at a distance from the beam passage plane (SE) of at least one other of the at least one imaging arrangement (20).

6. Device according to one of the preceding claims 1 - 5, **characterised in that** the at least one imaging device (2) comprises:
- an imaging module (21) in which the beam passage plane (SE) is arranged and which has the optical axis (0), wherein the imaging module (21) is designed
o to image at infinity or at finity in a direction of the second holding plane (Hb) along the optical axis with a second focal length on a second focal plane (B2) and
o to image at infinity or at finity in an opposite direction with a first focal length on the first focal plane; and/or
- a beam source unit (22) which provides electromagnetic beams for generating and for capturing the evaluation image; and/or
- a beam splitter unit (23) which deflects at least one part of the electromagnetic beams of the beam source unit (22) towards the photoactive system (10) to be produced; and/or
- an image capturing unit (24) which is designed to capture the evaluation image of the photoactive system (10) to be produced, wherein the image capturing unit (24) is arranged on the first focal plane of the imaging module (21) in order to capture the evaluation image of the photoactive system (10) to be produced; and/or
- a diffuser unit (26) for scattering the electromagnetic beams from the beam source unit (22); and/or
- a filter unit (27) for filtering electromagnetic beams having a wavelength to be filtered; and/or
- a test structure device (25) for generating a test structure on the photoactive arrangement (11) of photoactive system (10) to be produced.

7. Device according to one of the preceding claims 1 - 6, **characterised in that** the imaging device (2) comprises a collimator, preferably a focusable collimator, and in particular an autocollimator.

8. Device according to the preceding claim 6 or to the preceding claims 6 and 7, **characterised in that** the image capturing unit (24) comprises:
- a camera (24a) for capturing the evaluation image, generated by the electro-optical system (10) to be produced, of the respective at least one imaging arrangement; and/or
- in particular a power electronics module (24b) for processing and transmitting the respective evaluation image captured by the image capturing unit (24); and/or
- in particular an image sensor for capturing the respective evaluation image generated by the electro-optical system (10) to be produced.

9. Device according to one of the preceding claims 1 - 8, **characterised by** an adjusting device (4) for adjusting an orientation and/or a position of the first holding plane (Ha) of the first holding device (3a) and/or of the second holding plane (Hb) of the second holding device (3b) with respect to the beam passage plane (SE) of the at least one imaging arrangement (20); wherein the adjusting device (4) preferably has a drive device (4a).

10. Device according to one of the preceding claims 1 - 9, **characterised by** a support device (6) which is designed to support the first holding device (3a) and/or the second holding device (3b) translationally and/or rotationally relative to the imaging device (2) in an operating condition; and/or a drive device (4a) which is designed to drive the first holding device (3a) and/or the second holding device (3b) translationally and/or rotationally in the operating condition.

11. Device according to one of the preceding claims 1 - 10, **characterised by** a joining device (7) which is designed to connect the photoactive arrangement (11) and the optical arrangement (12) to each other, in particular to connect them joiningly to each other.

12. Device according to one of the preceding claims 1 - 11, **characterised by** an evaluation device (5) for evaluating the captured evaluation image of the at least one imaging arrangement, wherein the evaluation device (5):
- is preferably in signal communication with the imaging device (2).

13. Method (100) for producing photoactive systems (10) of an electro-optical and/or an optoelectronic system, in particular for a projecting and/or imaging electro-optical system, wherein the photoactive system to be produced comprises at least one single or plural optical arrangement and at least one single or plural photoactive arrangement, **characterised by** the steps of:
- providing a device according to one of the preceding claims 1 - 10; and
- providing and arranging (102) of two or more photoactive arrangements (11) in the second holding arrangement (3b); and
- providing and arranging (103) of two or more optical arrangements (112) in the first holding arrangement (3b).

14. Method (100) according to the preceding claim 13, **characterised by** the steps of:
- adjusting (110) the optical arrangement (12) with respect to the photoactive arrangement (11), wherein the step of adjusting (110) includes, in particular:
o providing (111) an electromagnetic beam for imaging an evaluation image in the respective at least one imaging arrangement, and/or
o imaging (112) the evaluation image in the respective at least one imaging arrangement, and/or
o capturing (113) the evaluation image in the respective at least one imaging arrangement, and/or
o evaluating (114) the respective captured evaluation image, and/or
o moving (115) the first holding device (3a) with the optical arrangement (12) disposed therein and/or the second holding device (3b) with the photoactive arrangement (11) disposed therein, depending on the evaluation of the respective captured evaluation image; and/or
- assembling (120) the optical arrangement (12) adjusted with respect to the photoactive arrangement (11), wherein the step of assembling (120) includes, in particular:
o connecting (121), in particular joining, the optical arrangement (12) to the photoactive arrangement (11); and/or
- testing (130) the optical arrangement (12) assembled opposite the photoactive arrangement (11), wherein the step of testing (130) includes, in particular:
o providing (111) an electromagnetic beam for imaging an evaluation image in the respective at least one imaging arrangement, and/or
o imaging (112) the evaluation image of the adjusted and/or assembled photoactive system (10) in the respective at least one imaging arrangement (20), and/or
o capturing (113) the evaluation image in the respective at least one imaging arrangement (20), and/or
o evaluating (114) the respective captured evaluation image; and/or
- moving the imaging device (2) in order to produce a plurality of photoactive systems to be produced successively and/or simultaneously in relation to each other.

15. Method (100) according to one of the preceding claims 13 - 14, **characterised in that**
- the capturing (113) ofthe evaluation image in the at least one imaging arrangement (20) includes the following steps:
o arranging (113a) the optical arrangement (12) at infinity relative to the imaging device (2) and/or the photoactive arrangement (11); and/or
o arranging (113b) the optical arrangement (12) in a setpoint position and/or a setpoint orientation relative to the imaging device (2) and/or the photoactive arrangement (11); and/or
- the evaluating (114) of the respective captured evaluation image includes the following steps:
o determining a frequency response characteristic of the captured evaluation image; and/or
o comparing the captured evaluation image with a captured evaluation image of a photoactive system previously adjusted and/or assembled with respect to the photoactive arrangement; wherein,
- in particular, the evaluation images are captured simultaneously or sequentially in the respective at least one imaging arrangement; wherein,
- in particular, the comparison of the simultaneously captured evaluation images is based on a physical superimposition in the respective at least one imaging arrangement(20); and/or
- in particular, the comparison of the simultaneously or sequentially captured evaluation images is based on virtual superimposition in the respective at least one imaging arrangement (20); and/or
o comparing the captured evaluation image and/or the determined frequency response of the captured evaluation image with a desired target state; and/or
o generating a control signal for moving the first and/or second holding device according to
- the comparison of the captured evaluation image with a captured evaluation image of a photoactive system previously adjusted and/or assembled in accordance with a method according to claim 14, and/or of the determined frequency response and/or of a determined offset; and/or
- the comparison of the captured evaluation image with a desired target state, if the captured evaluation image does not match the desired target state; and/or
- the comparison of the determined frequency response of the captured evaluation image with a desired target state, if the frequency response of the captured evaluation image does not match the desired target state.

16. Method according to one of the preceding claims 13 - 15, **characterised in that** the photoactive arrangement (11) of the photoactive system (10) to be produced is deactivated during adjustment (110) and/or assembly (120) and/or testing (130), wherein the photoactive system to be produced is not supplied with electrical energy during its production.

17. Use of a device (1) according to one of the preceding claims 1-12 for the production of photoactive systems (10) of an electro-optical and/or optoelectronic system, in particular for a projecting and/or imaging electro-optical system, wherein the photoactive systems to be produced have a single or multiple optical arrangements and/or a single or multiple photoactive arrangements.

## Revendications

1. Dispositif (1) pour produire des systèmes photoactifs (10) d'un système électro-optique et/ou opto-électronique, en particulier pour un système électro-optique de projection et/ou de représentation, dans lequel un système photoactif à produire comporte un seul ou plusieurs ensembles optiques et/ou un seul ou plusieurs ensembles photoactifs, le dispositif comportant :
- un dispositif de représentation (2) ayant au moins un ensemble de représentation (20), dans lequel le au moins un ensemble de représentation (20) comporte un plan de passage de faisceau (SE) et un axe optique (O), et le au moins un ensemble de représentation (20) est conçu :
∘ pour générer des faisceaux électromagnétiques qui s'étendent le long d'un trajet de faisceau et passent à travers l'ensemble de représentation (20) dans le plan de passage de faisceau (SE), et
∘ pour représenter une image d'évaluation de faisceaux électromagnétiques réfléchis sur l'ensemble photoactif (11) dans un premier plan focal (B1) de l'ensemble de représentation (20) et
∘ pour capturer l'image d'évaluation représentée dans le premier plan focal (B1) ; et **caractérisé en ce que** le dispositif comporte en outre :
- un premier dispositif de retenue (3a) ayant un premier plan de retenue (Ha) pour retenir deux ensembles optiques (12) ou plus des deux systèmes photoactifs (10) ou plus à produire dans le premier plan de retenue (Ha) ; et
- un second dispositif de retenue (3b) ayant un second plan de retenue (Hb) pour retenir deux ensembles photo-optiques (11) dans le second plan de retenue (Hb) ; dans lequel
- le premier dispositif de retenue (3a) avec le premier plan de retenue (Ha) et/ou le second dispositif de retenue (3b) avec le second plan de retenue (Hb) sont agencés de manière mobile par rapport au dispositif de représentation (2) ; dans lequel
- le dispositif de représentation est mobile en translation et/ou en rotation par rapport au premier et/ou second plan de retenue du premier et/ou second dispositif de retenue.

2. Dispositif selon la revendication 1 précédente, **caractérisé en ce que** le premier dispositif de retenue (3a) est agencé entre le second dispositif de retenue (3b) et le dispositif de représentation (2).

3. Dispositif selon l'une des revendications 1 à 2 précédentes, dans lequel le premier et/ou second dispositif de retenue sont conçus pour recevoir deux ensembles optiques ou plus et/ou deux ensembles photoactifs ou plus, dans lequel
- le premier dispositif de retenue (3a) est de préférence conçu pour déplacer en rotation et/ou en translation deux ensembles optiques (12) ou plus indépendamment l'un de l'autre ; et/ou
- le second dispositif de retenue (3b) est de préférence conçu pour déplacer en rotation et/ou en translation deux ensembles photoactifs (11) ou plus indépendamment l'un de l'autre.

4. Dispositif selon l'une des revendications 1 à 3 précédentes, **caractérisé en ce que**
- une première partie du au moins un ensemble de représentation est alignée avec un premier système photoactif à produire, et une seconde partie du au moins un ensemble de représentation est alignée avec un second système photoactif à produire, et/ou
- le dispositif de représentation (2) comporte deux ensembles de représentation (20), dans lequel les deux ensembles de représentation (20) sont agencés de telle sorte que leurs axes optiques (O) s'étendent parallèlement l'un à l'autre, dans lequel l'un des deux ensembles de représentation (20) est aligné avec un système photoactif à produire et un autre des deux ensembles de représentation (20) est aligné avec un système photoactif supplémentaire à produire.

5. Dispositif selon l'une des revendications 1 à 4 précédentes, **caractérisé en ce que** le premier plan de retenue (Ha) du premier dispositif de retenue (3a) est agencé de manière sensiblement parallèle au plan de passage de faisceau (SE) d'au moins un des au moins un ensemble de représentation (20) et/ou est agencé espacé de manière non parallèle au plan de passage de faisceau (SE) d'au moins un autre des au moins un ensemble de représentation (20).

6. Dispositif selon l'une des revendications 1 à 5 précédentes, **caractérisé en ce que** le au moins un dispositif de représentation (2) comprend :
- un module de représentation (21), dans lequel le plan de passage de faisceau (SE) est agencé et qui comporte l'axe optique (0), dans lequel le module de représentation (21) est réalisé pour :
∘ représenter une image de manière infinie ou finie en direction du second plan de retenue (Hb) le long de l'axe optique avec une seconde distance focale dans un second plan focal (B2) et
∘ représenter une image de manière infinie ou finie dans une direction opposée avec la première distance focale dans le premier plan focal ; et/ou
- une unité de source de faisceau (22) qui délivre des faisceaux électromagnétiques pour générer et capturer l'image d'évaluation ; et/ou
- une unité de séparation de faisceaux (23) qui dévie au moins une partie des faisceaux électromagnétiques de l'unité de source de faisceau (22) en direction du système photoactif (10) à produire ; et/ou
- une unité de capture d'image (24) qui est conçue pour capturer l'image d'évaluation du système photoactif (10) à produire, dans lequel l'unité de capture d'image (24) pour capturer l'image d'évaluation du système photoactif (10) à produire est agencée dans le premier plan focal du module de représentation (21) ; et/ou
- une unité de diffusion (26) pour disperser les faisceaux électromagnétiques de l'unité de source de faisceau (22) ; et/ou
- une unité de filtre (27) pour filtrer des faisceaux électromagnétiques ayant une longueur d'onde à filtrer ; et/ou
- un dispositif de structure de test (25) pour générer une structure de test sur l'ensemble photoactif (11) du système photoactif (10) à produire.

7. Dispositif selon l'une des revendications 1 à 6 précédentes, **caractérisé en ce que** le dispositif de représentation (2) comprend un collimateur, de préférence un collimateur focalisable, et en particulier un autocollimateur.

8. Dispositif selon la revendication 6 précédente ou les revendications 6 et 7 précédentes, **caractérisé en ce que** l'unité de capture d'image (24) comprend :
- une caméra (24a) pour capturer l'image d'évaluation du au moins un ensemble de représentation respectivement générée par le système électro-optique (10) à produire ; et/ou
- en particulier un module d'électronique de puissance (24b) pour traiter et transmettre l'image d'évaluation respective capturée par l'unité de capture d'image (24) ; et/ou
- en particulier un capteur d'image (24c) pour capturer l'image d'évaluation respective générée par le système électro-optique (10) à produire.

9. Dispositif selon l'une des revendications 1 à 8 précédentes, **caractérisé par** un dispositif de réglage (4) pour régler une orientation et/ou une position du premier plan de retenue (Ha) du premier dispositif de retenue (3a) et/ou du second plan de retenue (Hb) du second dispositif de retenue (3b) par rapport au plan de passage de faisceau (SE) du au moins un ensemble de représentation (20) ; dans lequel le dispositif de réglage (4) comporte de préférence un dispositif d'entraînement (4a).

10. Dispositif selon l'une des revendications 1 à 9 précédentes, **caractérisé par** un dispositif de support (6) qui est conçu pour supporter en translation et/ou en rotation le premier dispositif de retenue (3a) et/ou le second dispositif de retenue (3b) par rapport au dispositif de représentation (2) à l'état de travail ; et/ou le dispositif d'entraînement (4a) qui est conçu pour entraîner en translation et/ou en rotation le premier dispositif de retenue (3a) et/ou le second dispositif de retenue (3b) à l'état de travail.

11. Dispositif selon l'une des revendications 1 à 10 précédentes, **caractérisé par** un dispositif d'assemblage (7) qui est conçu pour relier l'ensemble photoactif (11) et l'ensemble optique (12) l'un à l'autre, en particulier pour les relier l'un à l'autre de manière assemblée.

12. Dispositif selon l'une des revendications 1 à 11 précédentes, **caractérisé par** un dispositif d'évaluation (5) pour évaluer l'image d'évaluation capturée du au moins un ensemble de représentation, dans lequel le dispositif d'évaluation (5)
- est de préférence couplé au dispositif de représentation (2) par une technologie de transmission de signaux.

13. Procédé (100) pour produire des systèmes photoactifs (10) d'un système électro-optique et/ou opto-électronique, en particulier pour un système électro-optique de projection et/ou de représentation, dans lequel le système photoactif à produire comporte un seul ou plusieurs ensembles optiques et/ou un seul ou plusieurs ensembles photoactifs, **caractérisé par** les étapes consistant à :
- fournir (101) un dispositif (1) selon l'une des revendications 1 à 10 précédentes ; et
- fournir et agencer (102) deux ensembles photoactifs (11) ou plus dans le second dispositif de retenue (3b) ; et
- fournir et agencer (103) deux ensembles optiques (112) ou plus dans le premier dispositif de retenue (3b), et
- déplacer parallèlement et/ou faire pivoter le dispositif de représentation par rapport au premier et/ou second plan de retenue du premier et/ou second dispositif de retenue.

14. Procédé (100) selon la revendication 13 précédente, **caractérisé par** les étapes consistant à :
- ajuster (110) l'ensemble optique (12) par rapport à l'ensemble photoactif (11), dans lequel l'étape d'ajustement (110) comprend en particulier de :
∘ fournir (111) un faisceau électromagnétique pour la représentation d'une image d'évaluation dans le au moins un ensemble de représentation respectivement, et/ou
∘ représenter (112) l'image d'évaluation dans le au moins un ensemble de représentation (20) respectivement, et/ou
∘ capturer (113) l'image d'évaluation dans le au moins un ensemble de représentation (20) respectivement, et/ou
∘ évaluer (114) l'image d'évaluation respectivement capturée, et/ou
∘ régler (115) le premier dispositif de retenue (3a) avec l'ensemble optique (12) agencé dans celui-ci et/ou le second dispositif de retenue (3b) avec l'ensemble photoactif (11) agencé dans celui-ci en fonction de l'évaluation de l'image d'évaluation respectivement capturée ; et/ou
- monter (120) l'ensemble optique (12) ajusté par rapport à l'ensemble photoactif (11), dans lequel l'étape de montage (120) comprend en particulier de :
∘ relier (121), en particulier assembler, l'ensemble optique (12) à l'ensemble photoactif (11) ; et/ou
- tester (130) l'ensemble optique (12) monté par rapport à l'ensemble photoactif (11), dans lequel l'étape de test (130) comprend en particulier de :
∘ fournir (111) un faisceau électromagnétique pour la représentation d'une image d'évaluation dans le au moins un ensemble de représentation respectivement, et/ou
∘ représenter (112) l'image d'évaluation du système photoactif (10) ajusté et/ou monté, dans le au moins un ensemble de représentation (20) respectivement, et/ou
∘ capturer (113) l'image d'évaluation dans le au moins un ensemble de représentation (20) respectivement, et/ou
∘ évaluer (114) l'image d'évaluation respectivement capturée ; et/ou
- déplacer le dispositif de représentation (2) afin de produire successivement et/ou simultanément plusieurs systèmes photoactifs à produire les uns par rapport aux autres.

15. Procédé (100) selon l'une des revendications 13 à 14 précédentes, **caractérisé en ce que**
- la capture (113) de l'image d'évaluation dans le au moins un ensemble de représentation (20) comprend les étapes suivantes consistant à :
∘ agencer (113a) l'ensemble optique (12) par rapport au dispositif de représentation (2) et/ou à l'ensemble photoactif (11) de manière infinie ; et/ou
∘ agencer (113b) l'ensemble optique (12) par rapport au dispositif de représentation (2) et/ou à l'ensemble photoactif (11) dans une position de consigne et/ou une orientation de consigne ; et/ou
- l'évaluation (114) de l'image d'évaluation respectivement capturée comprend les étapes suivantes consistant à :
∘ déterminer une réponse en fréquence de l'image d'évaluation capturée ; et/ou
∘ apparier l'image d'évaluation capturée avec une image d'évaluation capturée d'un système photoactif déjà ajusté et/ou monté selon le procédé selon la revendication 14 ; dans lequel
▪ en particulier, les images d'évaluation sont capturées simultanément ou séquentiellement dans le au moins un ensemble de représentation (20) respectivement ; dans lequel
▪ en particulier, l'appariement des images d'évaluation capturées simultanément est basé sur une superposition physique dans le au moins un ensemble de représentation (20) respectivement ; et/ou
▪ en particulier, l'appariement des images d'évaluation capturées simultanément ou séquentiellement est basé sur une superposition virtuelle dans le au moins un ensemble de représentation (20) respectivement ; et/ou
∘ apparier l'image d'évaluation capturée et/ou la réponse en fréquence déterminée de l'image d'évaluation capturée avec un état cible souhaité ; et/ou
∘ générer un signal de commande pour déplacer le premier et/ou second dispositif de retenue en fonction
▪ de l'appariement de l'image d'évaluation capturée avec une image d'évaluation capturée d'un système photoactif déjà ajusté et/ou monté selon le procédé selon la revendication 14 et/ou de la réponse en fréquence déterminée et/ou d'un décalage déterminé ; et/ou
▪ de l'appariement de l'image d'évaluation capturée avec un état cible souhaité, tant que l'image d'évaluation capturée ne correspond pas à l'état cible souhaité ; et/ou
▪ de l'appariement de la réponse en fréquence déterminée de l'image d'évaluation capturée avec un état cible souhaité, tant que la réponse en fréquence de l'image d'évaluation capturée ne correspond pas à l'état cible souhaité.

16. Procédé (100) selon l'une des revendications 13 à 15 précédentes, **caractérisé en ce que** l'ensemble photoactif (11) du système photoactif (10) à produire est désactivé pendant l'ajustement (110) et/ou le montage (120) et/ou le test (130), dans lequel le système photoactif à produire n'est pas alimenté en énergie électrique pendant sa production.

17. Utilisation d'un dispositif (1) selon l'une des revendications 1 à 12 précédentes pour la production de systèmes photoactifs (10) d'un système électro-optique et/ou opto-électronique, en particulier pour un système électro-optique de projection et/ou de représentation, dans laquelle les systèmes photoactifs à produire comportent un seul ou plusieurs ensembles optiques et/ou un seul ou plusieurs ensembles photoactifs.
